# EUROPEAN PATENT APPLICATION

(11) **EP 2 981 050 A1**
(43) Date of publication of application: **03.02.2016**
(21) Application number: 15001627.7
(22) Date of filing: 01.06.2015
(51) Int. Cl.: H04M 1/02, G06F 1/16

(54) **PORTABLE ELECTRONIC DEVICE AND CONTROL METHOD THEREOF**

(30) Priority: 28.07.2014 KR 20140095985
(71) Applicant: LG Electronics Inc., Yeongdeungpo-gu Seoul 150-721 (KR)
(72) Inventor: KIM, Samsick, 137-893 Seoul (KR); YU, Donghwan, 137-893 Seoul (KR); LEE, Seojin, 137-893 Seoul (KR)
(74) Representative: Beyer, Andreas

(57) **Abstract**

A portable electronic device including a wireless communication unit configured to provide wireless communication; a flexible display unit including a first part; a second part rotatable based on a first boundary portion of the first part and configured to cover and not cover the first part, and a third part rotatable based on a second boundary portion of the first part and configured to cover and not cover the first part; and a controller configured to display information on the flexible display unit based the second and third parts covering or not covering the first part.

## Description

### BACKGROUND OF THE INVENTION

### 1. Field of the Invention

This specification relates to a portable electronic device, and more particularly, to a portable electronic device capable of bending or folding at least part of a display unit, and a control method thereof.

### 2. Background of the Invention

A portable electronic device includes all types of devices provided with a battery and a display unit and carried by a user. The devices are configured to output information to the flexible display unit using power supplied from the battery. The portable electronic device includes a device for recording and playing moving images, a device for displaying a graphic user interface (GUI), etc., which includes a notebook, a mobile phone, glasses, a watch, a game console, etc.

Such portable electronic device has become increasingly more functional. Examples of such functions include data and voice communications, capturing images and video via a camera, recording audio, playing music files via a speaker system, and displaying images and video on a display. Some portable electronic devices include additional functionality which supports game playing, while other portable electronic devices are configured as multimedia players. More recently, portable electronic devices have been configured to receive broadcast and multicast signals which permit viewing of content such as videos and television programs.

Such portable electronic device is being evolved to have various designs. In order to satisfy a user's needs for more novel and various designs, efforts are ongoing to develop the portable electronic device of a newer type. The newer type includes structural changes and improvements to use the portable electronic device more conveniently. One of such structural changes and improvements is a portable electronic device including at least part of a display unit that can be bent or folded.

In such portable electronic device, a user-friendly interface using such bending characteristic is needed.

### SUMMARY OF THE INVENTION

Therefore, an aspect of the detailed description is to provide a portable electronic device having a novel type of body, by using characteristics of a display unit which is bendable or foldable.

More specifically, an aspect of the detailed description is to provide a portable electronic device configured such that different parts of a display unit are foldable on each other as the flexible display unit which forms a single planar surface is bent.

Another aspect of the detailed description is to provide a portable electronic device and a control method thereof for executing different functions or displaying different execution screens, based on a state conversion of a display unit, by using characteristics of the bendable of foldable flexible display unit.

To achieve these and other advantages and in accordance with the purpose of this specification, as embodied and broadly described herein, there is provided a portable electronic device, comprising: a display unit formed to be flexible such that at least part thereof is foldable; and a controller configured to control information output to the flexible display unit, wherein the flexible display unit includes: a first part; a second part formed to be rotatable based on one boundary portion of the first part, so as to be in one of a state to cover the first part and a state not to cover the first part; and a third part formed to be rotatable based on another boundary portion of the first part, so as to be in one of a state to cover the first part and a state not to cover the first part, wherein the controller controls information output to the flexible display unit, based on a state conversion of the second and third parts.

In an embodiment, wherein when a closed state where the second and third parts cover the first part is converted into a first open state where the second part does not cover the first part, the controller is further configured to display a first execution screen on the flexible display unit, and wherein when the closed state is converted into a second open state where the third part does not cover the first part, the controller is further configured to display a second execution screen different from the first execution screen on the flexible display unit.

In an embodiment, wherein the controller is further configured to display the first execution screen on the second part with a portion of the first part covered by the second part, and wherein the controller is further configured to display the second execution screen on the third part with a portion of the first part covered by the third part.

In an embodiment, wherein the first execution screen includes one or more graphic objects formed to be executable in a locked state, and wherein the second execution screen is a lock screen configured to receive a password for releasing the locked state.

In an embodiment, wherein when the closed state is converted into a third open state where the second and third parts do not cover the first part, the controller is further configured to display a lock screen or a home screen on the flexible display unit, the lock screen configured to receive a password for releasing a locked state.

In an embodiment, wherein when the first open state or the second open state is converted into the third open state, the controller is further configured to display the first and second execution screens on different regions of the flexible display unit.

In an embodiment, wherein when one of the second and third parts covers the first part and another thereof does not cover the first part, the controller is further configured to display first screen information on the flexible display unit, and wherein when the state where the first screen information has been displayed is converted into when said one part does not cover the first part, the controller is further configured to display second screen information including information related to the first screen information on the flexible display unit.

In an embodiment, wherein when the first screen information is changed based on a user's touch input applied to a region where the first screen information has been displayed, the controller is further configured to change the second screen information such that information corresponding to the changed first screen information is displayed.

In an embodiment, wherein when a drag input is applied to the flexible display unit from said one part to said another part, the controller is further configured to terminate the display of the first and second screen information, and display screen information which has been displayed on said one part on an entire region of the flexible display unit.

In an embodiment, wherein the different regions, on which the first and second screen information are displayed, are variable according to an amount of information related to the first screen information.

In an embodiment, wherein the controller is further configured to display first screen information on said another part with a portion of the first part covered by said another part, and wherein the controller is further configured to display second screen information on said one part with a portion of the first part covered by said one part.

In an embodiment, the portable electronic device further comprising: a body having one surface and another surface where the flexible display unit is disposed; a fixing member disposed at the body, and configured to fix the second and third parts such that a closed state where the second and third parts cover the first part is maintained; and a touch sensor disposed on at least one of one side and another side of said another surface, and configured to sense a touch input applied thereto, wherein when the touch input applied to the touch sensor is maintained for a predetermined time, the controller is further configured to control the fixing member based on the touch input such that at least one of the second and third parts is not fixed.

In an embodiment, the portable electronic device further comprising: a fingerprint scanner disposed to be overlapped with the touch sensor, and configured to recognize a fingerprint of a finger contacting thereto, wherein when a fingerprint of a finger which has applied a touch input to the touch sensor is recognized as a user's pre-stored fingerprint by the fingerprint scanner, the controller (180) is further configured to control the fixing member such that at least one of the second and third parts is not fixed.

In an embodiment, wherein the controller is further configured to sense a plurality of touch inputs applied to the touch sensor in a closed state, and wherein when the sensed touch inputs match a preset pattern, the controller is further configured to control the fixing member such that at least one of the second and third parts is not fixed.

In an embodiment, the portable electronic device further comprising: a body having one surface and another surface where the flexible display unit is disposed; and a camera disposed on said another surface, wherein when a closed state where the second and third parts cover the first part is converted into when one of the second and third parts does not cover the first part, the controller is further configured to activate the camera, and display a preview screen captured by the camera on the flexible display unit.

In an embodiment, wherein when the state where the preview screen has been displayed is converted into when another of the second and third parts does not cover the first part, the controller is further configured to display screen information and the preview screen on different regions of the flexible display unit, the screen information including a plurality of thumbnail images corresponding to visual data stored in a memory.

In an embodiment, wherein when a closed state where the second and third parts cover the first part is converted into when one of the second and third parts does not cover the first part, the controller is further configured to display screen information corresponding to said one part on the flexible display unit, and wherein when the state where one of the second and third parts does not cover the first part but another thereof covers the first part is converted into when said another part does not cover the first part, the controller is further configured to display the screen information displayed on said one part and a portion of the first part covered by said one part on an entire region of the flexible display unit.

In an embodiment, wherein the controller is further configured to display information on the flexible display unit when the second part does not cover the first part, to be different from information displayed on the flexible display unit when the third part does not cover the first part.

In an embodiment, wherein the first part, the second part and the third part are configured to form a single planar surface.

In an embodiment, wherein the first and second boundary portions are symmetrical or asymmetrical with each other.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
- FIG. 1: is a block diagram of a portable electronic device according to an embodiment of the present invention;
- FIGS. 2A and 2B: are conceptual views illustrating an example of a portable electronic device according to an embodiment of the present invention, which are viewed from different directions;
- FIGS. 3A: is a front perspective view of a portable electronic device according to an embodiment of the present invention, which illustrates that a display unit forms a single planar surface;
- FIGS. 3B to 3D: are front perspective views of the portable electronic device of FIG. 3A, which illustrate various examples of bending the flexible display unit;
- FIGS. 4A to 4C: are views illustrating embodiments where different bending areas are formed in a portable electronic device according to an embodiment of the present invention;
- FIGS. 5A, 5B and 6: are views illustrating a modification example of the portable electronic device of FIG. 3A;
- FIG. 7: is a view illustrating a method for fixing a bent state or releasing a fixed state in a portable electronic device according to an embodiment of the present invention;
- FIG. 8: is a flowchart illustrating a method for controlling a portable electronic device according to an embodiment of the present invention;
- FIGS. 9A to 9I: are conceptual views illustrating the control method of FIG. 8;
- FIG. 10: is a flowchart illustrating a method for controlling output information according to a state conversion of a display unit, when screen information has been displayed on the flexible display unit of a portable electronic device according to an embodiment of the present invention;
- FIGS. 11A and 11B: are conceptual views illustrating the control method of FIG. 10;
- FIG. 12: is a conceptual view illustrating a method for changing displayed information in a portable electronic device according to an embodiment of the present invention;
- FIGS. 13A and 13B: are conceptual views illustrating a method for changing a type of screen information to be output according to a touch input, in a portable electronic device according to an embodiment of the present invention;
- FIGS. 14A to 14C: are conceptual views illustrating an embodiment to display a preview screen when a closed state is converted into a second open state;
- FIGS. 15A to 15D: are conceptual views illustrating an embodiment to display a preview screen when a closed state is converted into a first open state;
- FIGS. 16A and 16B: are conceptual views illustrating an embodiment to display different screen information when one of a first open state and a second open state is converted into a third open state;
- FIGS. 16C to 16E: are conceptual views illustrating the embodiment of FIGS. 16A and 16B in more detail;
- FIGS. 17A to 17E: are conceptual views illustrating an embodiment to display different screen information, when at least part of a display unit is bent to be restored to the original state;
- FIGS. 18A to 18D: are conceptual views illustrating an embodiment where an execution mode is changed according to an unfolding type of one or more bent parts of a display unit;
- FIG. 19: is a conceptual view illustrating an example of a portable electronic device which receives a release command from the user for releasing a bent state of a display unit;
- FIG. 20: is a conceptual view illustrating an example of a portable electronic device configured to control an external terminal when a user authentication has succeeded;
- FIG. 21: is a conceptual view illustrating a method for releasing a locked state, in response to a plurality of touch inputs applied to a rear surface of a body in a preset pattern;
- FIGS. 22A to 22C: are conceptual views illustrating a method for controlling output information according to a state conversion of a display unit, when a locked state is released by a plurality of touch inputs;
- FIGS. 23A to 23C: are conceptual views illustrating a method for controlling output information according to a sensed region of a plurality of touch inputs, when a locked state is released by the plurality of touch inputs;
- FIGS. 24 and 25: are conceptual views illustrating an embodiment where a region to display screen information is changed according to a state conversion of a display unit;
- FIG. 26: is a conceptual view illustrating a method for informing occurrence of an event using a notification display portion in a closed state; and
- FIG. 27: is a conceptual view illustrating a method for executing a specific function, based on a user input applied to a notification display portion.

### DETAILED DESCRIPTION OF THE INVENTION

Description will now be given in detail according to embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and it should be understood that the embodiments presented herein are not limited by the accompanying drawings. As such, the present invention should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present. A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A portable electronic device in the present description may include a portable phone, a smart phone, a notebook computer, a digital broadcasting terminal, Personal Digital Assistants (PDA), Portable Multimedia Player (PMP), a navigation system, a slate PC, a tablet PC, an ultra book, a wearable device (e.g., smart watch), a glass-type terminal (e.g., smart glass), a head mounted display (HMD), etc. However, the present invention may be also applicable to a fixed terminal such as a digital TV, a desktop computer and a digital signage, except for specific configurations for mobility.

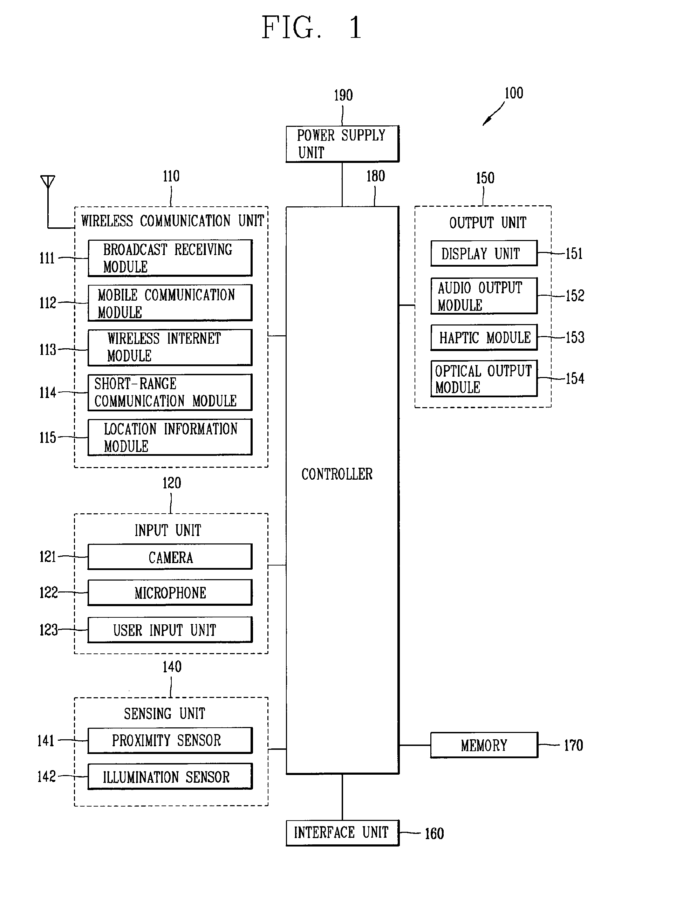

FIG. 1 is a block diagram of a portable electronic device according to an embodiment of the present invention. The portable electronic device 100 is shown having components such as a wireless communication unit 110, an input unit 120, an electromagnetic wave generation unit 130, a sensing unit 140, an output unit 150, an interface unit 160, a memory 170, a controller 180, and a power supply unit 190. Implementing all of the illustrated components of FIG. 1 is not a requirement, and greater or fewer components may alternatively be implemented.

The wireless communication unit 110 typically includes one or more modules which permit communications such as wireless communications between the portable electronic device 100 and a wireless communication system, communications between the portable electronic device 100 and another portable electronic device, communications between the portable electronic device 100 and an external server. Further, the wireless communication unit 110 typically includes one or more modules which connect the portable electronic device 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The electromagnetic wave generation unit 130 generates electromagnetic waves having a linear characteristic, as a trigger signal for controlling an external device positioned at a short distance. More specifically, the electromagnetic wave generation unit 130 generates electromagnetic waves having a specific frequency, under control of the controller 180. That is, electromagnetic waves generated by the electromagnetic wave generation unit 130 may have various frequencies under control of the controller 180. The electromagnetic waves may include various data for controlling an external device. More specifically, the electromagnetic waves may include a request message requesting information related to an external device, or an identifier for security.

The sensing unit 140 is typically implemented using one or more sensors configured to sense internal information of the portable electronic device, the surrounding environment of the portable electronic device, user information, and the like. For example, in FIG. 1, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The portable electronic device 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a flexible display unit 151, an audio output module 152, a haptic module 153, and an optical output module 154.

The flexible display unit 151 may have an inter-layered structure or an integrated structure with a touch sensor in order to facilitate a touch screen. The touch screen may provide an output interface between the portable electronic device 100 and a user, as well as function as the user input unit 123 which provides an input interface between the portable electronic device 100 and the user. The flexible display unit 151 is generally configured to output information processed in the portable electronic device 100. For example, the flexible display unit 151 may display execution screen information of an application program executing at the portable electronic device 100 or user interface (UI) and graphic user interface (GUI) information in response to the execution screen information.

The flexible display unit 151 outputs information processed in the portable electronic device 100. The flexible display unit 151 may be implemented using one or more suitable mobile terminals. Examples of such suitable mobile terminals include a liquid crystal display (LCD), a thin film transistor-liquid crystal display (TFT-LCD), an organic light emitting diode (OLED), a flexible display, a 3-dimensional (3D) display, an e-ink display, and combinations thereof.

The flexible display unit 151 may be implemented using two mobile terminals, which can implement the same or different display technology. For instance, a plurality of the flexible display units 151 may be arranged on one side, either spaced apart from each other, or these devices may be integrated, or these devices may be arranged on different surfaces.

The flexible display unit 151 may also include a touch sensor which senses a touch input received at the flexible display unit 151. When a touch is input to the flexible display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display. The flexible display unit 151 may also form a touch screen together with the touch sensor. Here, the touch screen may serve as the user input unit 123 (see FIG. 1). Therefore, the touch screen may replace at least some of the functions of the first manipulation unit 123a.

The interface unit 160 serves as an interface with various types of external devices that can be coupled to the portable electronic device 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the portable electronic device 100 may perform assorted control functions associated with a connected external device, in response to the external device being connected to the interface unit 160.

The memory 170 is typically implemented to store data to support various functions or features of the portable electronic device 100. For instance, the memory 170 may be configured to store application programs executed in the portable electronic device 100, data or instructions for operations of the portable electronic device 100, and the like. Some of these application programs may be downloaded from an external server via wireless communication. Other application programs may be installed within the portable electronic device 100 at time of manufacturing or shipping, which is typically the case for basic functions of the portable electronic device 100 (for example, receiving a call, placing a call, receiving a message, sending a message, and the like). It is common for application programs to be stored in the memory 170, installed in the portable electronic device 100, and executed by the controller 180 to perform an operation (or function) for the portable electronic device 100.

The controller 180 typically functions to control overall operation of the portable electronic device 100, in addition to the operations associated with the application programs. The controller 180 can provide or process information or functions appropriate for a user by processing signals, data, information and the like, which are input or output by the various components depicted in FIG. 1, or activating application programs stored in the memory 170. As one example, the controller 180 controls some or all of the components illustrated in FIG. 1 according to the execution of an application program that have been stored in the memory 170.

The power supply unit 190 can be configured to receive external power or provide internal power in order to supply appropriate power required for operating elements and components included in the portable electronic device 100. The power supply unit 190 may include a battery, and the battery may be configured to be embedded in the body of the portable electronic device, or configured to be detachable from the body of the portable electronic device.

At least some of the above components may operate in a cooperating manner, so as to implement an operation or a control method of a glass type terminal according to various embodiments to be explained later. The operation or the control method of the glass type terminal may be implemented on the glass type terminal by driving at least one application program stored in the memory 170.

Referring still to FIG. 1, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages. The wireless Internet module 113 is configured to facilitate wireless Internet access. This module may be internally or externally coupled to the portable electronic device 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the portable electronic device 100 and a wireless communication system, communications between the portable electronic device 100 and another portable electronic device 100, or communications between the portable electronic device and a network where another portable electronic device 100 (or an external server) is located, via wireless area networks. One example of the wireless area networks is a wireless personal area networks.

In some embodiments, another portable electronic device (which may be configured similarly to portable electronic device 100) may be a wearable device, for example, a smart watch, a smart glass or a head mounted display (HMD), which can exchange data with the portable electronic device 100 (or otherwise cooperate with the portable electronic device 100). The short-range communication module 114 may sense or recognize the wearable device, and permit communication between the wearable device and the portable electronic device 100.

In addition, when the sensed wearable device is a device which is authenticated to communicate with the portable electronic device 100, the controller 180, for example, may cause transmission of data processed in the portable electronic device 100 to the wearable device via the short-range communication module 114. Hence, a user of the wearable device may use the data processed in the portable electronic device 100 on the wearable device. For example, when a call is received in the portable electronic device 100, the user may answer the call using the wearable device. Also, when a message is received in the portable electronic device 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the portable electronic device uses a GPS module, a position of the portable electronic device may be acquired using a signal sent from a GPS satellite. As another example, when the portable electronic device uses the Wi-Fi module, a position of the portable electronic device can be acquired based on information related to a wireless access point (AP) which transmits or receives a wireless signal to or from the Wi-Fi module.

The input unit 120 may be configured to permit various types of input to the portable electronic device 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the flexible display unit 151 or stored in memory 170. In some cases, the cameras 121 may be arranged in a matrix configuration to permit a plurality of images having various angles or focal points to be input to the portable electronic device 100. As another example, the cameras 121 may be located in a stereoscopic arrangement to acquire left and right images for implementing a stereoscopic image.

The microphone 122 is generally implemented to permit audio input to the portable electronic device 100. The audio input can be processed in various manners according to a function being executed in the portable electronic device 100. If desired, the microphone 122 may include assorted noise removing algorithms to remove unwanted noise generated in the course of receiving the external audio.

The user input unit 123 is a component that permits input by a user. Such user input may enable the controller 180 to control operation of the portable electronic device 100. The user input unit 123 may include one or more of a mechanical input element (for example, a key, a button located on a front and/or rear surface or a side surface of the portable electronic device 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the portable electronic device at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the portable electronic device, surrounding environment information of the portable electronic device, user information, or the like. The controller 180 generally cooperates with the sending unit 140 to control operation of the portable electronic device 100 or execute data processing, a function or an operation associated with an application program installed in the portable electronic device based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the portable electronic device covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the portable electronic device 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the flexible display unit 151, or convert capacitance occurring at a specific part of the flexible display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the flexible display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the portable electronic device 100 or a currently executed application program, for example.

The touch sensor may be configured to sense a touch input using a different method, in an activated or deactivated state of the flexible display unit 151. The different method may be related to an activation period of the touch sensor. More specifically, the touch sensor may be activated at a different period according to whether the flexible display unit 151 has been activated or not. That is, the touch sensor may have a different activation period according to whether the flexible display unit 151 has been activated or not, and may sense a touch input applied thereto.

For instance, in a deactivated state of the flexible display unit 151, the touch sensor may be activated with a preset period. In this instance, the preset period may be a time period more than 0. Further, in an activated state of the flexible display unit 151, the touch sensor may be always operated in an activated state. In this instance, an activation period of the touch sensor may be '0' or a value very close to '0'.

Whether the touch sensor is in an activated state or a deactivated state may be determined based on a power consumption amount of the touch sensor. For instance, if a power consumption amount of the touch sensor is equal to or less than a preset value based on '0', it may be determined that the touch sensor is in a deactivated state. Further, if a power consumption amount of the touch sensor exceeds the preset value based on '0', it may be determined that the touch sensor is in an activated state.

If the flexible display unit 151 is in an activated state (hereinafter, will be referred to as an active mode), the touch sensor may wait for input of taps onto the flexible display unit 151, while maintaining an activated state. Further, if the flexible display unit 151 is in a deactivated state (hereinafter, will be referred to as a doze mode), the touch sensor may be activated at preset periods.

When the preset period of the touch sensor is shorter, a sensing speed with respect to taps applied onto the flexible display unit 151 is higher. However, in this instance, a power consumption amount of the touch sensor may be increased. Further, when the preset period of the touch sensor is longer, a sensing speed with respect to taps applied onto the flexible display unit 151 may be lower, while a power consumption amount of the touch sensor is decreased.

Thus, the preset period may be set so that a sensing speed with respect to taps applied onto the flexible display unit 151 is high enough not to be recognized by a user, and so that power consumption can be reduced. For instance, the preset period may be set so that the touch sensor in a deactivated state can be activated about 20 times (1Hz) per second.

While the flexible display unit 151 is in an activated state, the touch sensor may be also in an activated state. In an activated state, the touch sensor may have an activation period (T) of '0' or a value very close to '0'. Alternatively, in an activated state, the touch sensor may have an activation period (T) much shorter than that set in a deactivated state of the flexible display unit 151, by several times. That is, the touch sensor may be activated with a different period, according to whether the flexible display unit 151 is in an activated state or a deactivated state.

In a doze mode where the flexible display unit 151 is in a deactivated state and the touch sensor is periodically activated, if a preset touch input (e.g., a first touch input and a second touch input consecutively knocking-on a predetermined region within a predetermined time) is sensed by the touch sensor, the controller 180 can convert the doze mode into an activate mode where the flexible display unit and the touch sensor are activated.

The touch sensor may be driven at a different period based on a state of the flexible display unit 151. For instance, when the flexible display unit 151 is in a closed state, a doze mode may be executed. Further, when a closed state is converted into an open state, an active mode may be executed. The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor 142 and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the mobile terminal. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The camera 121 is provided with at least one of a first camera 121a formed on a front surface of the body, and a second camera 121b formed on a rear surface of the body. The first camera 121a is configured to process an image frame of still images or moving images acquired by an image sensor in a capturing mode or a video call mode. The processed image frame may be displayed on the flexible display unit 151, and may be stored in the memory 170.

The second camera 121b may include a plurality of lenses arranged along at least one line. Such lenses may be arranged in the form of matrices. Such camera may be referred to as an 'array camera'. If the second camera 121b is configured as an array camera, images can be captured in various manners by using a plurality of lenses, and images of better quality can be obtained. A flash may be additionally disposed close to the second camera 121b. The flash illuminates light toward an object when capturing the object with the second camera 121b.

The electromagnetic wave generation unit 130 may be disposed close to the second camera 121b. When the second camera 121b is activated, the electromagnetic wave generation unit emits generated electromagnetic waves. The flexible display unit 151 is generally configured to output information processed in the portable electronic device 100. For example, the flexible display unit 151 may display execution screen information of an application program executing at the portable electronic device 100 or user interface (UI) and graphic user interface (GUI) information in response to the execution screen information.

In some embodiments, the flexible display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the portable electronic device 100. The audio output module 152 may also be implemented as a receiver, a speaker, a buzzer, or the like.

The audio output module 152 includes at least one of a first audio output module and a second audio output module. The first audio output module may be implemented in the form of a receiver, and the second audio output module may be implemented in the form of a loud speaker to output voice audio, alarm sounds, multimedia audio reproduction, and the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the portable electronic device 100.

An optical output module 154 can output a signal for indicating an event generation using light of a light source. Examples of events generated in the portable electronic device 100 may include success or failure of a user authentication, message reception, call signal reception, a missed call, an alarm, a schedule notice, an email reception, information reception through an application, and the like. Upon detection of a user's event check, the controller 180 can control the optical output unit 154 so that output of light can be terminated.

A signal output by the optical output module 154 may be implemented so the portable electronic device emits monochromatic light or light with a plurality of colors. The signal output may be terminated as the portable electronic device senses that a user has checked the generated event, for example.

The interface unit 160 serves as an interface for external devices to be connected with the portable electronic device 100. For example, the interface unit 160 can receive data transmitted from an external device, receive power to transfer to elements and components within the portable electronic device 100, or transmit internal data of the portable electronic device 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the portable electronic device 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the portable electronic device 100 is connected with an external cradle, the interface unit 160 can serve as a passage to allow power from the cradle to be supplied to the portable electronic device 100 or may serve as a passage to allow various command signals input by the user from the cradle to be transferred to the portable electronic device there through. Various command signals or power input from the cradle may operate as signals for recognizing that the portable electronic device is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The portable electronic device 100 may also be operated in relation to a network storage device that performs the storage function of the memory 170 over a network, such as the Internet.

The controller 180 can typically control the general operations of the portable electronic device 100. For example, the controller 180 can set or release a lock state for restricting a user from inputting a control command with respect to applications when a status of the portable electronic device meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various embodiments disclosed herein.

The power supply unit 190 receives external power or provide internal power and supply the appropriate power required for operating respective elements and components included in the portable electronic device 100. The power supply unit 190 may include a battery, which is typically rechargeable or be detachably coupled to the body of the portable electronic device for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

An accessory for protecting an appearance or assisting or extending the functions of the portable electronic device 100 can also be provided on the portable electronic device 100. As one example of an accessory, a cover or pouch for covering or accommodating at least one surface of the portable electronic device 100 may be provided. The cover or pouch may cooperate with the flexible display unit 151 to extend the function of the portable electronic device 100. Another example of the accessory is a touch pen for assisting or extending a touch input to a touch screen. Various embodiments described herein may be implemented in a computer-readable medium, a machine-readable medium, or similar medium using, for example, software, hardware, or any combination thereof.

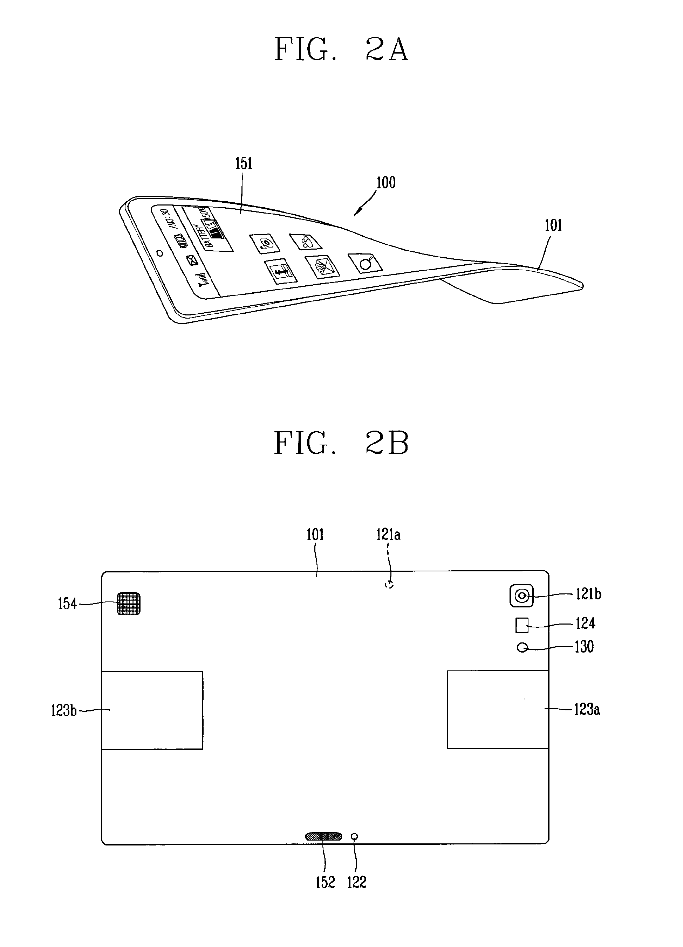

Referring now to FIGS. 2A and 2B, the portable electronic device 100 is described with reference to a bar-type the body of the portable electronic device. However, the portable electronic device 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of portable electronic device (for example, bar-type, watch-type, glasses-type, and the like). However, such teachings with regard to a particular type of portable electronic device will generally apply to other types of mobile terminals as well.

The body of the portable electronic device may be understood to indicate the portable electronic device 100 by regarding the portable electronic device 100 as at least one assembly. The portable electronic device 100 will generally include a case (for example, frame, housing, cover, and the like) forming the appearance of the terminal. In this embodiment, the case is formed using a front case 101 and a rear case. Various electronic components are incorporated into a space formed between the front case 101 and the rear case. At least one middle case may be additionally positioned between the front case 101 and the rear case.

The case 101 may be configured to be transformable together with the flexible display unit 151 by an external force, taking into account characteristics of the flexible display unit 151. That is, the flexible display unit 151 is formed to be bendable or foldable together with the case 101. For instance, the case 101 may be formed of a transformable material such as plastic, thin glass, fiber, thin metal (e.g., aluminum, etc.), textile and silicon, or a combination thereof.

The case 101 may be partially formed of a dielectric material or a low conductive material, and at least part of a structure of the case 101 may be formed of metal. The flexible display unit 151 may be disposed on a front surface of the body of the portable electronic device to output information. As shown, the flexible display unit 151 may be mounted to the case 101 to form the front surface of the body.

In some embodiments, electronic components may also be mounted to the rear case. Examples of such electronic components include a detachable battery , an identification module, a memory card, and the like. A rear cover is shown covering the electronic components, and this cover may be detachably coupled to the rear case. Therefore, when the rear cover is detached from the rear case 102, the electronic components mounted to the rear case 102 are externally exposed. In some embodiments, the rear cover may include an opening for externally exposing a camera 121 or an audio output unit 152.

As an alternative to the example in which the plurality of cases form an inner space for accommodating components, the portable electronic device 100 may be configured such that one case forms the inner space. In this example, a portable electronic device 100 having a uni-body is formed so synthetic resin or metal extends from a side surface to a rear surface.

If desired, the portable electronic device 100 may include a waterproofing unit for preventing introduction of water into the body of the portable electronic device. For example, the waterproofing unit may include a waterproofing member which is located between a window and the front case 101, between the front case 101 and the rear case, or between the rear case and the rear cover, to hermetically seal an inner space when those cases are coupled. The flexible display unit 151, the audio output unit 152, the optical output unit 154, the camera 121, the microphone 122, etc. may be provided at the portable electronic device 100.

As shown in FIGS. 2A and 2B, the flexible display unit 151 is arranged on a front surface of the body of the portable electronic device 100, and the camera 121, the audio output unit 152, the microphone 122, the rear input units 123a and 123b, and the optical output unit 154 are arranged on a rear surface of the body of the portable electronic device 100. However, alternative arrangements are possible and within the teachings of the instant invention. Some components may be omitted or rearranged.

As shown in FIG. 2A, the flexible display unit 151 may be arranged on a front surface of the portable electronic device 100. The flexible display unit 151 is configured to output information processed in the portable electronic device 100. For instance, the flexible display unit 151 may display execution screen information of an application program executing at the portable electronic device 100 or user interface (UI) and graphic user interface (GUI) information in response to the execution screen information.

The flexible display unit 151 is configured to be deformable by an external force. This deformation may include any of curving, bending, folding, twisting, rolling, and combinations thereof. The deformable display unit 151 may also be referred to as a 'flexible display unit' or 'bendable display unit'. In some implementations, the flexible display unit 151 may include a general flexible display, electronic paper (also known as e-paper), and combinations thereof. That is, the flexible display unit 151 means a display unit of which at least part is foldable in a flexible manner.

The flexible display is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 151 is not deformed (for example, in a state with an infinite radius of curvature and referred to as a first state), a display region of the flexible display unit 151 includes a generally flat surface. When the flexible display unit 151 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 151 may be a curved state (for example, a state of being curved from up to down or from right to left), instead of being in flat state. In this embodiment, when an external force is applied to the flexible display unit 151, the flexible display unit 151 may transition to the second state such that the flexible display unit is deformed into the flat state(or a less curved state) or into a more curved state.

The flexible display unit 151 may be formed of material of a plurality of layers. If desired, the flexible display unit 151 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states. The touch sensor may be arranged on a substrate of the display, or may be provided in the display.

The flexible display unit 151 may form a touch screen together with a touch sensor. In this instance, the touch screen may serve as the user input unit 123. A cause to generate a state conversion of the flexible display unit 151 is not limited to an external force. For instance, when the flexible display unit 151 is in a first state, the flexible display unit 151 may be deformed to a second state by a user's command or application command. More specifically, the portable electronic device 100 may include a driving unit. If the current condition corresponds to a preset condition, the first state may be changed into the second state by the driving unit, not by an external force.

One option is to configure the portable electronic device 100 according to an embodiment of the present invention to include a deformation sensor which senses the deforming of the flexible display unit 151. The deformation sensor may be included in the sensing unit 140.

The deformation sensor may be located in the flexible display unit 151 or the case 101 to sense information related to the deforming of the flexible display unit 151. Examples of such information related to the deforming of the flexible display unit 151 may be a deformed direction, a deformed degree, a deformed position, a deformed amount of time, an acceleration that the deformed flexible display unit 151 is restored, and the like. Alternatively, such information may include various information sensible by bending of the flexible display unit 151.

In some embodiments, the controller 180 or other component can change information displayed on the flexible display unit 151, or generate a control signal for controlling a function of the portable electronic device 100, based on the information related to the deforming of the flexible display unit 151. Such information is typically sensed by the deformation sensor.

For instance, if the flexible display unit 151 is bent in correspondence to an external force, the controller 180 can rearrange, separate, synthesize or change a curvature of a screen image which has been displayed on the flexible display unit 151, according to a bent direction of the flexible display unit, a bent degree, and a restoration acceleration. More specifically, if the flexible display unit 151 is inward bent by an external force, the controller 180 can control screen images displayed on the flexible display unit, to be adjacent to each other. Further, if the flexible display unit 151 is outward bent by an external force, the controller 180 can control screen images displayed on the flexible display unit, to be distant from each other. The portable electronic device 100 is shown having a case 101 for accommodating the flexible display unit 151.

As shown in FIG. 2B, as another example of the user input unit 123, one rear input unit or a plurality of rear input units 123a and 123b may be located on the rear surface of the case 101 of the portable electronic device. The rear input units 123a and 123b can be manipulated by a user to provide input to the portable electronic device 100. The input may be used in a variety of different ways. For example, the rear input unit may be used by the user to provide an input for power on/off, start, end, scroll, control volume level being output from the audio output unit 152, switch to a touch recognition mode of the flexible display unit 151, and the like. The rear input unit may be configured to permit a touch input, a push input, or combinations thereof.

The rear input units 123a and 123b may be located to overlap the flexible display unit 151 of the front side in a thickness direction of the body of the portable electronic device. As one example, the rear input units 123a and 123b may be located on a rear surface of the portable electronic device 100 in a flat state of the case 101. However, when the case 101 is bent so that a left end and a right end thereof can face each other, the rear input units 123a and 123b may be located on a front surface of the portable electronic device 100. However, the present invention is not limited to this. That is, a position and the number of the rear input units may be variable.

As a further alternative, the portable electronic device 100 may include a finger scan sensor which scans a user's fingerprint. The controller 180 can then use fingerprint information sensed by the finger scan sensor as part of an authentication procedure. The finger scan sensor may also be installed in the flexible display unit 151 or implemented in the user input units 123a and 123b. The microphone 122 is shown located at an end of the portable electronic device 100, but other locations are possible. If desired, multiple microphones may be implemented, with such an arrangement permitting the receiving of stereo sounds.

The second camera 121b is shown located at the rear side of the body of the portable electronic device. When the first camera 121a is arranged on a front surface of the body, the second camera 121b has an image capturing direction that is substantially opposite to the image capturing direction of the first camera unit 121a.

The first camera 121a may be arranged at an opening formed at part of the flexible display unit 151. Alternatively, the first camera 121a may be arranged at an opening formed at part of the case disposed on a front surface. The second camera 121b is configured to process an image frame of still images or moving images acquired by an image sensor in a capturing mode or a video call mode. The processed image frame may be displayed on the flexible display unit 151, and may be stored in the memory 170.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities. A flash 124 is shown adjacent to the second camera 121b. When an image of a subject is captured with the second camera 121b, the flash 124 may illuminate the subject.

An electromagnetic wave generation unit 130 may be disposed close to the second camera 121b. When the second camera 121b is activated, the electromagnetic wave generation unit 130 emits generated electromagnetic waves. At least one antenna for wireless communication may be located on the body of the portable electronic device. The antenna may be installed in the body of the portable electronic device or formed by the case. For example, an antenna which configures a part of the broadcast receiving module 111 may be retractable into the body of the portable electronic device. Alternatively, an antenna may be formed using a film attached to an inner surface of the rear cover, or a case that includes a conductive material.

A battery located in the portable electronic device 100 may also be deformable in cooperation with the flexible display unit 151, taking into account the characteristic of the flexible display unit 151. One technique to implement such a battery is to use a stack and folding method of stacking battery cells.

Further, the interface unit 160 may be disposed on a side surface of the body of the portable electronic device. The interface unit 160 may serve as a path allowing the portable electronic device 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the portable electronic device 100. The interface unit 160 may be implemented in the form of a socket for accommodating an external card, such as Subscriber Identification Module (SIM), User Identity Module (UIM), or a memory card for information storage.

A battery may receive power via a power source cable connected to the interface unit 160. Also, the battery can be recharged in a wireless manner using a wireless charger. Wireless charging may be implemented by magnetic induction or electromagnetic resonance.

In the portable electronic device 100 according to an embodiment of the present invention, which can include at least one of the above components, the controller 180 can determine a state of the flexible display unit 151 in correspondence to bending of the flexible display unit 151. Further, the controller 180 can sense a state conversion of the flexible display unit 151. Based on the state conversion of the flexible display unit 151, the controller 180 can control information output to the flexible display unit 151. Thus, information output to the flexible display unit is determined by a state of the flexible display unit 151.

Hereinafter, a structure of the flexible display unit 151, and a method for controlling information displayed on the flexible display unit 151 according to a bent state of the flexible display unit 151 will be explained in more detail with reference to the attached drawings. Firstly, the structure of the flexible display unit 151 of a portable electronic device according to an embodiment of the present invention will be explained.

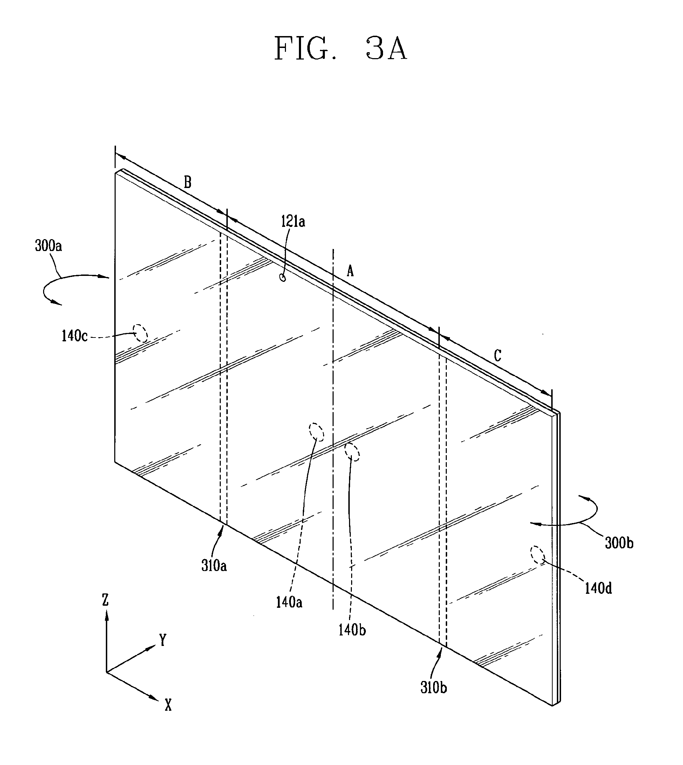

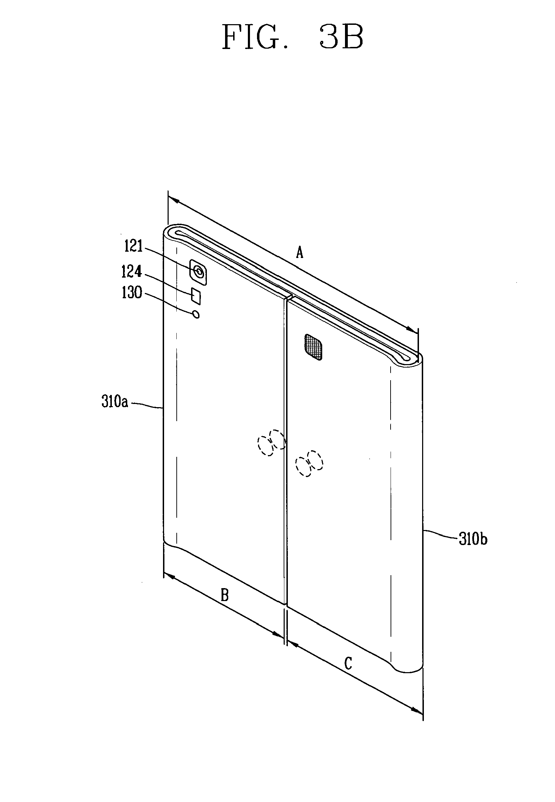

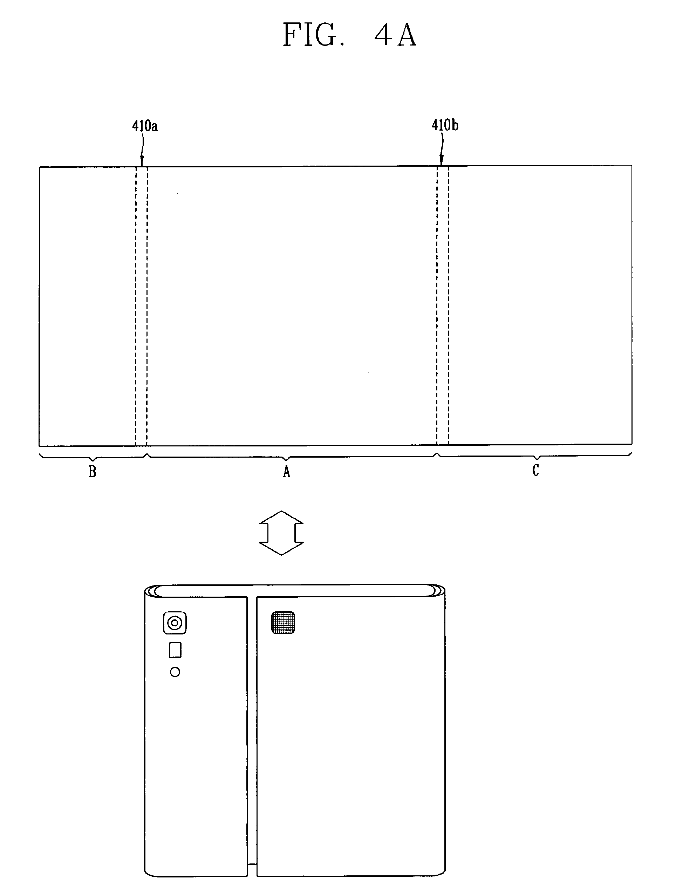

FIG. 3A is a front perspective view of a portable electronic device according to an embodiment of the present invention, which illustrates that a display unit forms a single planar surface. FIGS. 3B to 3D are front perspective views of the portable electronic device of FIG. 3A, which illustrate various examples to bend the flexible display unit. FIGS. 4A to 4C are views illustrating embodiments where different bending areas are formed in a portable electronic device according to an embodiment of the present invention.

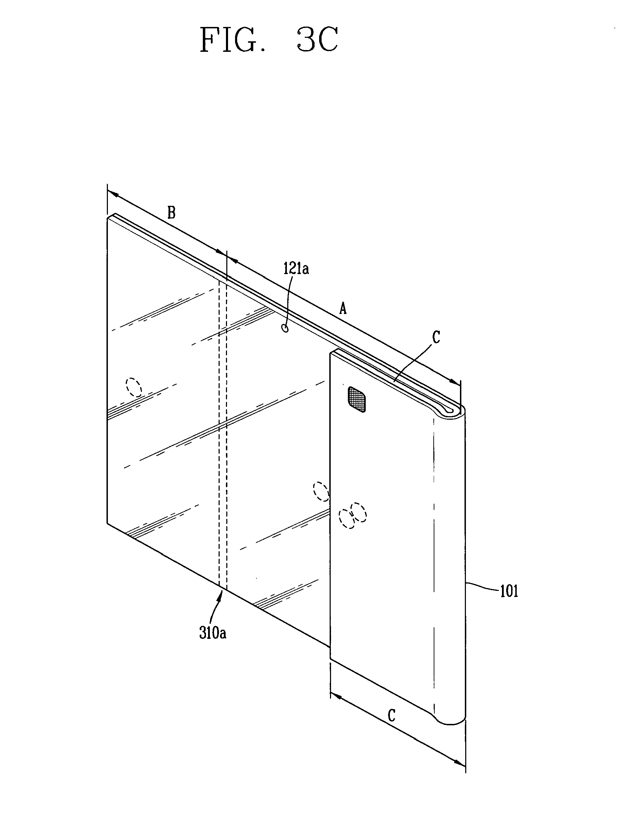

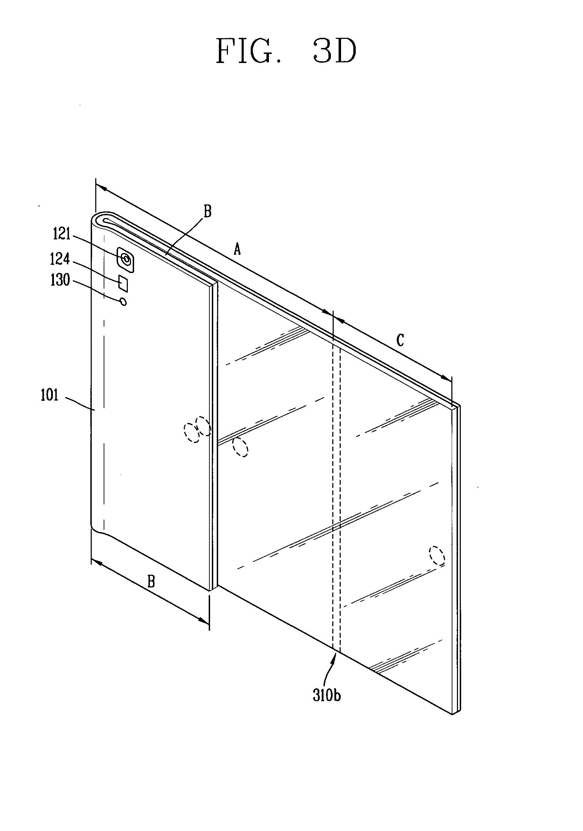

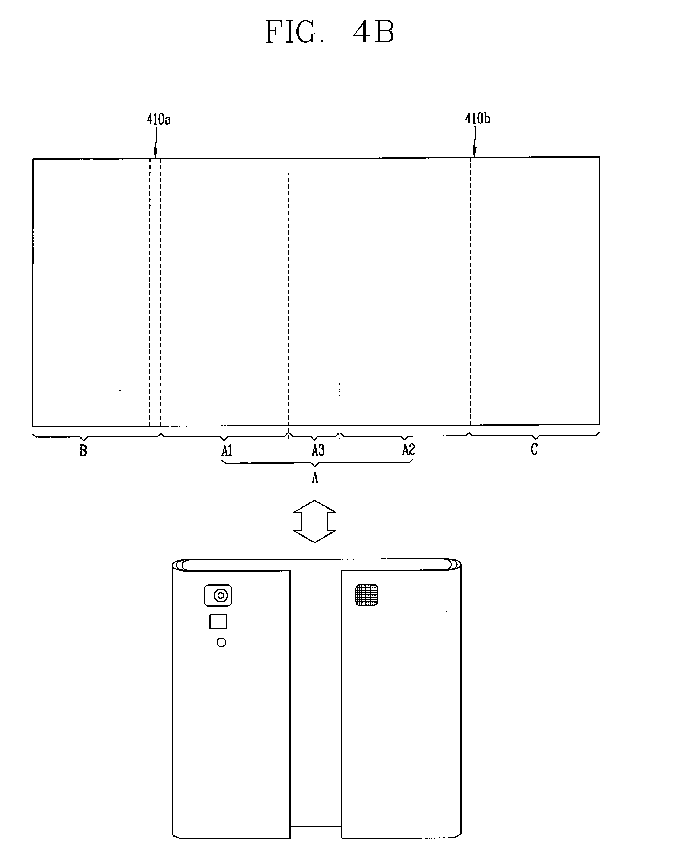

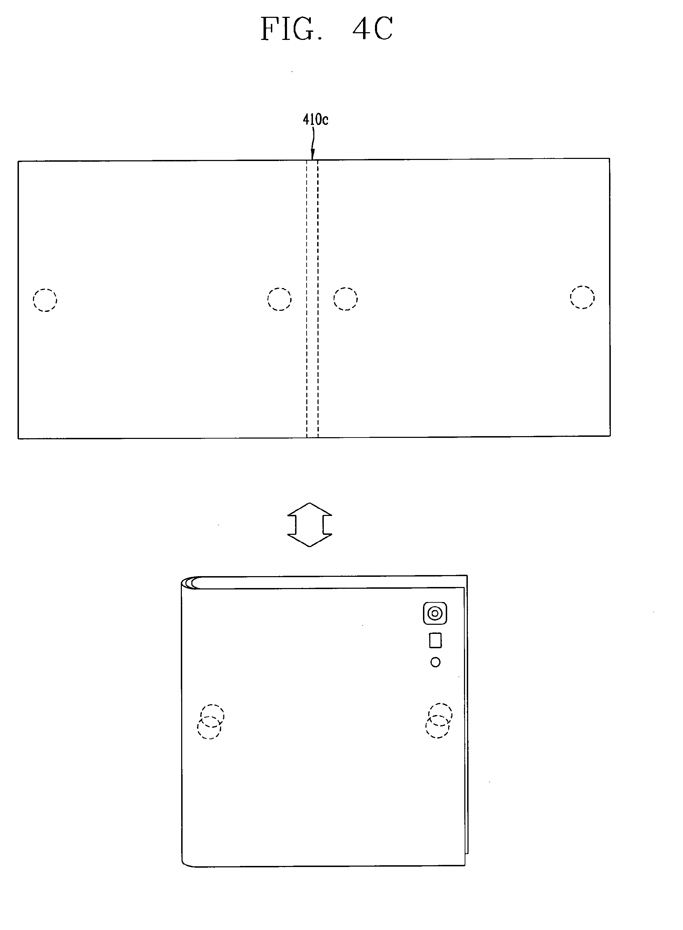

Referring to FIGS. 3 and 4, the portable electronic device 100 according to an embodiment of the present invention includes a case 101 which forms the appearance of the portable electronic device 100, a display unit 151 disposed on a front surface of the portable electronic device 100, and a sensing unit 140 (or transformation sensing mechanism) configured to sense a transformation of the flexible display unit 151.

The flexible display unit 151 can be bent or folded. Folding means a state that a curvature radius of part of a body of the portable electronic device is smaller than a reference value, i.e., a folded state. For such folded state of the portable electronic device, screens of the flexible display unit 151 contact each other or are positioned close to each other.

On the contrary, the bending means a state that a curvature radius of part of the body of the portable electronic device is larger than the reference value, i.e., a bent state. The folding and bending may be differentiated from each other according to a bent degree. For instance, if the portable electronic device is bent at an angle larger than a predetermined value, the state may be defined as 'folding'. On the contrary, if the portable electronic device is bent at an angle equal to or smaller than the predetermined value, the state may be defined as 'bending'. Even if the portable electronic device is bent at an angle larger than a predetermined value, if a curvature radius is larger than the reference value, the state may be also defined as 'bending'. Hereinafter, such bending and folding will be referred to as 'bending' for convenience.

The body of the portable electronic device, i.e., at least one of the flexible display unit 151 and a case 101 may be provided with one or more bending areas 310. And the body of the portable electronic device may be configured to be rotatable and bendable based on the bending area 310. As an example, a left end of the body may be bendable or transformable by rotating in a first arrow direction 300a, based on a first bending area 310a. As another example, a right end of the body may be bendable or transformable by rotating in a second arrow direction 310b, based on a second bending area 310b. That is, the present invention provides a dual foldable display which can be bent based on the first and second bending areas.

The bending area 310 may be defined as a virtual vertical line and/or virtual horizontal line connecting points where a resistance value larger than a reference value has been detected to each other, among points where bending has occurred. Such bending area may be preset to a predetermined area among an entire region of the body of the portable electronic device. That is, a user can bend the body of the portable electronic device, based on a preset bending area.

The bending area may be variously formed by an external force to bend the body of the portable electronic device, rather than being preset. More specifically, the bending area may be formed on an arbitrary position of the portable electronic device in a horizontal direction and/or vertical direction by an external force. And the body of the portable electronic device may be bent based on the formed bending area. That is, the bending area may be differently implemented according to an external force applied to the portable electronic device.

For convenience, the portable electronic device of the present invention will be explained in more detail, using an example that the first bending area 310a and the second bending area 310b are symmetrically formed at the body of the portable electronic device.

The flexible display unit 151 includes a first part (A) defined by the first bending area 310a and the second bending area 310b, a second part (B) and a third part (C). More specifically, the flexible display unit 151 may include the first part (A); the second part (B) formed to be rotatable based on the first bending area 310a formed at one side of the first part (A), so as to be in one of a state to cover the first part (A) and a state not to cover the first part (A); and the third part (C) formed to be rotatable based on the second bending area 310b formed at another side of the first part (A), so as to be in one of a state to cover the first part (A) and a state not to cover the first part (A). The first part (A) includes a region (A1) covered by the second part (B), and a region (A2) covered by the third part (C).

At least one of a position and a size of the first part (A), the second part (B) and the third part (C) is variable according to a position of the first and second bending areas 310a and 310b. That is, the first part (A), the second part (B) and the third part (C) may be distinguished from each other by the bending areas.

For instance, as shown in FIG. 3A, the first bending area 310a and the second bending area 310b may be formed at positions symmetrical to each other. Alternatively, as shown in FIG. 4A, a first bending area 410a and a second bending area 410b may be formed at positions asymmetrical to each other. The first part (A), the second part (B) and the third part (C) are variable according to a position of the first and second bending areas.

As shown in FIG. 4B, when the second part (B) and the third part (C) cover the first part (A), a region (A3) not covered by the second part (B) and the third part (C) may be generated. In this instance, the first part (A) includes a region (A1) covered by the second part (B), a region (A2) covered by the third region C, and a region A3 not covered by the second part (B) and the third part (C). Hereinafter, the part A3 not covered by the second part (B) and the third part (C) will be referred to as a 'notification display portion'.

As shown in FIG. 4C, a bending area 410c may be formed, and the flexible display unit 151 may be divided into a left half part and a right half part based on the single bending area 410c. That is, the portable electronic device of the present invention may be bent in various manners as one or more bending areas are formed at various positions.

For convenience, the portable electronic device of the present invention will be explained with taking FIG. 3A as an example. However, the present invention is not limited to this. That is, structural and/or functional features of the present invention may be equally applied to the portable electronic device of FIGS. 4A and 4B. For convenience, the present invention will be explained under an assumption that the first bending area 310a is included in the second part (B), and the second bending area 310b is included in the third part (C). However, the present invention is not limited to this. That is, the first and second bending areas 310a, 310b may be included in the first part (A), or may correspond to an additional display region distinguished from the first to third parts (A, B, C).

A state of the body of the portable electronic device may be variously defined according to a state of at least one of the second part (B) and the third part (C). For instance, as shown in FIG. 3B, when the first part (A) is covered by the second part (B) and the third part (C) (or when the left side end and a right side end of the portable electronic device face each other), may be defined as a 'closed state'. Such closed state may be advantageous when a user stores the portable electronic device in a pocket, a bag, or the like. The reason is because the flexible display unit 151 can be prevented from being scratched or damaged by other object, and because the portable electronic device can be easily carried due to its small size, in such closed state.

A state to cover the first part (A) means when screens of the flexible display unit 151 contact each other, the screens are close to each other within a reference distance, etc. Further, a state not to cover the first part (A) corresponds to a state rather than the state to cover the first part (A). That is, the state to cover the first part (A) corresponds to when folding has occurred, whereas the state not to cover the first part (A) corresponds to when bending has occurred, or when neither folding nor bending has occurred.

As another example, as shown in FIG. 3C, when the first part (A) is covered by the third part (C) without being covered by the second part (B), may be defined as a 'first open state'. As still another example, as shown in FIG. 3D, when the first part (A) is covered by the second part (B) without being covered by the third part (C), may be defined as a 'second open state'.

As shown in FIG. 3A, when an entire region of the flexible display unit is exposed to the outside, i.e., when the first part (A) is not covered by any one of the second part (B) and the third part (C), may be defined as a 'third open state'. In this instance, as the entire region of the flexible display unit is exposed to the outside, the portable electronic device may implement a large screen.

The portable electronic device 100 may have a structure to fold and unfold like a pocket book. As a user folds or bends the flexible display unit 151 based on one or more bending areas by applying a force to the flexible display unit 151, a partial region or an entire region of the flexible display unit to display screen information may be selected. As shown in FIG. 3B, as one part of the flexible display unit 151 is bent to cover another part of the flexible display unit 151, the flexile display unit 151 may be protected from scratch or damage.

The controller 180 can distinguish states of the portable electronic device from each other, based on a position of a bending area, a bending degree, a bending direction, a bending speed, etc. For instance, when bending has occurred based on the first bending area 310a, the controller 180 can determine a state of the portable electronic device, according to whether the bending has occurred in a 'y+' direction or a 'y-' direction. Then, based on the determined state of the portable electronic device, the controller 180 can execute a different function or display different screen information on the flexible display unit 151.

More specifically, the controller 180 can determine a state of the portable electronic device among the aforementioned states, using at least one sensing unit 140. The sensing unit 140 may include at least one of a proximity sensor, an IR sensor, a magnetic sensor and an illumination sensor. And the sensing unit 140 may sense a relative position of the second part (B) and/or the third part (C), with respect to the first part (A).

For instance, a first sensing portion 140a may be disposed on the region (A1) covered by the second part (B), and a second sensing portion 140b may be disposed on the region (A2) covered by the third part (C). A third sensing portion 140c may be disposed on the second part (B), at a position corresponding to the first sensing portion 140a. A fourth sensing portion 140d may be disposed on the third part (C), at a position corresponding to the second sensing portion 140d. The controller 180 determines whether the second part (B) covers the first part (A) or does not cover the first part (A), using the first sensing portion 140a and the third sensing portion 140c. And the controller 180 determines whether the third part (C) covers the first part (A) or does not cover the first part (A), using the second sensing portion 140b and the fourth sensing portion 140d. The controller 180 determines a state of the body of the portable electronic device, based on information collected from the plurality of sensing portions 140a to 140d.

As another example, the sensing unit 140 may include a bending sensor disposed on one or both of a front surface and a rear surface of the flexible display unit 151, and configured to sense bending of the flexible display unit 151. The bending sensor may be a sensor formed to be bendable and configured to sense bending using a principle that a resistance value is variable according to a bending degree. For instance, the bending sensor may be implemented as an optical fiber bending sensor using a strain (transformation rate) of optical fiber, an electric resistance bending sensor using an electric resistance, a pressure sensor, a strain gauge, etc. The sensing unit 140 may calculate a resistance value of the bending sensor, based on a size of a voltage applied to the bending sensor, or a size of a current flowing on the bending sensor. Then the sensing unit 140 may sense a bending-occurred position, a bending degree, etc. based on the calculated resistance value.

When the sensing unit 140 senses bending of the flexible display unit 151 by the bending sensor, the controller 180 can search for bending areas based on a resistance value calculated by the bending sensor. Then the controller 180 can distinguish the first part (A), the second part (B) and the third part (C) from each other, based on the bending areas, and may determine a state of the body of the portable electronic device.

The controller 180 determines a state of the portable electronic device 100 using the sensing unit 140, and controls information to be output to the flexible display unit 151 based on a result of the determination. More specifically, upon sensing of a state conversion of at least one of the second part (B) and the third part (C), the controller 180 can differently control a position on the flexible display unit 151 where information is to be output, and a type of information to be output to the position, based on the one or more state-converted parts.

For instance, when a closed state is converted into a first open state, the controller 180 can activate part of the flexible display unit 151 exposed to the outside (e.g., the second part (B), and a region of the first part (A) covered by the second part (B)), and may display a first execution screen on the activated part. On the contrary, when a closed state is converted into a second open state, the controller 180 can activate part of the flexible display unit 151 exposed to the outside (e.g., the third part (C), and a region of the first part (A) covered by the third part (C)), and may display a second execution screen on the activated part.

The execution screen means various types of screen information which can be output to the flexible display unit 151, and the first execution screen and the second execution screen are different from each other. For instance, the screen information may be an execution screen for an application, a home screen, a menu screen, a screen corresponding to a function executed by a user's request, a notification screen informing occurrence of an event, a lock screen for inputting a password for releasing a locked state, etc. The screen information may be composed of one of texts, images (including icons), flashes and moving images.

As another example, when an open state is converted into a closed state, the controller 180 can convert the flexible display unit 151 into a deactivated state from an activated state, and may execute a locked state where input of a password is required. The deactivated state of the flexible display unit 151 means an 'OFF' state of an illumination lamp for illuminating the flexible display unit 151. In the deactivated state of the flexible display unit 151, neither information nor graphic image is output to the flexible display unit 151.

On the contrary, the activated state of the flexible display unit 151 means an 'ON' state of the illumination lamp for illuminating the flexible display unit 151. In the activated state of the flexible display unit 151, different screen information is output to the flexible display unit 151, under control of the controller 180. In addition, once the flexible display unit 151 is activated in a locked state, the controller 180 can display a lock screen configured to receive, from a user, a password for releasing the locked state.

The locked state means when reception of a control command input by a user is restricted, which can be released only when a password set by a specific person is input. If the flexible display unit 151 is activated under such locked state, a lock screen configured to input a password is displayed. The locked state may be released by face recognition, iris recognition, fingerprint recognition, a plurality of touch inputs corresponding to a preset pattern, a touch which forms a preset orbit, etc. Other screen information rather than the lock screen may be displayed on the flexible display unit 151 only when the locked state is released.

The body of the portable electronic device may have one or more basic states, and may be configured to return to one of the states if there is no external force to bend the body in a first arrow direction 300a and/or a second arrow direction 300b. That is, if there is no external force to bend the body, the body may maintain its basic state, or may return to the basic state. For instance, as shown in FIG. 3A, the basic state may be when the flexible display unit 151 forms a single planar surface. More specifically, the basic state may mean a flat state where the first to third parts (A, B, C) and the first and second bending areas 310a, 310b form a single planar surface.

The portable electronic device 100 may be provided with a fixing member for making the body maintain a state rather than the basic state. For instance, when the basic state is converted into a closed state by an external force and then the external force disappears, the body of the portable electronic device may maintain the closed state by the fixing member, without returning to the basic state.

The fixing member may fix a bent state of the body under control of the controller 180. More specifically, the fixing member is formed so that the body of the portable electronic device can maintain one of a closed state, a first open state, a second open state and a third open state. That is, the fixing member is formed so that at least one of the second part (B) and the third part (C) can maintain an overlapped state with the first part (A).

Also, the fixing member may release a fixed bent state of the body so that the body can return to its basic state from a bent state. More specifically, when the body of the portable electronic device maintains one of a closed state, a first open state and a second open state, the fixing member may release a fixed bent state of the body under control of the controller 180, so that the one state cannot be maintained any longer. For instance, if a fixed state to a closed state is released, the second part (B) and the third part (C) which were covering the first part (A) do not cover the first part (A) any longer. Thus, the closed state may be converted into a third open state.

For instance, the fixing member may include an electromagnet for attracting an object distant therefrom. For instance, the fixing member may be disposed on the first part (A) so as to attract the second part (B) and the third part (C), so that an overlapped state of the first part (A) with the second part (B) and the third part (C) can be maintained in a closed state. If the closed state is released as it corresponds to a preset condition, or if the closed state is released by a user's input, the controller 180 controls the fixing member not to attract the second part (B) and the third part (C), by disconnecting a current supplied to the electromagnet. In this instance, the body of the portable electronic device may return to a basic state from the closed state.

As another example, the fixing member may be formed to have a layered structure with the flexible display unit 151, or may be integrally formed with the flexible display unit 151. The fixing member may be formed to be convertible to a non-flexible state (rigid state) from a flexible state, or to a flexible state from a non-flexible state, under control of the controller 180. If the fixing member is in a rigid state, the body of the portable electronic device may maintain a bent state. On the contrary, if the fixing member is in a flexible state, the body of the portable electronic device may be transformable.

In the present invention, information processed by the portable electronic device may be displayed on a flexible display. Hereinafter, the display will be explained in more detail with reference to the attached drawings.

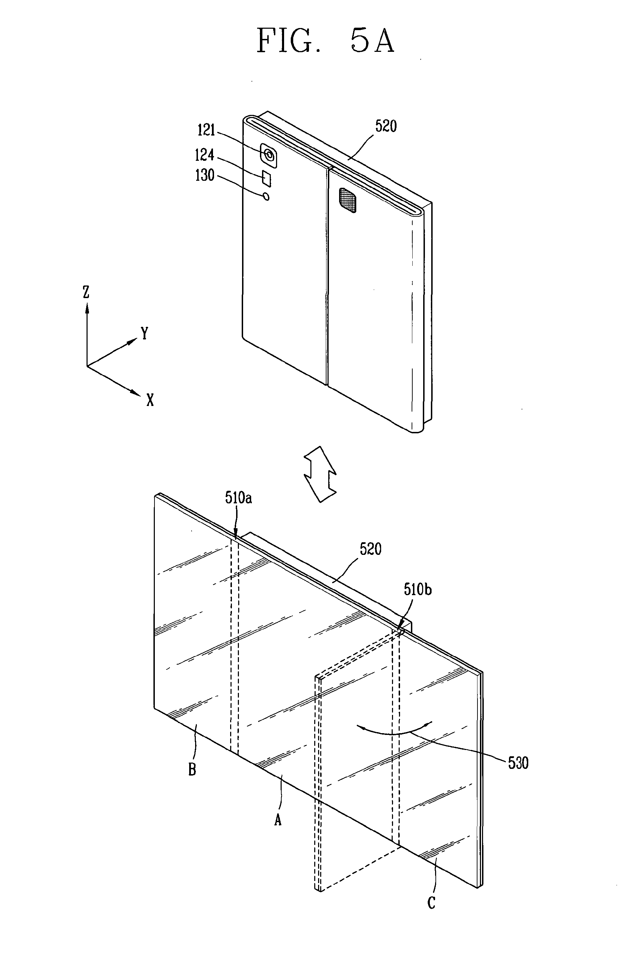

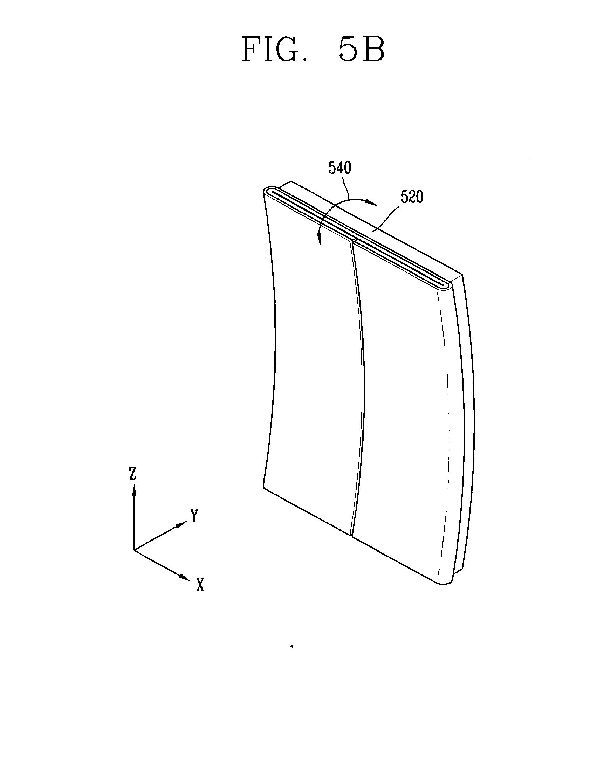

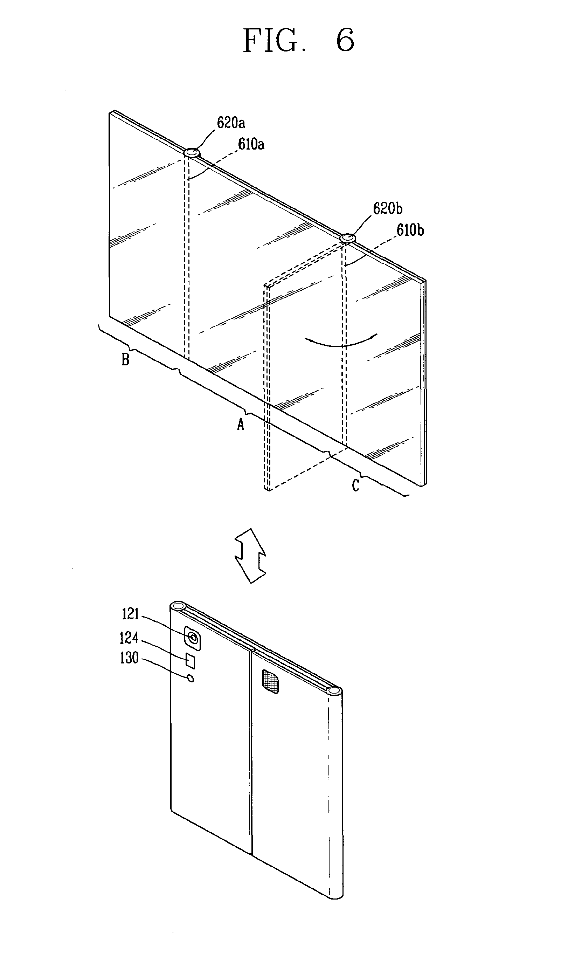

FIGS. 5A, 5B and 6 are views illustrating a modification example of the portable electronic device of FIG. 3A. Referring to FIG. 5A, a portable electronic device 100 according to a modification embodiment of the present invention may further include a supporting structure 520. The supporting structure 520 may be formed of a relatively thick material such as carbon fiber, plastic, glass, ceramic, fiber, metal (e.g., stainless steel, aluminum, etc.), textile, silicon, other suitable material, or a combination thereof. Various types of electronic components are disposed at an inner space of the supporting structure 520.

The flexible display unit 151 may be bent in an arrow direction 530, based on an axis parallel to a 'Z'-axis of FIG. 5A, by being coupled to the supporting structure 520. A first bending area 510a may be formed at a position corresponding to a left side end of the supporting structure 520, and a second part (B) formed at a left side based on the first bending area 510a may rotate to cover or not to cover a first part (A). Likewise, a second bending area 510b may be formed at a position corresponding to a right side end of the supporting structure 520, and a third part (C) formed at a right side based on the second bending area 510b may rotate to cover or not to cover the first part (A).

The supporting structure 520 may extend in a vertical direction along the 'Z'-axis of FIG. 5A. By the supporting structure 520, the body of the portable electronic device may have a resistance to a bent state. More specifically, among an entire region of the flexible display unit 151, a region coupled to the supporting structure 520 is less bent than a region not coupled to the supporting structure 520. Under such configuration, the first part (A) coupled to the supporting structure 520 may maintain a flat state, and electronic components having less flexibility than the flexible display unit 151 may be disposed in the supporting structure 520 to thus be protected from bending of the flexible display unit 151.

As shown in FIG. 5B, the supporting structure 520 may be formed to be bendable. More specifically, the supporting structure 520 may be bendable in an arrow direction 540, based on an axis parallel to an 'X'-axis of FIG. 5B. However, in this instance, the supporting structure 520 may be formed so that a bending degree thereof can be smaller than that of the flexible display unit 151.

Referring to FIG. 6, a first bending area 610a and a second bending area 610b may be preset to the flexible display unit 151. More specifically, the first bending area 610a may be preset by a first hinge portion 620a, and the second bending area 610b may be preset by a second hinge portion 620b.

The second part (B) including the first bending area 610a may be formed to be rotatable by the first hinge portion 620a, and may be bendable so as to be either in a state to cover the first part (A) or in a state not to cover the first part (A). Likewise, the third part (C) including the second bending area 610b may be formed to be rotatable by the second hinge portion 620b, and may be bendable so as to be either in a state to cover the first part (A) or in a state not to cover the first part (A).

The first bending area 610a and the second bending area 610b may be configured to display information, and may protrude by the first hinge portion 620a and the second hinge portion 620b as shown in FIG. 6. The flexible display unit 151 including the first bending area 610a and the second bending area 610b may be formed so that its entire region can be flat.

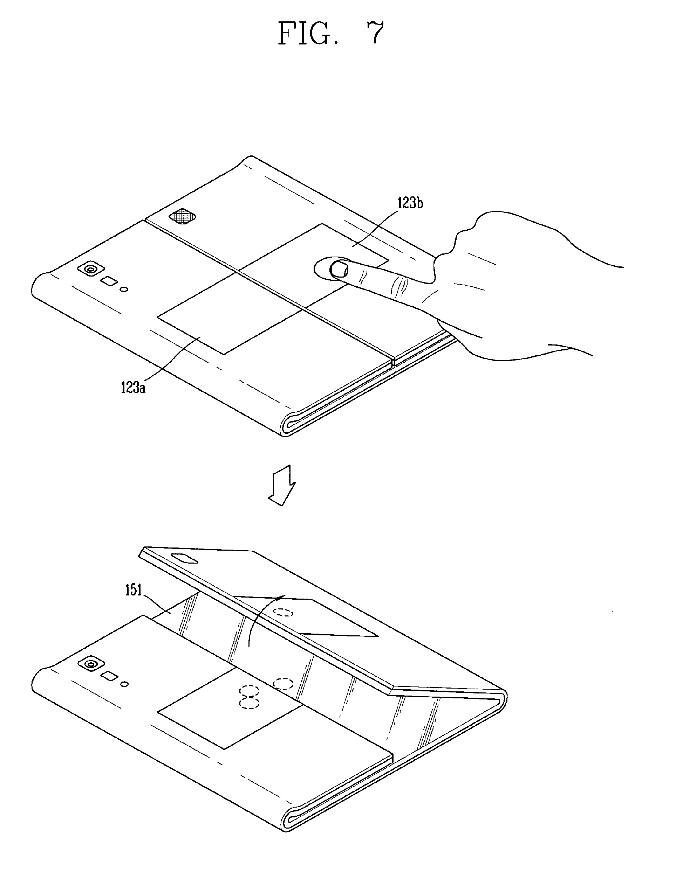

FIG. 7 is a view illustrating a method for fixing a bent state or releasing a fixed state in a portable electronic device according to an embodiment of the present invention. Referring to FIG. 7, the body of the portable electronic device is formed to maintain a bent state. More specifically, a fixing member of the portable electronic device may fix a bent state (or folded state) so that one part of the flexible display unit 151 can contact another part of the flexible display unit 151, or may release the fixed state. For instance, the fixing member may be formed to maintain one of a closed state, a first open state and a second open state. In this instance, the closed state means when both of the second part (B) and the third part (C) cover the first part (A). The first open state means when the third part (C) covers the first part (A), but the second part (B) does not cover the first part (A). And the second open state means when the second part (B) covers the first part (A), but the third part (C) does not cover the first part (A). That is, the fixing member is configured to fix a folded state of the portable electronic device, such that the folded state is maintained.

A fixed state by the fixing member may be released by a user input applied to a rear input unit. Hereinafter, a method for releasing a fixed state by the fixing member will be explained. The body of the portable electronic device is composed of a front surface, side surfaces and a rear surface. The flexible display unit 151 is disposed on the front surface, and a case 101 is disposed on the rear surface. One or more rear input units 123a and 123b may be provided on the rear surface. The rear input units 123a and 123b are manipulated so that a user can input a command for controlling an operation of the portable electronic device 100. In this instance, input contents may be variously set.

For instance, the rear input units may be configured to receive a touch input, a push input or a combination thereof. That is, the rear input units may be configured to receive both a touch input and a push input. In some cases, the rear input units may serve as a touch sensor of the flexible display unit 151, and a home key of the portable electronic device.

The rear input units may be disposed at positions adjacent to a left side end and a right side end. Under such configuration, when at least one of the second part (B) and the third part (C) covers the first part (A), the rear input unit disposed on another surface of said at least one may be disposed toward a front surface. For instance, as shown in FIG. 7, in a closed state where the portable electronic device has been bent so that two side ends thereof can face each other, the first rear input unit 123a and the second rear input unit 123b may be disposed toward a front surface.

When at least part of the portable electronic device has been folded, whether to fix the folded state or not is determined by a push input applied to the rear input units disposed toward a front surface. More specifically, the push input may be defined as an input for releasing a fixed folded state by the fixing member. That is, if a push input is applied to the rear input units disposed toward a front surface when the portable electronic device has been folded, a fixed folded state may be released and the body of the portable electronic device may return to a basic state. Accordingly, at least part of the flexible display unit 151 may be exposed to the outside to thus be activated, thereby outputting screen information.

A region, where a fixed state is to be released, may be variable according to a position to which a push input is applied. For instance, as shown in FIG. 7, if a push input applied to the second rear input unit 123b is sensed, the controller 180 releases a fixed state of the third part so that the third part corresponding to the second rear input unit can be converted into a state not to cover the first part. And the controller 180 maintains a fixed state of the second part so that the second part can be continuously in a state to cover the first part. If a push input is simultaneously applied to the first rear input unit 123a and the second rear input unit 123b, a fixed state of the second part and the third part is released, and the closed state is converted into a third open state where none of the second part and the third part covers the first part.

A push input for releasing a fixed folded state may be modified in various manners. For instance, the push input may be modified into a long-touch input which is maintained for a reference time without being released, a knock code input by a plurality of touch inputs matching a preset pattern, a fingerprint input, etc. The rear input units provide a new type of user interface related to fixing a bent state by the fixing member, or related to releasing the fixed state.

In the portable electronic device having the aforementioned structure, the controller 180 can control information to be output to the flexible display unit 151, based on a state conversion of the flexible display unit 151. Hereinafter, a method for extracting information on a state conversion-occurred part and controlling a function, based on a state conversion of the flexible display unit 151, will be explained.

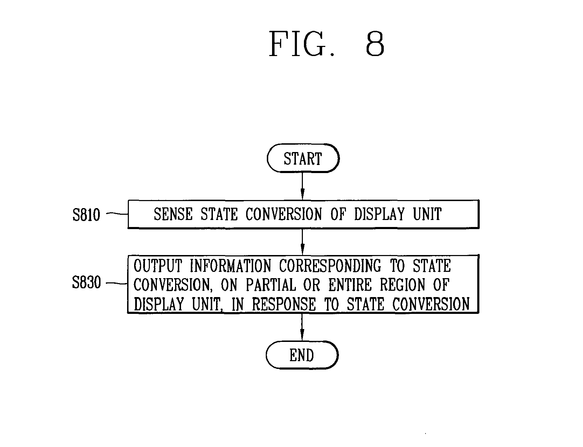

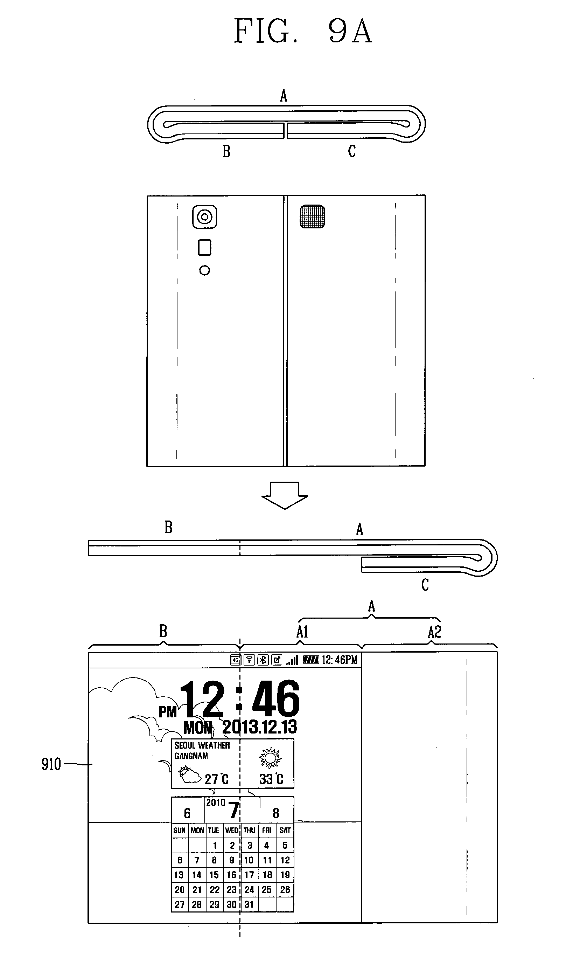

FIG. 8 is a flowchart illustrating a method for controlling a portable electronic device according to an embodiment of the present invention, and FIGS. 9A to 9I are conceptual views illustrating the control method of FIG. 8. The controller 180 senses a state conversion of the flexible display unit 150 using the sensing unit 140 (S810).

The flexible display unit 151 means a flexible display unit formed to be flexible so that at least part thereof can be folded. When at least part of the flexible display unit is bent as an external force is applied onto the flexible display unit, the sensing unit 140 senses such bending of the flexible display unit. The bending occurs by an external force applied onto the flexible display unit 151, and the external force may be applied by a user or an object.

That is, the controller 180 can control the sensing unit 140 to sense bending of the flexible display unit 151. The controller 180 can control the sensing unit 140 to sense bending of the flexible display unit 151 anywhere, regardless of a specific region (specific position) of the flexible display unit 151. Also, the controller 180 can control the sensing unit 140 to sense bending of a preset region (preset position) on the flexible display unit 151, or to sense bending of the flexible display unit 151 in a specific direction. Further, the controller 180 can control the sensing unit 140 to sense a folded state where one part of the flexible display unit 151 contact (or is close to) another part of the flexible display unit 151.

The controller 180 can sense bending occurs at a plurality of regions of the flexible display unit 151, using the sensing unit 140. Also, the controller 180 can sense a plurality of bending areas serving as axes of bending. For instance, the controller 180 can sense a first bending area and a second bending area formed on the flexible display unit 151, and may distinguish first to third parts of the flexible display unit 151 from each other, the first to third parts divided from each other by the first and second bending areas.

The second part is formed to be rotatable based on one boundary portion of the first part (or the first bending area), so as to be in one of a state to cover the first part and a state not to cover the first part. Likewise, the third part is formed to be rotatable based on another boundary portion of the first part (or the second bending area), so as to be in one of a state to cover the first part and a state not to cover the first part.

A position of the first and second bending areas may be variable according to an external force applied to the flexible display unit 151. The first to third parts may be differently formed according to a position of the first and second bending areas. The controller 180 can sense a state conversion of the flexible display unit 151, based on characteristics of the first to third parts of the flexible display unit 151. More specifically, the controller 180 can sense a state conversion of at least one of the second and third parts, using the sensing unit 140. For instance, the controller 180 can sense a state conversion from one of the aforementioned closed state, first open state, second open state and third open state (refer to FIG. 3), to another.

Upon detection of the state conversion of the flexible display unit 151, the controller 180 can control the flexible display unit 151 so that information corresponding to the state conversion can be output to an entire region or a partial region of the flexible display unit 151 (S830). That is, information to be output to the flexible display unit 151 is determined based on a state of at least one of the second and third parts of the flexible display unit 151. The controller 180 controls information output to the flexible display unit 151 when the second part does not cover the first part, so as to be different from information output to the flexible display unit 151 when the third part does not cover the first part.

Further, a region where information is to be output (e.g., an entire region or a partial region of the flexible display unit) is determined based on a state of at least one of the second and third parts. For instance, as shown in FIG. 9A, if the flexible display unit 151 is converted from a closed state where the second part (B) and the third part (C) cover the first part (A), to a first open state where the second part (B) positioned on a front left side does not cover the first part (A) whereas the third part (C) positioned on a front right side covers the first part (A), or if a region of the first part (A) covered by the second part (B) is exposed to the outside as the second part (B) rotates in a closed state), the controller 180 displays a preset first execution screen 910 on the flexible display unit 151.

The execution screen may be various types of screen information which can be output to the flexible display unit 151. For instance, the screen information may be an execution screen of an application, a home screen, a menu screen, a screen corresponding to a function executed by a user's request, a notification screen informing occurrence of an event, a lock screen for preventing a malfunction due to an undesired touch input, etc. That is, the execution screen means various visual information output to the flexible display unit 151 as a specific function is executed, and various screen changes.

The first execution screen 910 includes a graphic object formed to be executable in a locked state. The graphic object formed to be executable in a locked state may be an application icon such as a clock, a weather widget, a calendar and a camera, or includes at least one of a text which displays information requiring no security (e.g., time), an image, a flash, a moving image and a widget. For instance, a graphic user interface (or an execution screen for an emergency call), configured to inform an urgent situation by making a call to an office such as a police station or a fire station, may be included in the first execution screen 910.

The locked state means when reception of a control command input by a user is restricted. In the locked state, a lock screen, configured to receive password information for releasing the locked state from a user, is generally displayed on the flexible display unit 151.

When the portable electronic device is converted into a first open state from a closed state, the first execution screen 910 rather than a lock screen is displayed. Since a graphic object executable even in a locked state is displayed on the first execution screen 910, a user can execute at least one function of the portable electronic device, using the graphic object included in the first execution screen 910, without inputting a password. Under such configuration, the user can rapidly receive information not requiring input of a password, and can enjoy a function having a low security level, without inputting a password.

The controller 180 can display the first execution screen 910 on part of the flexible display unit 151. For instance, if a state conversion from a closed state to a first open state is sensed as shown in FIG. 9A, the controller 180 can activate the second part (B), and a region (A1) covered by the second part (B) among an entire region of the first part (A). Then the controller 180 can display the first execution screen 910 on the activated part (B and A1, hereinafter will be referred to as 'first region').

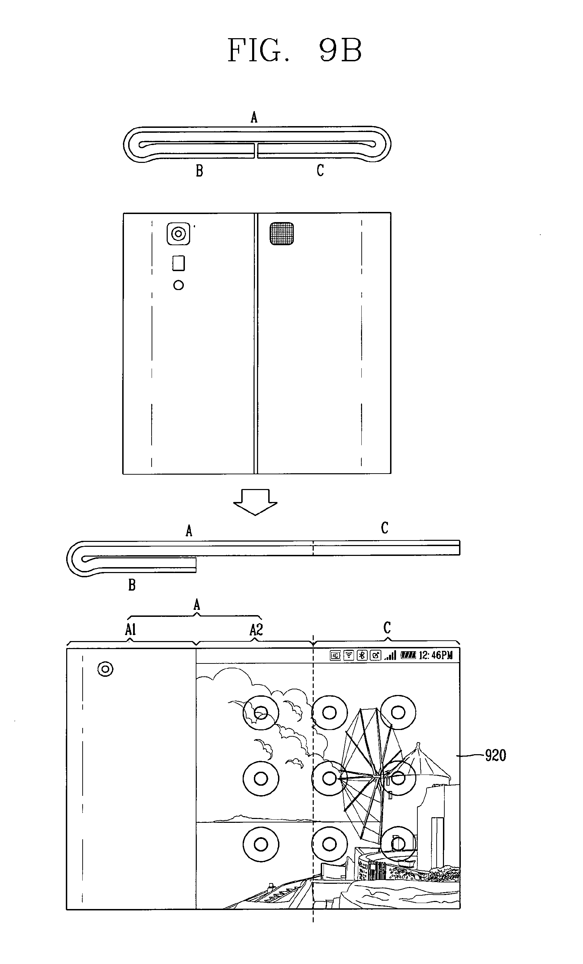

For instance, as shown in FIG. 9B, if the flexible display unit 151 is converted from a closed state, to a second open state where the second part (B) positioned on a front left side covers the first part (A) whereas the third part (C) positioned on a front right side does not cover the first part (A), or if a region of the first part (A) covered by the third part (C) is exposed to the outside as the third part (C) rotates in a closed state), the controller 180 displays a preset second execution screen 920 on the flexible display unit 151.

If a state conversion from a closed state to a second open state is sensed, the controller 180 can activate the third part (C), and a region (A2) covered by the third part (C) among an entire region of the first part (A). Then the controller 180 can display the second execution screen 920 on the activated part (C and A2, hereinafter will be referred to as 'second region').

The second execution screen 920 means an execution screen different from the aforementioned first execution screen 910, which may be a lock screen. That is, if the portable electronic device is converted into a first open state from a closed state, the first execution screen is displayed on a first region. Further, if the portable electronic device is converted into a second open state from a closed state, the second execution screen is displayed on a second region different from the first region.

When the first execution screen has been displayed on the first region as a closed state is converted into a first open state, there is a user's need to display the second execution screen rather than the first execution screen, on the first region. That is, a user wishes to change a position to display the first execution screen, and a position to display the second execution screen.

To solve such problem, in the portable electronic device according to an embodiment of the present invention, the controller 180 can change a position to display the first execution screen, and a position to display the second execution screen, based on a preset drag input. More specifically, upon detection a drag input consecutively moving toward the second region, when the first execution screen has been displayed on the first region, the first execution screen may disappear, and the second execution screen may be displayed on the first region. As another example, upon detection a drag input consecutively moving toward the second region, when the second execution screen has been displayed on the first region, the first execution screen rather than the second execution screen may be displayed on the first region.

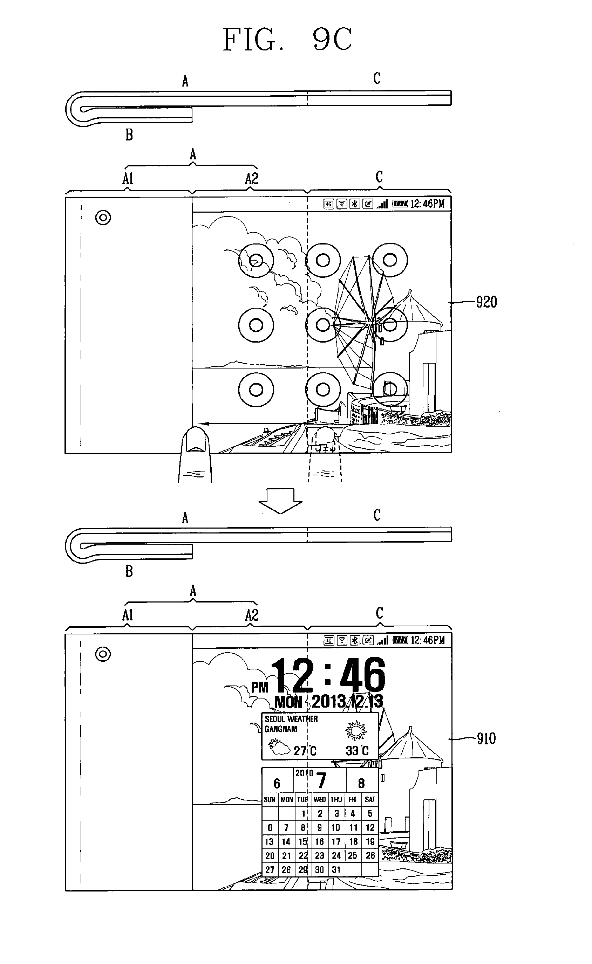

For instance, as shown in FIG. 9C, the second execution screen 920 may be displayed on the second region in a second open state. In this instance, if a touch input applied to the second region is consecutively moved toward the first region, without being released, the controller 180 displays the first execution screen 910 rather than the second execution screen 920, on the second region. In addition, when the first execution screen 910 has been displayed on the second region, if a touch input applied to the second region is consecutively-moved toward the first region without being released, the controller 180 displays the second execution screen 920 rather than the first execution screen 910, on the second region.

In order to prevent an unintended change of a position where screen information is displayed, the controller 180 can change screen information only when a drag input is applied to a boundary between the first region and the second region.

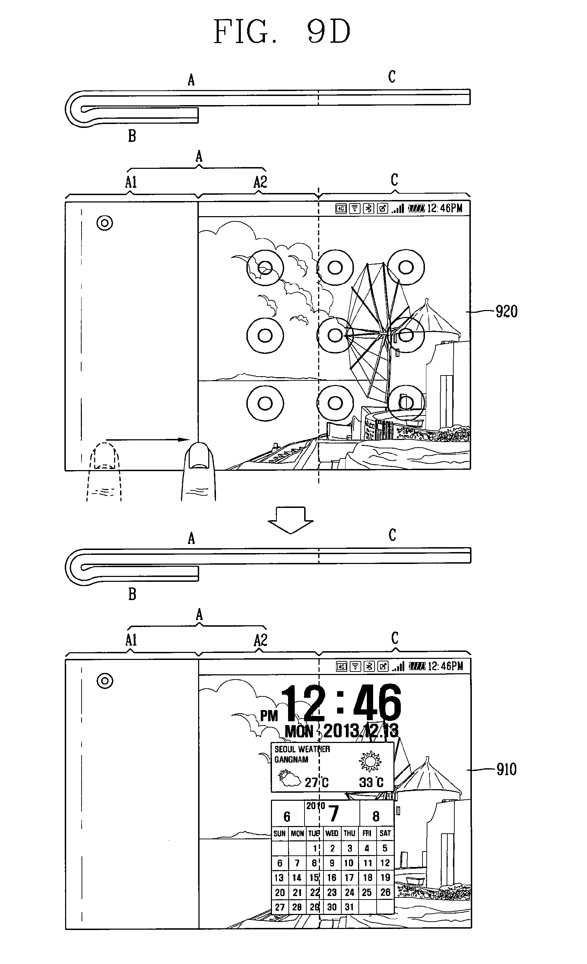

When a touch sensor is disposed on a rear surface of the portable electronic device, the controller 180 can change a position to display the first execution screen, and a position to display the second execution screen, based on a drag input sensed by the touch sensor. For instance, as shown in FIG. 9D, the second execution screen 920 may be displayed on the second region in a second open state. In this instance, if a drag input is sensed by a rear touch sensor disposed toward a front surface when bending of the flexible display unit 151 occurs, the controller 180 can display the first execution screen 910 rather than the second execution screen 920, on the second region.

The drag input means a gesture to consecutively-move a touch input applied to the rear touch sensor without being released and to reach a boundary between the first and second regions. The drag input includes when the touch is connected to the second region beyond a boundary between the first region and the second region. That is, the drag input includes when a touch input applied from a rear touch sensor is moved to a point on a boundary between the first region and the second region, and the touch input moving from the point toward the same direction is sensed on the second region.

If the drag input is sensed by the rear touch sensor when the first execution screen has been displayed on the second region, the controller 180 can display the second execution screen 920 rather than the first execution screen 910, on the second region.

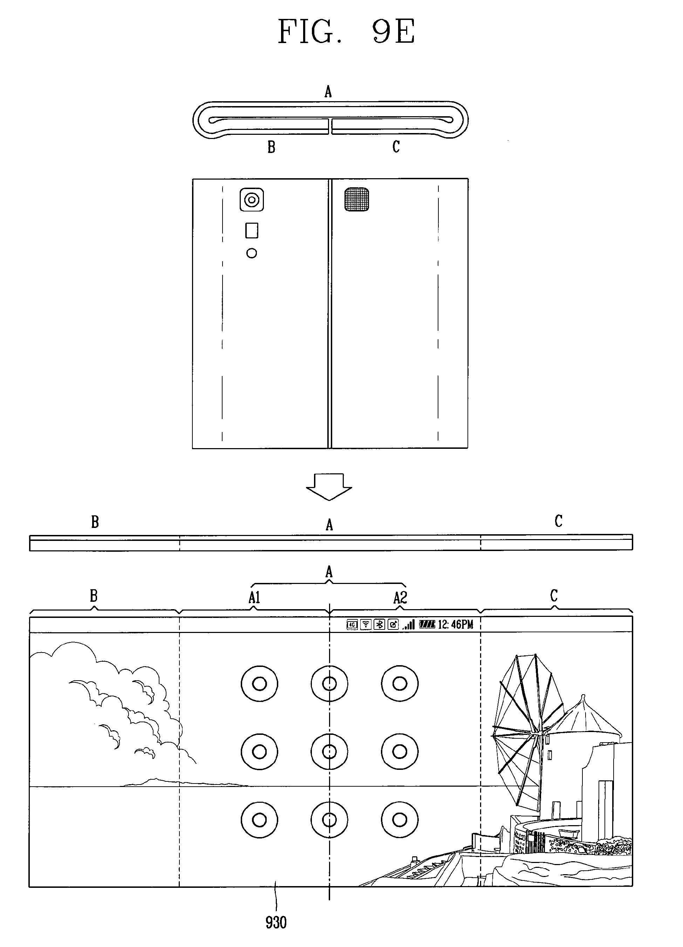

As shown in FIG. 9E, if the flexible display unit 151 is converted from a closed state, to a third open state where nether the second part (B) nor the third part (C) covers the first part (A), or if an entire region of the first part (A) is exposed to the outside as the second part (B) and the third part (C) rotate in a closed state), the controller 180 displays a preset third execution screen 930 on the flexible display unit 151.

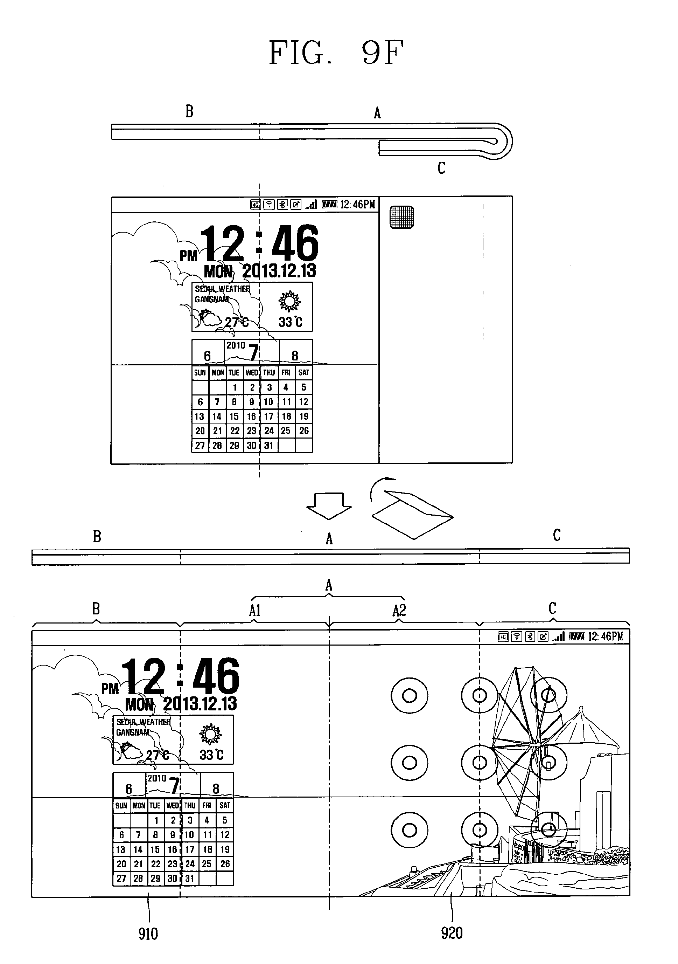

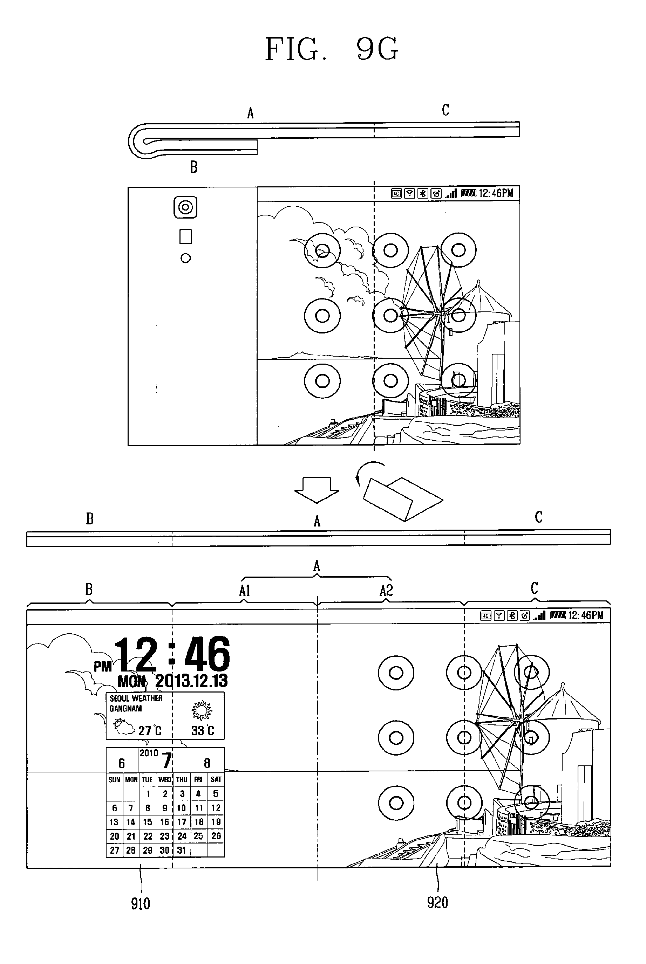

If a state conversion from a closed state to a third open state is sensed, the controller 180 can activate an entire region of the flexible display unit 151 and display the third execution screen 930. The third execution screen corresponds to a lock screen. When the flexible display unit 151 is converted to the third open state from the first open state as shown in FIG. 9F, or when the flexible display unit 151 is converted to the third open state from the second open state as shown in FIG. 9G, the controller 180 can display the first execution screen 910 and the second execution screen 920 on different regions. More specifically, the first execution screen 910 may be displayed on the second part (B), and the part A1 covered by the second part (B) among the first part (A). Further, the second execution screen 920 may be displayed on the third part (C), and the part A2 covered by the third part (C) among the first part (A).

When the first execution screen and the second execution screen are displayed on different regions, an entire region of the flexible display unit 151 may be divided into a first region to display the first execution screen, and a second region to display the second execution screen. That is, the controller 180 can distinguish the first region and the second region from each other, and may control screen information displayed on the first region and screen information displayed on the second region, to operate differently. For instance, even if first screen information is changed as a touch input is applied to the first region, second screen information displayed on the second region is not changed. That is, the controller 180 can execute a dual mode where the first region and the second region display different screen information corresponding to different functions. The first region and the second region operate in a separate manner.

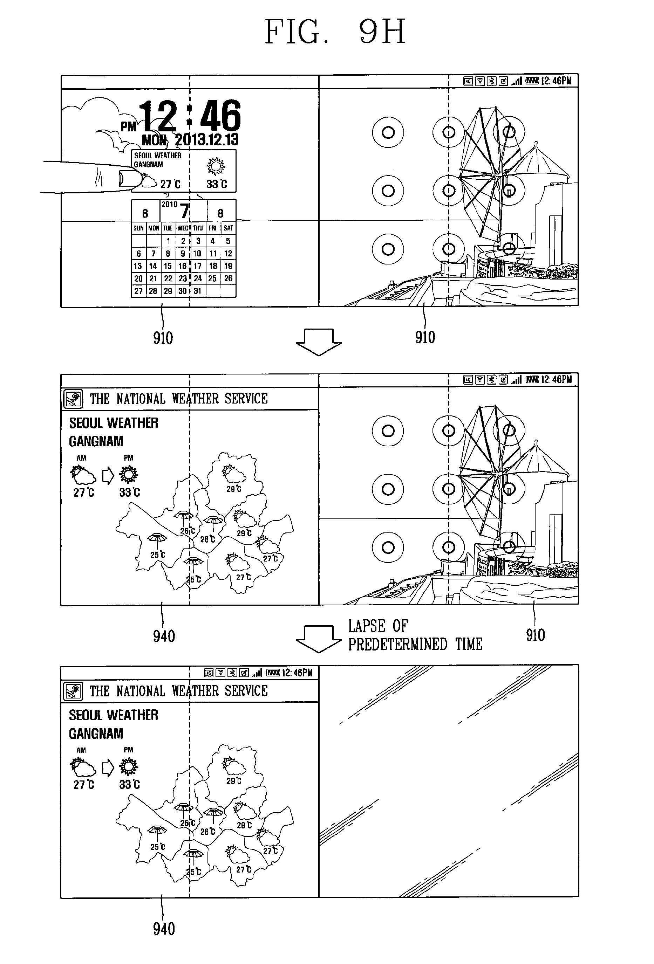

For instance, as shown in FIG. 9H, when the first execution screen 910 has been displayed on the first region and the second execution screen 920 has been displayed on the second region, a touch input may be applied to the first region. The controller 180 changes the first execution screen 910 displayed on the first region, in response to the touch input applied to the first region. That is, the controller 180 executes a function corresponding to the touch input, displays a new execution screen for the function, and continuously displays the second execution screen 920 on the second region. For instance, as a touch input is applied to a weather-related graphic object, the controller 180 can display, on the first region, a weather screen 940 including detailed information on weather. The second execution screen 920 displayed on the second region is displayed as it is.

For efficient usage of a battery, the controller 180 deactivates the flexible display unit 151 if a control command has not been input from a user for a preset time. More specifically, if a preset time lapses from a time point when a last touch input has been applied, the controller 180 converts the flexible display unit 151 from an activated state where an illumination lamp has turned on, to a deactivated state where the illumination lamp has turned off. In order to convert the flexible display unit from an activated state to a deactivated state, the controller 180 counts a time from a time point when a last touch input has been applied. If a new touch input is applied while the controller 180 counts a time, the controller 180 initializes the counting.

In a dual mode, the controller 180 can distinguish the first region and the second region from each other, and may determine whether to convert an activated state of the flexible display unit 151 into a deactivated state by separating the first region and the second region from each other. More specifically, the controller 180 can differently set reference time points for converting an activated state into a deactivated state, with respect to the first region and the second region. For instance, as shown in FIG. 9H, counting of time with respect to the first region is initialized to resume by a touch input applied to the first execution screen 910, whereas counting of time with respect to the second execution screen 920 is continuously performed because no touch input has been applied to the second execution screen 920. Thus, as a predetermined time lapses, the second region is converted into a deactivated state from an activated state, whereas the first region maintains an activated state.

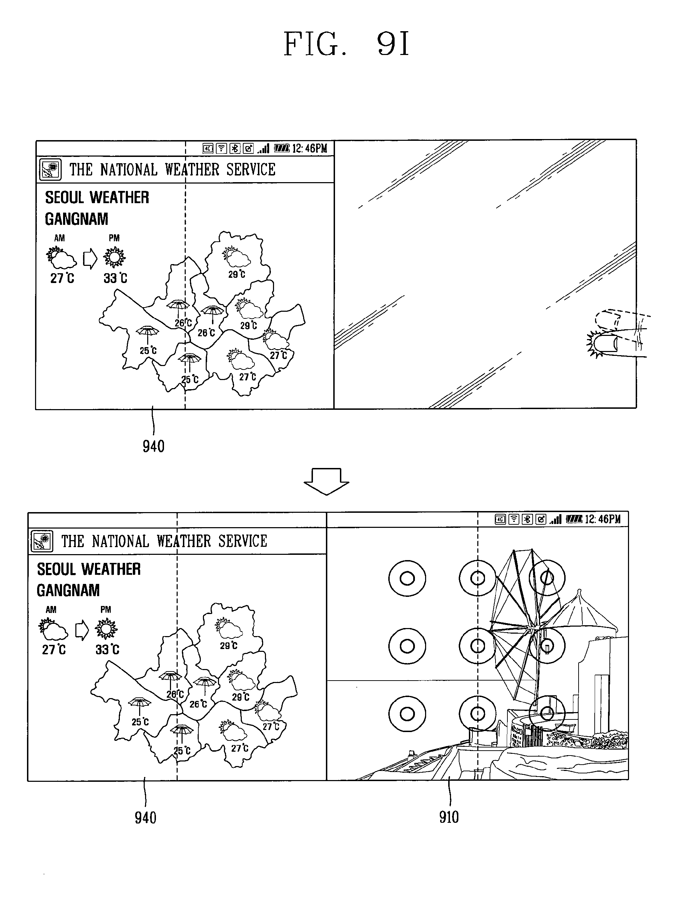

As shown in FIG. 9I, upon detection of a plurality of touch inputs knocking on a deactivated region among an entire region of the flexible display unit 151 consecutively (e.g., two times), the controller 180 converts the deactivated region into an activated state, and displays screen information which has been recently displayed in an activated state. More specifically, if a first touch input and a second touch input consecutively knocking on a predetermined part on the deactivated region are sensed within a reference time, the controller 180 displays recently-displayed screen information on the region. For instance, the controller 180 can display the second execution screen 920.

A touch sensor is configured to sense a touch input applied to the flexible display unit 151 even in an 'OFF' state of the illumination lamp of the flexible display unit 151. For minimized consumption of the battery, the touch sensor may be converted into an activated state and a deactivated state at specific intervals.

A type of an execution screen displayed on the flexible display unit 151 may be variable according to a state of the portable electronic device. As shown in FIGS. 9A to 9I, if a state conversion occurs in a locked state, the first execution screen may include graphic objects formed to be executable in the locked state, and each of the second and third execution screens may be a lock screen. Further, if a state conversion occurs in a state rather than a locked state, the first execution screen may be an execution screen corresponding to a specific function set by a user (e.g., connection of a call signal), the second execution screen may be an execution screen corresponding to a specific function frequently used by a user (e.g., browser), and the third execution screen may be a home screen.

Further, at least one of a specific execution screen, and a state conversion of the flexible display unit 151 for displaying the specific execution screen may be changed by a user. That is, a type of output information, and an output position on the flexible display unit 151 may be variously changed according to a user's selection.

As aforementioned, in the portable electronic device of the present invention, when the flexible display unit 151 has been folded based on a plurality of bending areas, different execution screens are output to the flexible display unit 151 according to a region where a bent state is released. That is, when a left portion and a right portion of the flexible display unit 151 have been folded, different execution screens may be displayed according to when the left portion is unfolded by a user's left hand, when the right portion is unfolded by a user's right hand, and when both of the left portion and the right portion are unfolded by a user's two hands. A user can execute different functions or use different execution screens, using structural characteristics of a dual foldable display. Thus, a user's convenience can be enhanced.

In the present invention, when a region of the flexible display unit 151 has been folded, screen information may be displayed on another region different from the region. The controller 180 can control information output to the flexible display unit 151, based on a state conversion of the region.

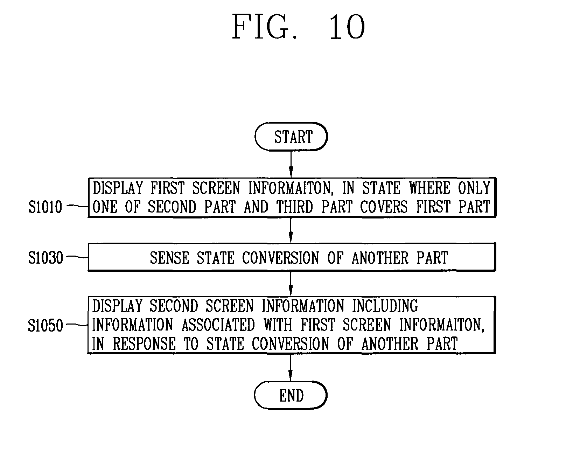

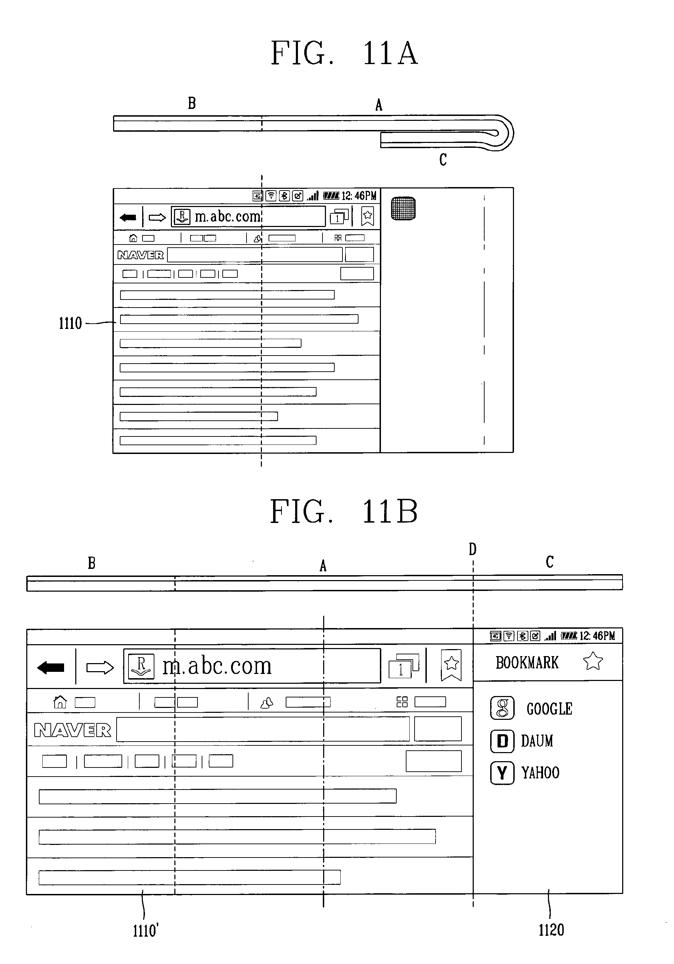

FIG. 10 is a flowchart illustrating a method for controlling output information according to a state conversion of a display unit, when screen information has been displayed on the flexible display unit of a portable electronic device according to an embodiment of the present invention. FIGS. 11A and 11B are conceptual views illustrating the control method of FIG. 10.

In the portable electronic device of the present invention, the controller 180 outputs first screen information on the flexible display unit 151 (S1010). When only one of the second part and the third part aforementioned in FIG. 3A has covered the first part, the first screen information may be displayed on one region of the flexible display unit 151 including said one part.

The first screen information output to the flexible display unit 151 may be an execution screen of an application, an execution screen of a web page, a home screen, and a menu screen. The first screen information may include at least one of a text, an image (including an icon), a flash and a moving image.

As an external force is applied onto the flexible display unit 151 when the first screen information has been displayed on one region of the flexible display unit 151, a state conversion of said another bent region is detected (S1030). The state conversion of said another bent region means conversion of a state to cover the first part, into a state not to cover the first part. That is, the state conversion of said another bent region means conversion of said another bent region into a bent state or a flat state from a folded state.

Next, if a state conversion of said another bent region is sensed, the controller 180 controls the flexible display unit 151 so that second screen information, including information related to the first screen information output to the flexible display unit 151, can be output (S1050).

For instance, as shown in FIG. 11A, when the second part (B) does not cover the first part (A) whereas the third part (C) covers the first part (A), first screen information 1110 corresponding to a web site may be displayed on the flexible display unit 151. As shown in FIG. 11B, if the flexible display unit 151 is converted into when the third part (C) does not cover the first part (A), the controller 180 can receive a control signal with respect to the state conversion, from the sensing unit 140.

As shown in FIG. 11B, the controller 180 can control the flexible display unit 151 so that second screen information 1120 including information related to the first screen information 1110 can be displayed on one region of the flexible display unit 151 in response to a state conversion of the flexible display unit 151, the one region distinguished from another region by a reference axis (D). The virtual reference axis (D), an axis for distinguishing the first part (A) and the third part (C) from each other, may correspond to a second bending area.

The second screen information 1120 including information related to the first screen information 1110 may be an execution screen of an application, an execution screen of a web page, and a display screen of search results. For instance, as shown in FIG. 11B, if the first screen information is a web page screen, the second screen information may include information related to the first screen information, e.g., bookmark items for converting the web page screen into another web page. In this instance, each of the bookmark items may include a URL address corresponding to another web page rather than a web page displayed on the first screen information.

That is, the second screen information is information including information related to the first screen information. The controller 180 can determine information to be displayed as the second screen information, according to a type of the first screen information.

A type of the second screen information to be displayed in correspondence to the first screen information may be pre-matched with the first screen information, in the memory 160. For instance, if the first screen information is a search screen for searching information, the second screen information may be a search screen of a second search site different from a first search site corresponding to the first screen information. As another example, if the first screen information is a mail sending screen corresponding to a mail application, the second screen information may include a plurality of data items (or objects, thumbnail images, etc.) which can be attached onto the mail sending screen. As still another example, if the first screen information is a chatting screen corresponding to a message application for receiving or sending an instant message, the second screen information may include chatting partner items (or objects) for performing chatting using the message application.

The second screen information may be an execution screen of a most-recently used application (In this instance, an application corresponding to the first screen information is excluded). Alternatively, the second screen information may include icons or thumbnail images of recently used applications.

As aforementioned, in the portable electronic device of the present invention, various information may be displayed on the second screen information according to a type of the first screen information. In the portable electronic device of the present invention, various information may be displayed on the second screen information according to a type of the first screen information, in a manner rather than the aforementioned manners.

If a region of the flexible display unit 151 where the first screen information 1110 (refer to FIG. 11A) has been displayed is enlarged, when different execution screens have been displayed on the flexible display unit 151, the controller 180 can change a display size of the first screen information 1110' as shown in FIG. 11B in correspondence to the enlarged region. When a flat state of the flexible display unit 151 is restored to the original state (bent state) (refer to FIG. 11A), the controller 180 can control the flexible display unit 151 so that a display state of the second screen information 1120 can be terminated.

Hereinafter, a method for changing the first and second screen information using a touch input applied to the flexible display unit 151 will be explained in more detail with reference to the attached drawings.

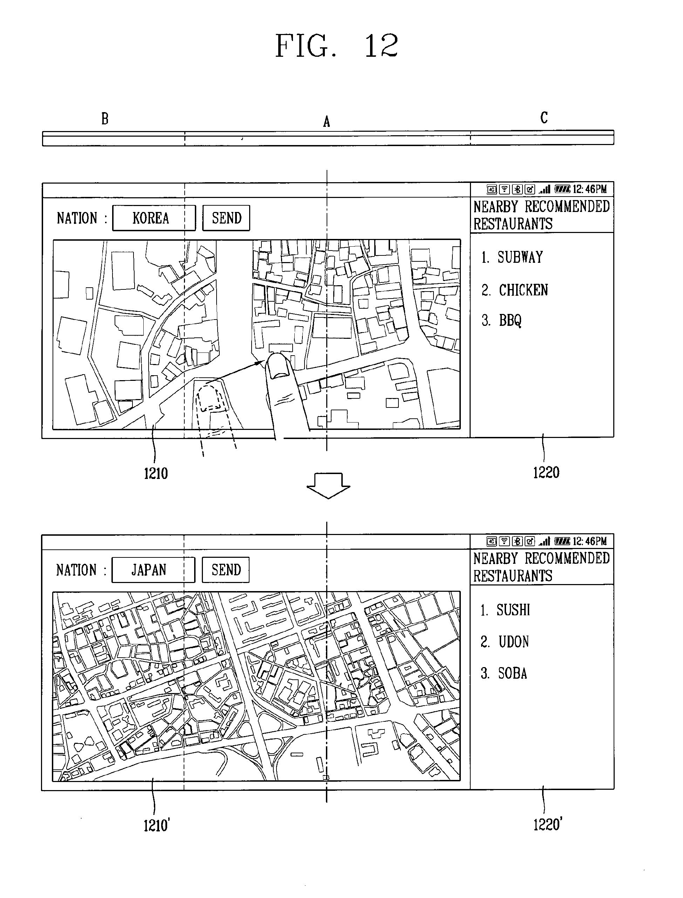

FIG. 12 is a conceptual view illustrating a method for changing displayed information in a portable electronic device according to an embodiment of the present invention. So far, a method for outputting the first screen information 1110 and the second screen information 1120 on different regions of the flexible display unit 151 based on a state conversion of the flexible display unit 151 has been explained.

In the portable electronic device of the present invention, when content of first screen information 1210 (refer to FIG. 12) is changed based on a user's touch input applied to the first screen information 1210, the controller 180 can change content of second screen information 1220 so that information corresponding to the changed content can be displayed on the second screen information 1220.

For instance, as shown in FIG. 12, the first screen information 1210 and the second screen information 1220 may be displayed on different regions of the flexible display unit 151, based on a state conversion of the flexible display unit 151. When the first screen information 1210 including map information corresponding to an execution screen of a map application is displayed, the second screen information 1220 including a plurality of items (or objects) corresponding to nearby recommended restaurants located at an area corresponding to the map information may be displayed.

Then, if a central position on the map information is moved by a touch input applied to the first screen information 1210, map information different from the first screen information 1210 partially or wholly (first screen information 1210') may be displayed instead of the first screen information 1210.

When the first screen information 1210 is changed into another screen information 1210' (1210→1210') based on the touch input, the controller 180 can change at least part of the second screen information so that the second screen information 1220 can include information related to the changed first screen information 1210' (1220→1220'). Thus, the second screen information 1220' may include items (or objects) different from those of the second screen information 1220 partially or wholly.

A type of the second screen information may be variable according to whether or not a touch input has been applied to a region where the first screen information is displayed when a state of the flexible display unit 151 is converted.

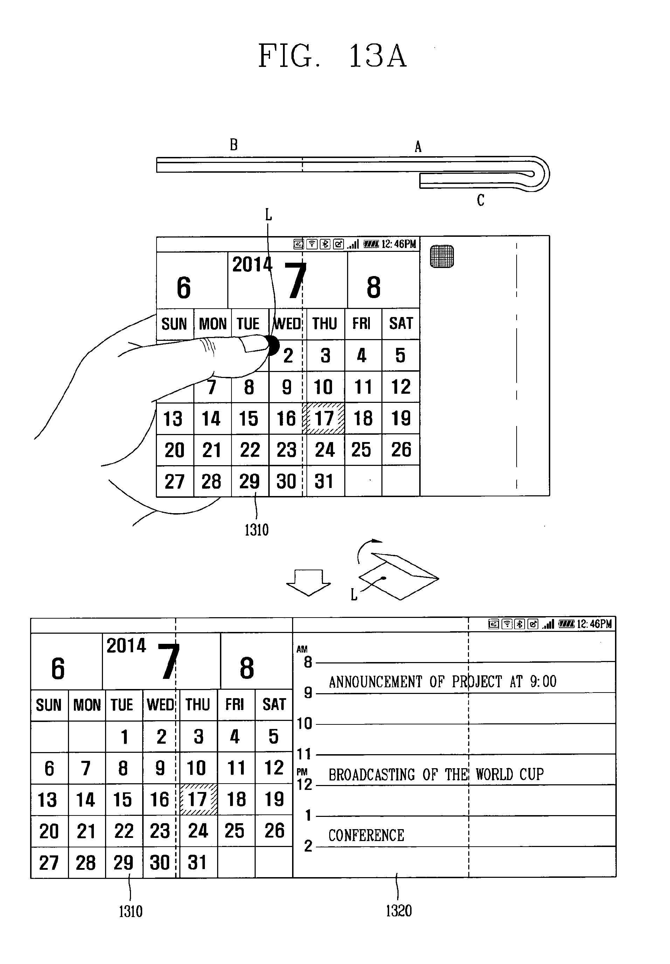

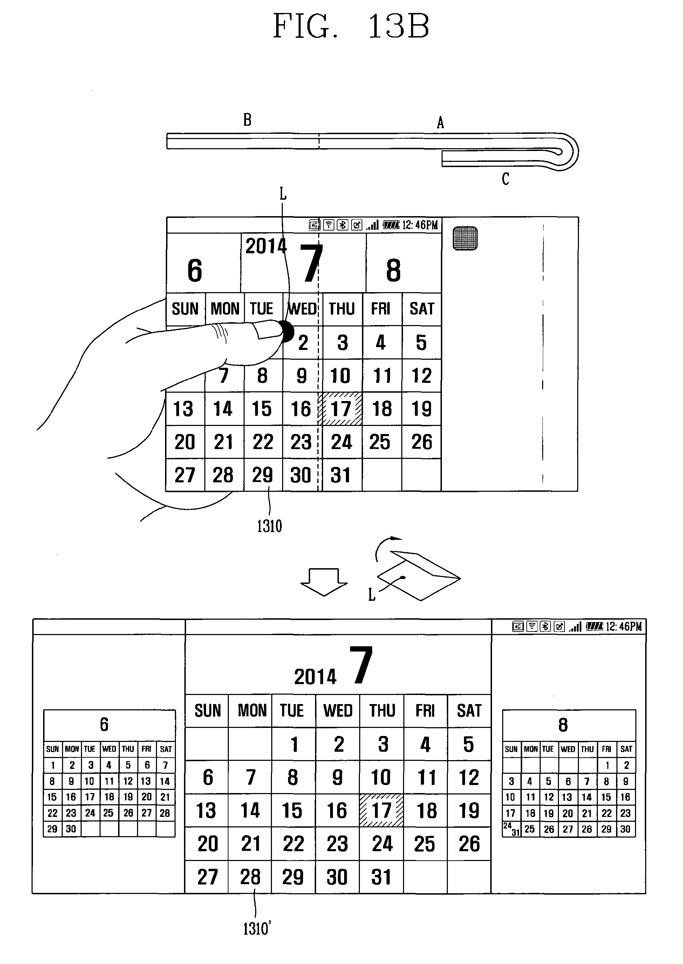

FIGS. 13A and 13B are conceptual views illustrating a method for changing a type of screen information to be output according to a touch input, in a portable electronic device according to an embodiment of the present invention. As aforementioned with reference to FIGS. 9D and 9E, when the flexible display unit 151 is converted from a first open state to a third open state, or from a second open state to a third open state, the controller 180 can display the first execution screen 910 corresponding to a state conversion of the second part (B), and the second execution screen 920 corresponding to a state conversion of the third part (C), on different regions.

In the portable electronic device of the present invention, the controller 180 can change a type of the second screen information, according to whether or not a touch input has been applied to a region where the first screen information is displayed when a state of the flexible display unit 151 is converted. The touch input means a long-touch input maintained for a reference time without being released.

For instance, as shown in FIG .13A, a state conversion of the flexible display unit 151 may be detected while a long-touch input (L) is applied to a region where first screen information 1310 is displayed. That is, part of the folded flexible display unit 151 may be unfolded while the long-touch input (L) is detected. In this instance, the controller 180 can display not only the first screen information 1310 but also second screen information 1320 associated with the first screen information 1310, on different regions of the flexible display unit 151, based on the method aforementioned with reference to FIG. 10.

When a calendar is displayed as the first screen information 1310, the second screen information 1320 may include detailed information on a schedule with respect to a selected date (e.g., July 7, 2014). If a long-touch input is not detected while the flexible display unit 151 has a state conversion, the controller 180 can display a previously-displayed execution screen and a preset execution screen corresponding to the state conversion, on different regions. In this instance, the execution screens may have no relation to each other.

As another example, as shown in FIG. 13B, the controller 180 can display the first screen information 1310 on an entire region of the flexible display unit 151, in response to a state conversion detected while a long-touch input (L) is applied to a region where the first screen information 1310 is displayed. As a display region is changed, the first screen information may include new information, or a position and a size of a text and/or an image included in the first screen information may be changed (1310→1310'). This is a principle that a piece of screen information is differently displayed in a horizontal mode and a vertical mode.

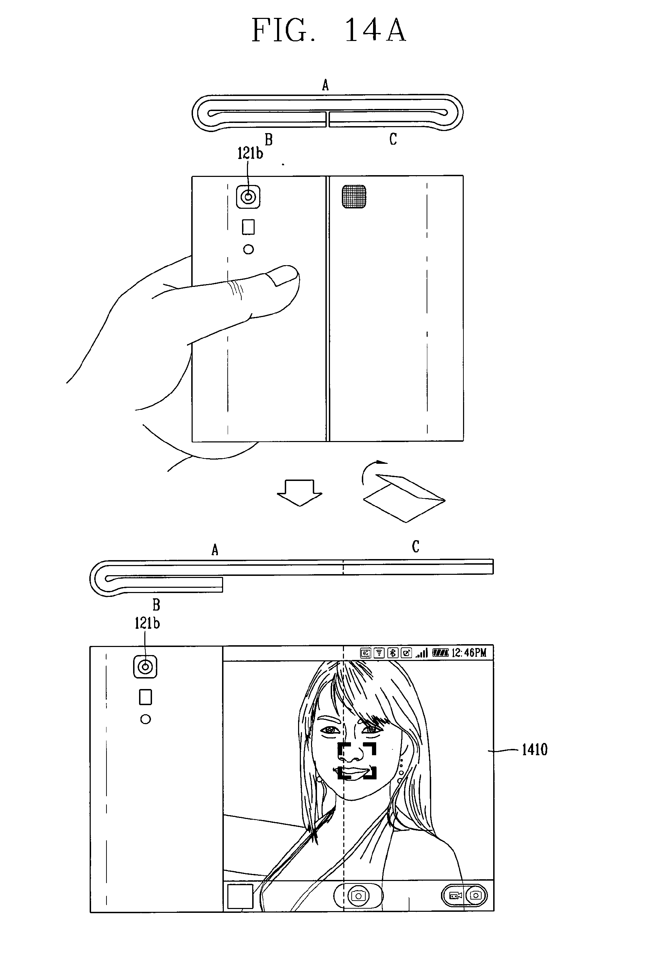

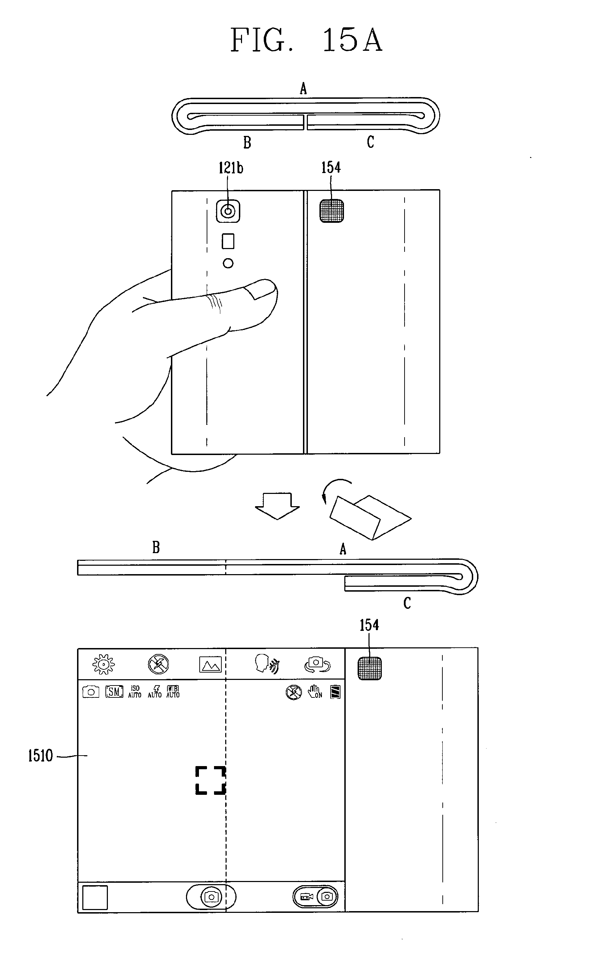

Hereinafter, will be explained an embodiment where a camera-related function is executed and a preview screen is displayed when a closed state is converted into one of first to third open states. FIGS. 14A to 14C are conceptual views illustrating an embodiment to display a preview screen when a closed state is converted into a second open state. FIGS. 15A to 15D are conceptual views illustrating an embodiment to display a preview screen when a closed state is converted into a first open state.

As aforementioned with reference to FIG. 2B, the rear camera 121b may be disposed on a rear surface of the body of the portable electronic device. More specifically, the flexible display unit 151 is disposed on one surface (front surface) of the body, and the rear camera 121b is disposed at a position on another surface (rear surface) of the body.

The rear camera 121b disposed toward a rear direction may be configured to be toward a front direction by bending of the portable electronic device. For instance, as shown in FIG. 14A, the rear camera 121b may be disposed so as to be toward a front direction when the second part (B) covers the first part (A), but toward a rear direction when the second part (B) does not cover the first part (A). Under such configuration, the controller 180 can control the flexible display unit 151 to display different screen information according to a state conversion of the flexible display unit 151.

The controller 180 can sense a preset gesture for activation of the rear camera 121b. For instance, the preset gesture may be a user's motion to release a grasping state on the portable electronic device which is in a closed state, or a motion to shake the portable electronic device in a grasping state. In this instance, the controller 180 can sense the preset gesture by sensing that an external force more than a preset value disappears after being applied to the portable electronic device for a predetermined time. Alternatively, the controller 180 can sense the preset gesture by sensing, using the sensing unit 140, that the body of the portable electronic device is bent based on a new bending area rather than the first and second bending areas.

The controller 180 can activate the rear camera 121b, in response to sensing of the preset gesture. If a state conversion occurs on the portable electronic device which is in a closed state, the controller 180 can receive a preview screen from the activated rear camera 121b, activate a partial or entire region of the flexible display unit 151, and display the received preview screen on the partial or entire region of the flexible display unit 151.

For instance, as shown in FIG. 14A, if a closed state is converted into a second open state where the third part (C) does not cover the first part (A), the controller 180 activates regions of the flexible display unit 151, and displays a received preview screen 1410. In this instance, the activated regions include the third part (C), and a region of the first part (A) covered by the third part (C).

In this instance, the controller 180 executes a self capturing mode optimized to perform a self camera capturing, since the rear camera 121b is toward a front direction. For instance, the controller 180 can set an ISO optimized to a self camera after searching, and may automatically control an aperture of a camera lens, etc. That is, the controller 180 changes a setting value related to a camera, into values corresponding to a self capturing mode. Once the self capturing mode is executed, one or more graphic objects to execute a function related to the self capturing mode may be displayed on the preview screen 1410.

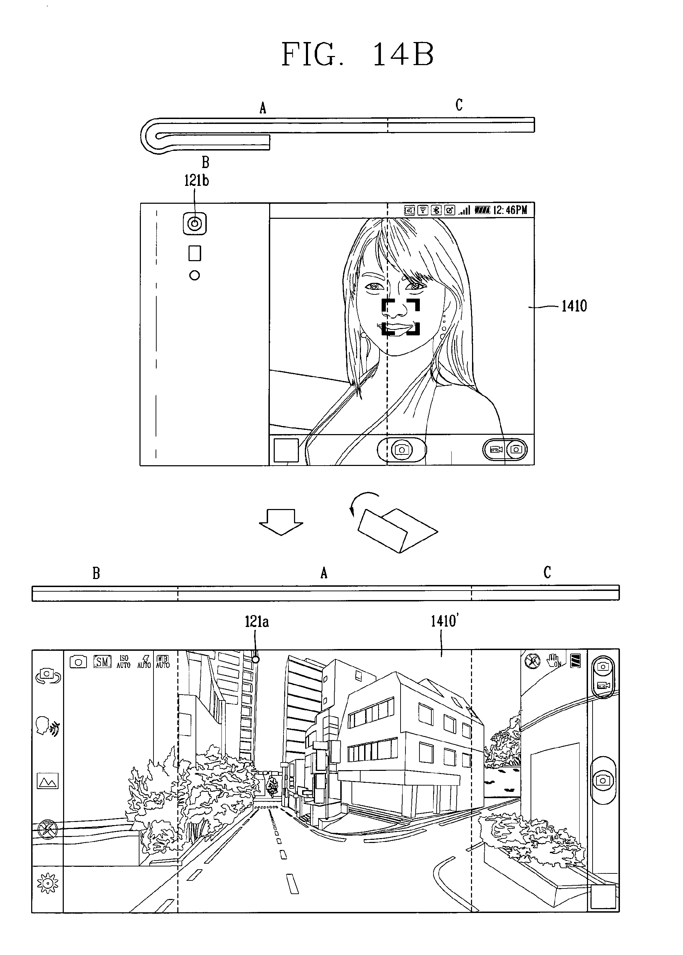

In a second open state (i.e., when a capturing mode optimized to perform self camera capturing has been executed), a state conversion to a third open state may be sensed. For instance, as shown in FIG. 14B, when the preview screen 1410 has been displayed, a covered state of the first part (A) by the second part (B) may be converted into a non-covered state. As a result, the rear camera 121b, which has been toward a front direction, is toward a rear direction.

In this instance, the controller 180 displays a preview screen 1410' on an entire region of the flexible display unit 151, and executes a landscape capturing mode optimized to perform landscape capturing. That is, the controller 180 can change a setting value related to a camera, into values corresponding to a landscape capturing mode. And the controller 180 can display one or more graphic objects to execute a function related to the landscape capturing mode, on the preview screen 1410'.

A user may execute a self capturing mode or a landscape capturing mode, by folding or unfolding part of the body where the camera has been disposed. That is, a user-friendly interface may be provided. An opening may be formed at part of the flexible display unit 151, and a front camera 121a (refer to FIG .3A) may be disposed at the opening. Alternatively, an opening may be formed at part of a front surface of the case, and the front camera 121a may be disposed at the opening.

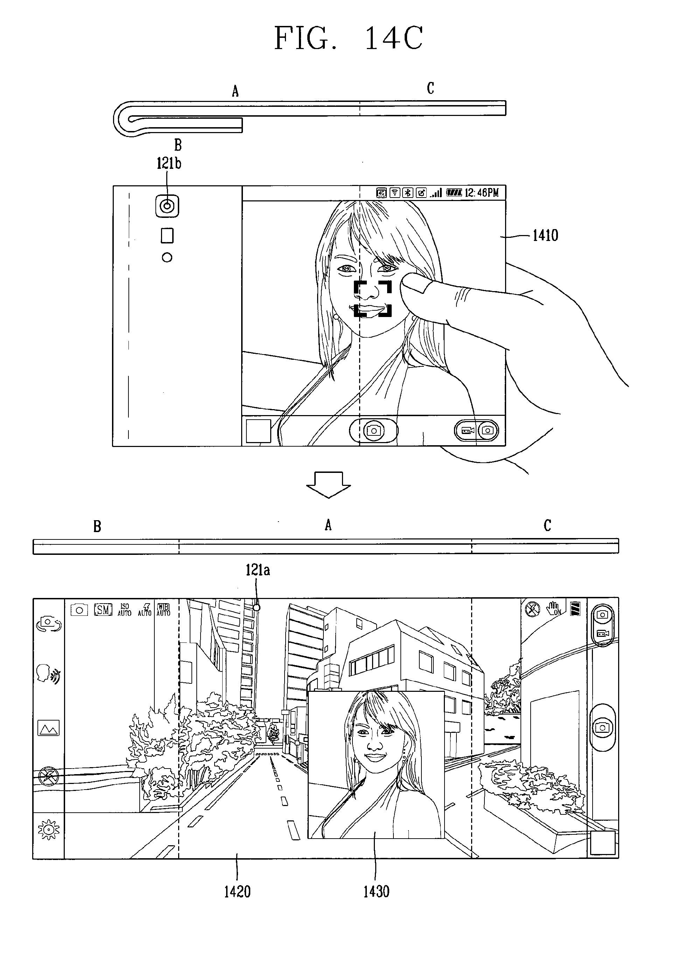

As shown in FIG. 14C, the front camera 121a may not be exposed to the outside, when the second part (B) covers the first part (A). That is, the front camera 121a cannot perform a capturing function because it is covered by the second part (B). However, if a covered state of the first part (A) by the second part (B) is converted into a non-covered state, the front camera 121a is exposed to the outside to be able to perform a capturing function.

As the rear camera 121b is formed toward a front direction, the preview screen 1410 in a self capturing mode is displayed on the flexible display unit 151. The controller 180 can sense a state conversion from a second open state to a third open state. That is, when the preview screen captured by the rear camera 121b has been displayed, the controller 180 can sense a state conversion from a second open state to a third open state.

The controller 180 can determine whether to execute a dual capturing mode or not, according to whether or not a touch input has been applied to the flexible display unit 151 when a state conversion of the flexible display unit 151 occurs. The touch input means a long-touch input maintained for a reference time without being released. The dual capturing mode means a mode where both a front image received from the front camera 121a and a rear image received from the rear camera 121b are displayed on the flexible display unit 151 in an activated state of both the front camera 121a and the rear camera 121b.

More specifically, if a state conversion is detected while a long-touch input is being applied to the flexible display unit 151, the controller 180 executes a dual capturing mod. On the contrary, if a state conversion is detected while a long-touch input has not been applied to the flexible display unit 151, a landscape capturing mode is executed as aforementioned with reference to FIG. 14B, whereas a dual capturing mode is not executed. Thus, a user can easily execute a dual capturing mode.

For instance, as shown in FIG. 14C, a state conversion may be sensed while a long-touch input (L) is being applied to a region where a rear preview screen 1420 is displayed. That is, while a long-touch input (L) is being sensed, part of the flexible display unit 151 which has been in a folded state may be unfolded. The controller 180 activates the front camera 121a, and displays a front preview screen 1430 captured by the front camera 121a and a rear preview screen 1420 captured by the rear camera 121b, on the flexible display unit 151. For instance, the controller 180 can display the rear preview screen 1420 on an entire region of the flexible display unit 151, and may display the front preview screen 1430 on the rear preview screen 1420. Alternatively, the rear preview screen 1420 and the front preview screen 1430 may be displayed on different regions.

A mode where both a front preview screen received by the front camera 121a and a rear preview screen received by the rear camera 121b are displayed on the flexible display unit 151 is called a 'dual capturing mode'. If a capturing command is input in such dual capturing mode, the front camera and the rear camera simultaneously capture images. Then images captured by the front camera and the rear camera (front and rear images) may be stored as separate files, or may be synthesized to be stored as a single file.

The dual capturing mode includes a dual camera mode for capturing still images (photos), and a dual recording mode for capturing moving images. The dual camera mode and the dual recording mode are similar to each other, in that a front preview screen and a rear preview screen are simultaneously displayed. However, they are different from each other in that, when a capturing command is input, still image capturing is performed in the dual camera mode whereas moving image capturing is performed in the dual recording mode. If a user's gesture to fold and unfold the flexible display unit 151 is detected within a predetermined time in a dual camera mode, the controller 180 can convert the dual camera mode into a dual recording mode.

More specifically, if a state conversion from a third open state to a closed state is detected within a predetermined time, or if a state conversion from a closed state to a third open state is detected within a predetermined time, the controller 180 converts a dual camera mode into a dual recording mode. Further, if a user's gesture to fold and unfold the flexible display unit 151 is detected within a predetermined time in a dual recording mode, the controller 180 can convert the dual recording mode into a dual recording mode. When a front preview screen is displayed on a rear preview screen, a position of the front preview screen may be changed based on a drag input applied to the front preview screen.

As shown in FIG. 15A, when a closed state is converted into a first open state where the second part (B) does not cover the first part (A), the controller 180 activates regions of the flexible display unit 151, and displays a received preview screen 1510. The activated regions include the second part (B), and a region of the first part (A) covered by the second part (B). In this instance, the controller 180 automatically executes a landscape capturing mode, since the rear camera 121b is toward a rear direction.

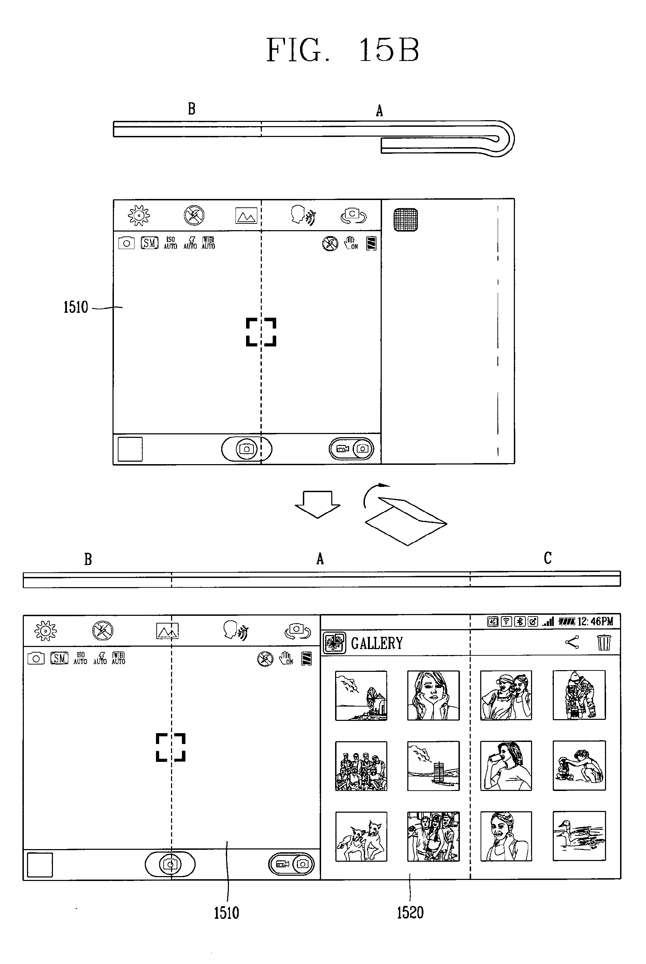

In a first open state (i.e., in a landscape capturing mode optimized to perform landscape capturing), a state conversion to a third open state may be sensed. For instance, as shown in FIG. 15B, when a preview screen 1510 has been displayed, a covered state of the first part (A) by the third part (C) may be converted into a non-covered state.

In this instance, the controller 180 can control the flexible display unit 151 to display the preview screen 1510 and a gallery screen 1520, in response to the state conversion. More specifically, the controller 180 can divide an entire region of the flexible display unit 151 into a first region for displaying the preview screen 1510, and a second region for displaying the gallery screen 1520, in response to the state conversion. For instance, the first region may include the second part (B), and a portion of the first part (A) covered by the second part (B). The second region may include the third part (C), and a portion of the first part (A) covered by the third part (C). The gallery screen means screen information composed of a plurality of thumbnail images corresponding to video data stored in the memory 160.

If a capturing command is applied to the preview screen, captured images may be stored in the memory, and thumbnail images of the captured images may be real time displayed on the gallery screen in an additional manner. Further, when both the preview screen and the gallery screen have been displayed, the controller 180 can execute at least one function based on a user's input applied to the gallery screen. The at least one function includes a scroll function, an enlargement/contraction function to enlarge or contract thumbnail images, a sending function to select at least one image and to send the selected image to outside, and a deletion function. That is, the preview screen and the gallery screen may operate individually by being displayed on separate regions. Under such configuration, a user can perform capturing using the rear camera 121b, and can view images stored in the memory 160.

When the preview screen and the gallery screen have been displayed on different regions of the flexible display unit 151 (e.g., a first region and a second region), a touch input may be applied in a consecutively-moving manner from one of the first region and the second region to another. The controller 180 can control one of the preview screen and the gallery screen not to be displayed. That is, the controller 180 can terminate the display of one of the preview screen and the gallery screen, and may display another of the preview screen and the gallery screen, on an entire region of the flexible display unit 151.

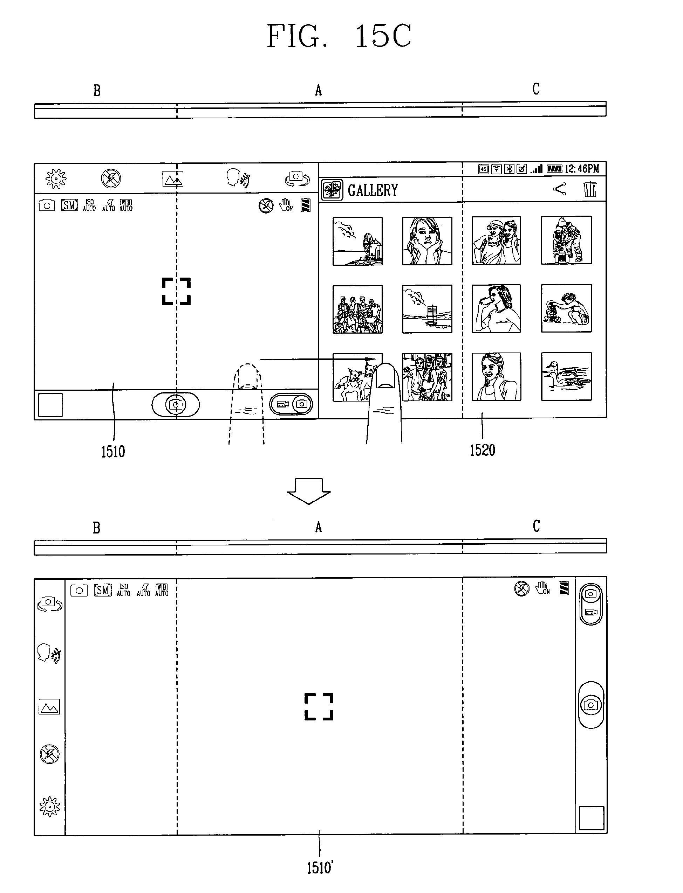

As an example, as shown in FIG. 15C, if a touch input, applied to the first region where the preview screen 1510 has been displayed, consecutively moves to be released on the second region where the gallery screen 1520 has been displayed, the controller 180 can control the gallery screen 1520 not to be displayed on the flexible display unit 151, and may display a preview screen 1510' on an entire region of the flexible display unit 151.

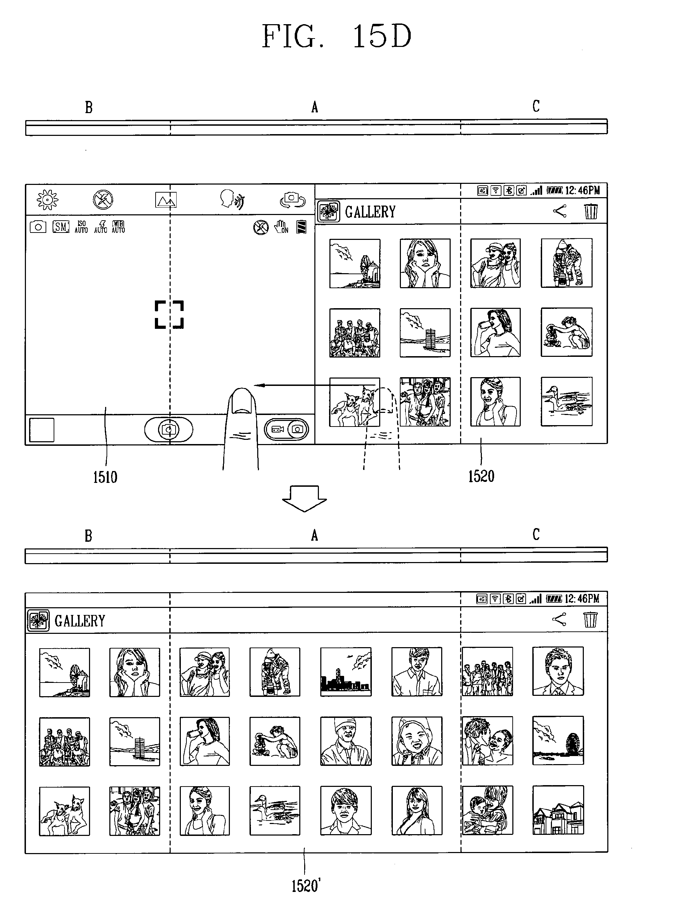

As another example, as shown in FIG. 15D, if a touch input, applied to the second region where the gallery screen 1520 has been displayed, consecutively moves to be released on the first region where the preview screen 1510 has been displayed, the controller 180 can control the preview screen 1510 not to be displayed on the flexible display unit 151, and may display a gallery screen 1520' on an entire region of the flexible display unit 151.

When one of the second part and the third part does not cover the first part, an execution screen for executing one or more functions may be displayed on regions of the flexible display unit 151. The regions of the flexible display unit 151 include the one of the second part and the third part, and a region of the first part covered by the one. The one covering the first part may be converted into a state not covering the first part. In this instance, the controller 180 can differently control a type of information displayed on the flexible display unit 151, according to whether another of the second and third parts is the second part or the third part. That is, different screen information may be displayed on the flexible display unit 151 according to another of the second and third parts is the second part or the third part.

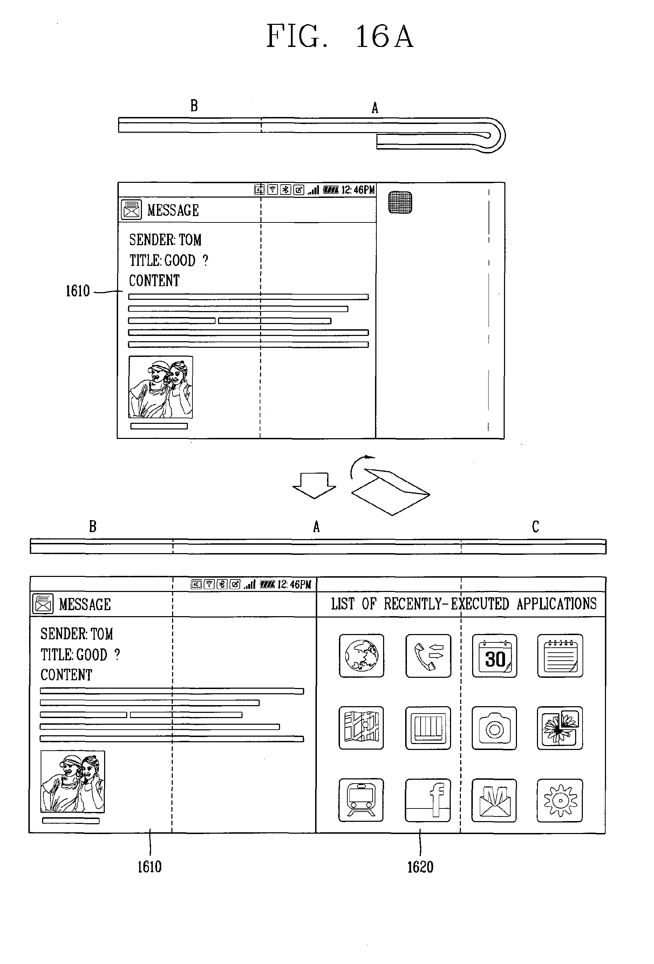

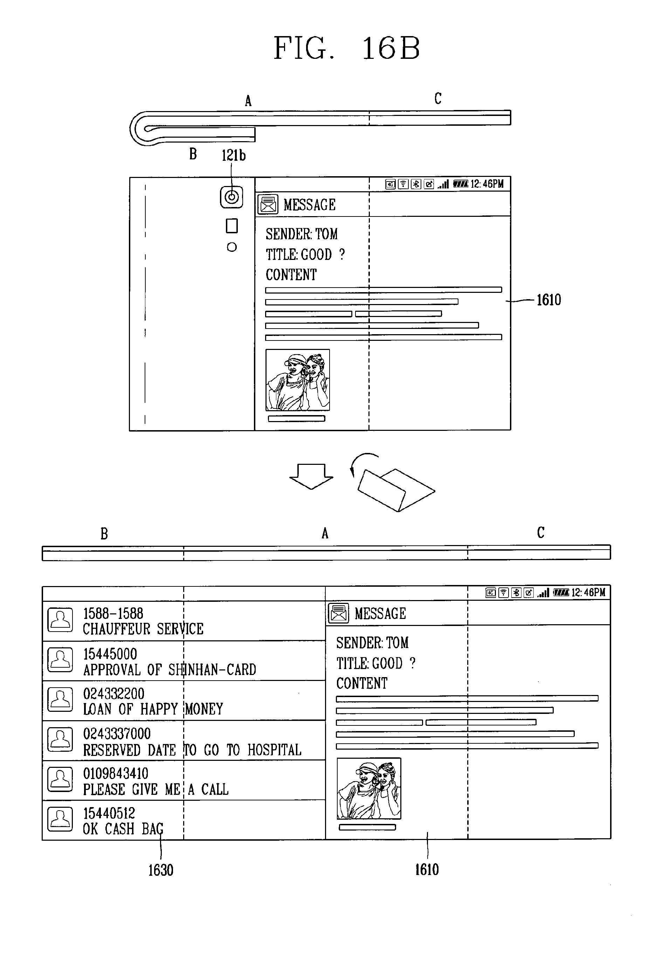

Hereinafter, will be explained an embodiment to display different screen information according to a first open state or a second open state, when one of the first open state and the second open state is converted into a third open state. FIGS. 16A and 16B are conceptual views illustrating an embodiment to display different screen information according to a first open state or a second open state, when one of the first open state and the second open state is converted into a third open state.

FIG. 16A illustrates a portable electronic device where a message viewing screen has been displayed in a first open state, the message viewing screen including detailed content of a received message. FIG. 16B illustrates a portable electronic device where the message viewing screen has been displayed in a second open state. It can be seen that the message viewing screen is displayed on a different region, according to a state of the portable electronic device (the first open state or the second open state). The message viewing screen is merely one example, which can be replaced by other execution screens.

As shown in FIG. 16A, if a first open state is converted into a third open state where the third part (C) which has covered the first part (A) does not cover the first part (A), the controller 180 can display an application list screen 1620 including a plurality of recently-executed application items, together with the message viewing screen 1610.

As shown in FIG. 16B, if a second open state is converted into a third open state where the second part (B) which has covered the first part (A) does not cover the first part (A), the controller 180 can display a previous screen which has been displayed right before the message viewing screen 1610 is displayed, together with the message viewing screen 1610. For instance, the previous screen of the message viewing screen 1610 may be a message list screen 1630 for displaying history of received messages in order of received time.

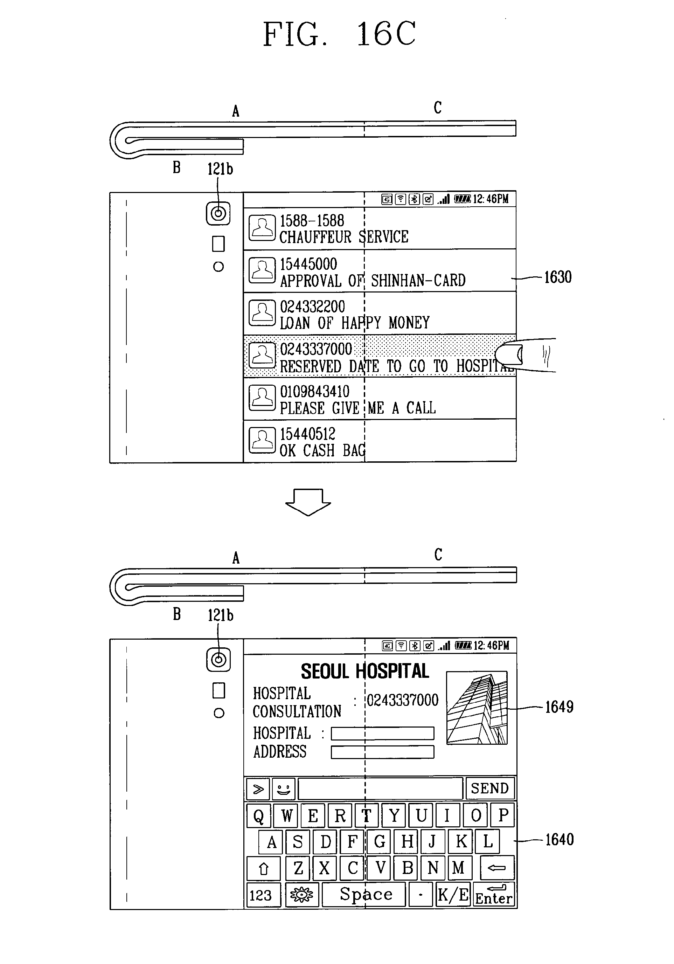

FIGS. 16C to 16E are conceptual views illustrating the embodiment of FIGS. 16A and 16B in more detail. Firstly, an execution screen may be displayed on a region of the flexible display unit 151 in a first open state or a second open state. More specifically, an execution screen is displayed on a first region in a first open state, whereas an execution screen is displayed on a second region in a second open state.

The execution screen may be variously modified according to a function to be executed. For instance, as shown in FIG. 16C, the controller 180 can display the message list screen 1630 on the second region, the message list screen for displaying messages received in a second open state in order of received time.

If one of the received messages is selected by a user, a detail viewing screen 1640 related to the selected one message may be displayed on the second region, instead of the message list screen 1630. The detail viewing screen 1640 may include a reply input window for writing a reply, a virtual keypad for inputting symbols, etc., to be input to the reply input window, information on a recipient, detailed content of a message, attached images and/or moving images included in a message, etc.

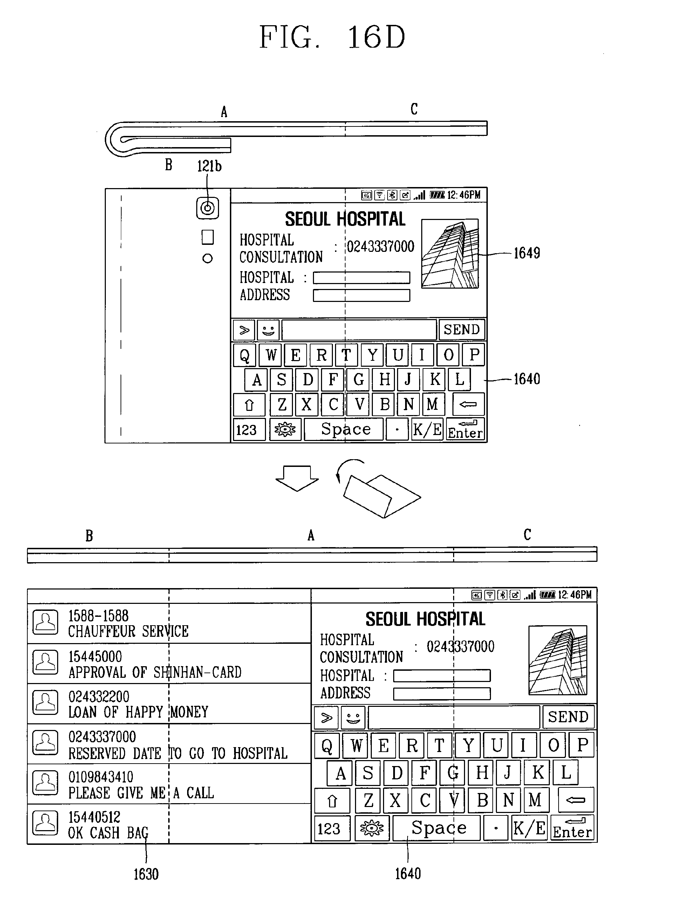

As shown in FIG. 16D, a second open state is converted into a third open state where the second part (B) which has covered the first part (A) does not cover the first part (A), the controller 180 can display a previous screen which has been displayed right before the detail viewing screen 1640 is displayed, on the first region. That is, the message list screen 1630 shown in FIG. 16C is displayed on the first region, and the detail viewing screen 1640 is displayed on the second region. Accordingly, a user can be provided with screen information which has been previously displayed, together with screen information being currently displayed, on the single flexible display unit 151.

When first screen information has been displayed on the first region and second screen information has been displayed on the second region, the controller 180 can sense that a user's input applied to one of the first and second regions is consecutively moved to be released from another region. In response to the user's input, the controller 180 can control the screen information displayed on said another region to disappear, and may display the screen information which has been displayed on said one region, on an entire region of the flexible display unit 151.

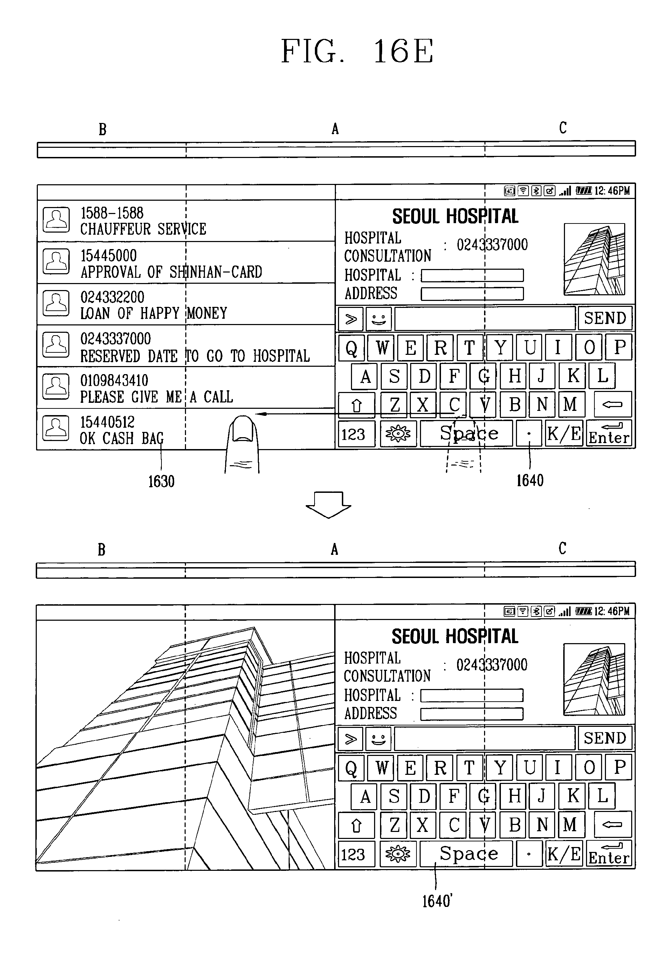

For instance, as shown in FIG. 16E, if a touch input, applied to the second region where the detail viewing screen 1640 has been displayed, is consecutively moved to be released from the first region where the message list screen 1630 has been displayed, the message list screen 1630 disappears from the flexible display unit 151, and a detail viewing screen 1640' is displayed on an entire region of the flexible display unit 151.

As a display region of the detail viewing screen is changed from the second region to the entire region of the flexible display unit 151, the detail viewing screen may be reconfigured to be displayed (1630→1630'). For instance, an attachment file included in a message may be displayed on the first region, in an enlarged manner.

In the portable electronic device of the present invention, when at least part of the flexible display unit 151 is bent to be restored to the original state, the controller may display different screen information based on the at least part. Hereinafter, will be explained a method for controlling information output to the flexible display unit 151 based on a state conversion that at least part of the flexible display unit 151 is bent to be restored to the original state.

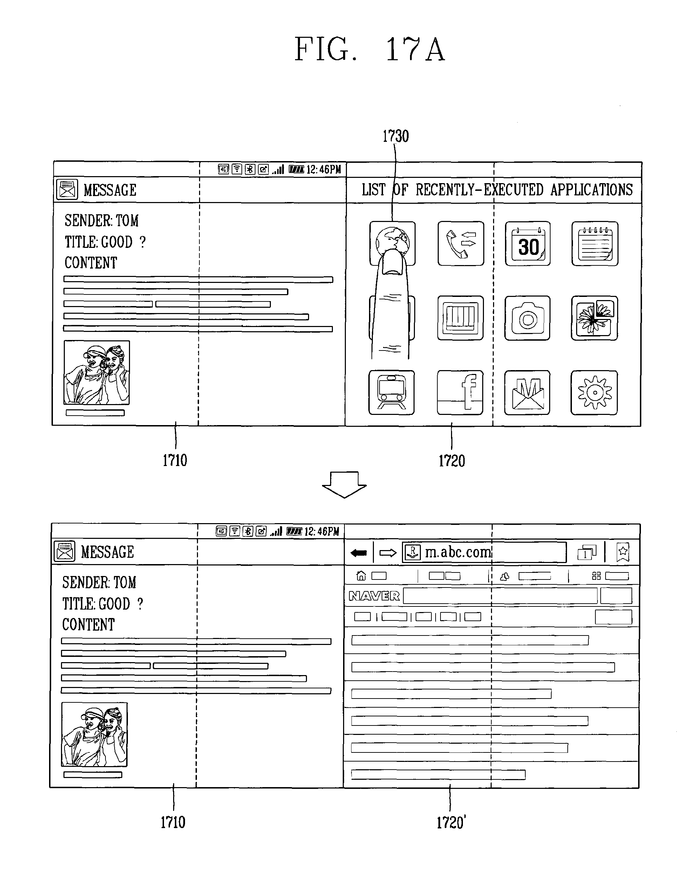

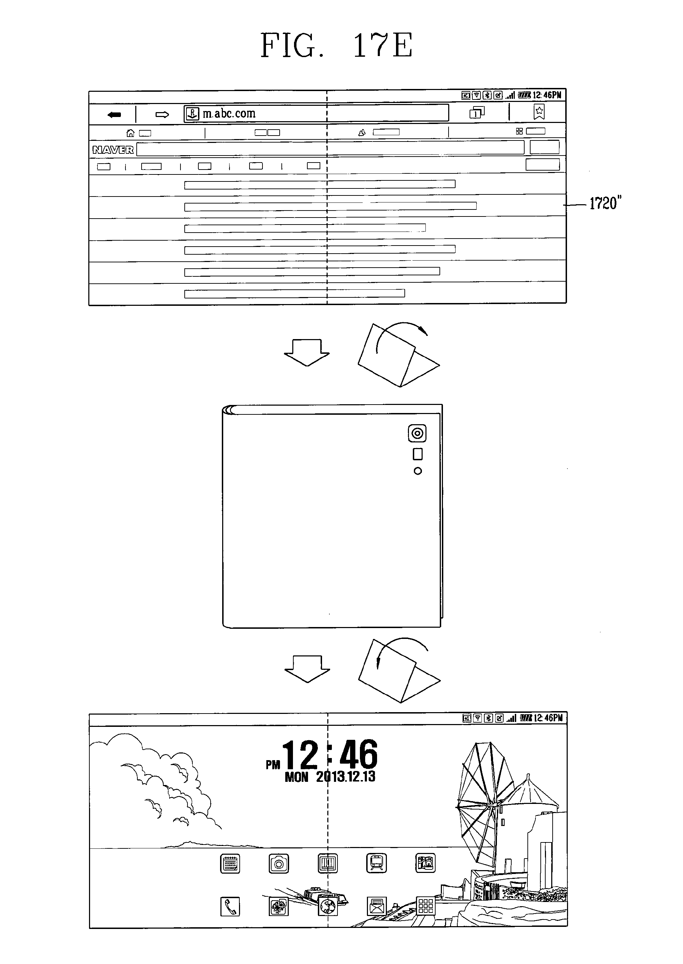

FIGS. 17A to 17E are conceptual views illustrating an embodiment to display different screen information, when at least part of the flexible display unit is bent to be restored to the original state. As aforementioned, the flexible display unit may be divided into a first region and a second region based on its state conversion, and different screen information may be displayed on the first region and the second region. More specifically, in response to a state conversion from one of a first open state and a second open state to a third open state, the controller 180 can display first screen information on the first region, and may display second screen information on the second region.

When first screen information has been displayed on an entire region of the flexible display unit 151, the controller 180 can display second screen information on the first screen information in an overlapped manner in the form of popped-up information. For convenience, it will be explained that a first execution screen and a second execution screen are displayed on the first region and the second region, respectively.

Referring to FIG. 17A, the controller 180 can control the flexible display unit 151 so that screen information displayed on the first region can operate differently from screen information displayed on the second region. When first screen information 1710 has been displayed on the first region and second screen information 1720 has been displayed on the second region, the first screen information and the second screen information may be individually updated, based on a user's input applied to at least one of the first and second regions.

For instance, if a touch is applied to an icon 1730 included in the second screen information 1720, the controller 180 can execute a function corresponding to the icon 1730, and may update the second screen information displayed on the second region into screen information corresponding to the executed function (1720→1720'). In this instance, only the second screen information is updated, whereas the first screen information to which a user's input has not been applied is not changed. The first region and the second region operate like separate regions.

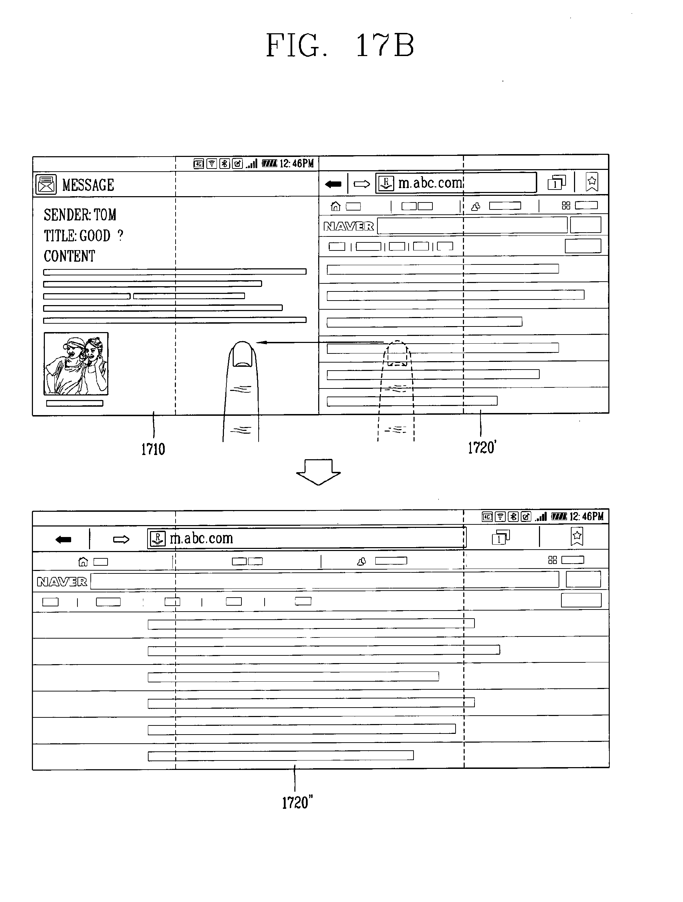

In response to a touch input consecutively-moving from one of the first and second regions to another, the controller 180 can control screen information displayed on said another region to disappear, and may display screen information output to the one region on an entire region of the flexible display unit 151. For instance, as shown in FIG. 17B, if a touch firstly-sensed on the second region where the second screen information 1720' has been displayed is consecutively-moved to thus be released from the first region where the first screen information 1710 has been displayed, the controller 180 can terminate the display of the first screen information 1710, and may display the second screen information on an entire region of the flexible display unit 151 (1720'→1720"). When displaying screen information which has been displayed on a region of the flexible display unit 151 into an entire region of the flexible display unit 151, the controller 180 can reconfigure the screen information. For instance, the controller 180 can enlarge content such as texts and/or images included in the screen information, or may add new visual information which has not been included in the screen information, to the screen information.

When specific screen information has been displayed on the flexible display unit 151, the controller 180 can sense, within a predetermined time, a gesture indicating that at least one bent part of the flexible display unit 151 is restored to the original state. Such gesture is called 'flap'. Upon detection of such flap, the controller 180 can reconfigure the specific screen information displayed on the flexible display unit 151, based on a position where the flap has been performed. More specifically, under an assumption that the specific screen information is first screen information, the controller 180 can display at least one of the first screen information which has been displayed right before the flap is performed, and second screen information preset to correspond to the flap.

In this instance, the controller 180 can sense a bending area generated by the flap, and may variously display at least one of the first and second screen information based on the sensed bending area. For instance, among an entire region of the flexible display unit, a region not covered by bending is defined as a first region, whereas a region covered by bending is defined as a second region. In this instance, first screen information may be displayed on the first region, and second screen information may be displayed on the second region. The bending area may be defined as a virtual line connecting points to each other, the points having a larger resistance value than a reference value among points where bending has been sensed by flap.

As another example, based on a bending area, a left side may be defined as a first region and a right side may be defined as a second region. For instance, upon detection of a first flap to fold the flexible display unit 151 in half and then unfold to the originals state, first screen information may be displayed on a left half region (1/2), and second screen information may be displayed on a right half region (1/2). When the second screen information has been displayed on the right half region, upon detection of a second flap to fold the second screen information in half and then unfold to the original state, the second screen information may be displayed on a right quarter region (1/4). In this instance, third screen information different from the second screen information may be displayed on a neighboring quarter region (1/4).

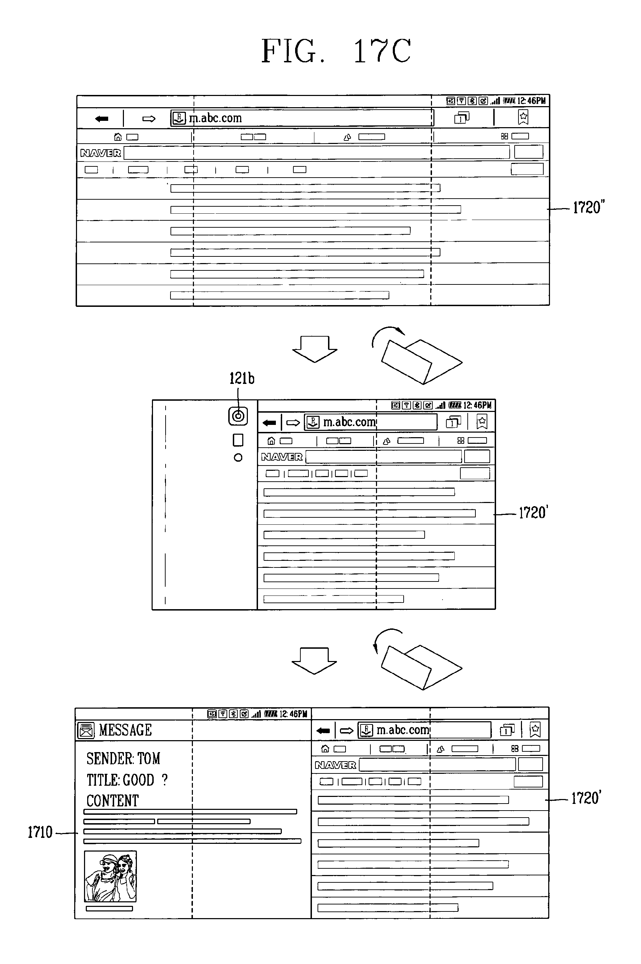

A type of the second screen information may be variable according to a flap-occurred position. That is, a type of the second screen information displayed on the flexible display unit 151 may be variable according to a position of a bending area generated by a flap. For instance, as shown in FIG. 17C, when a flap has occurred on the left side of the flexible display unit 151, the second screen information may be a previous screen which has been displayed right before the first screen information is displayed. That is, if a flap to fold the second part on the first part in a third open state and then unfold to the original state is detected within a predetermined time, the controller 180 can set a previous screen which has been displayed right before the first screen information is displayed, as the second screen information. And the controller 180 can display both the first screen information and the second screen information.

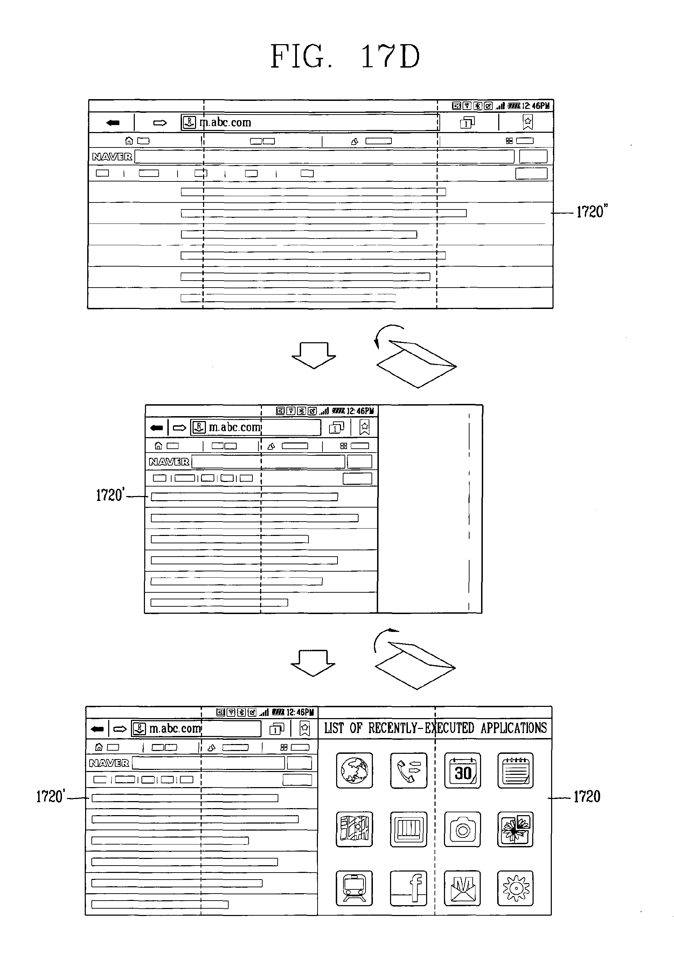

As another example, as shown in FIG. 17D, when a flap has occurred on the right side of the flexible display unit 151, the controller 180 can display an application list screen including a plurality of application items which have been recently executed, as second screen information. That is, if a flap to fold the third part on the first part in a third open state and then unfold to the original state is detected within a predetermined time, the controller 180 can display both the application list screen and the first screen information.

As still another example, when a flap has occurred on a central part of the flexible display unit 151, the controller 180 can terminate the display of the first screen information, and may display a home screen on an entire region of the flexible display unit 151. That is, if a flap to fold the second and third parts on the first part in a third open state and then unfold to the original state is detected within a predetermined time, the controller 180 can convert visual information output to the flexible display unit 151, into a home screen page.

A type of the second screen information displayed on the flexible display unit 151 may be variously changed by a user's selection, according to a flap-occurred position. More specifically, in the portable electronic device according to an embodiment of the present invention, at least one of a flap-occurred position, screen information to be displayed in correspondence to the flap-occurred position, and a display position of the screen information may be registered as a new flap operation by a user's selection. Thus, a user can set a flap-occurred position according to his or her style, edit a type of the second screen information to be displayed in correspondence to the set flap-occurred position, and edit a display position of the second screen information. As a result, a user's convenience can be enhanced.

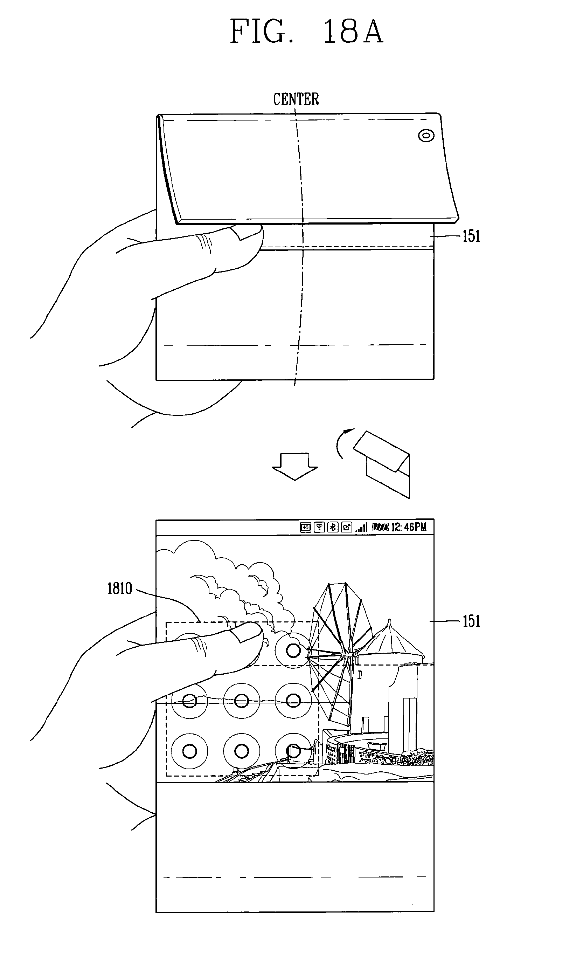

FIGS. 18A to 18D are conceptual views illustrating an embodiment where an execution mode is changed according to an unfolding type of at least one folded part of the flexible display unit. As aforementioned, the body of the portable electronic device may maintain one of a closed state, a first open state and a second open state, by a fixing member. The fixing member may release a fixed folded state so that said one state cannot be maintained, under control of the controller 180.

When a folded state of the portable electronic device is maintained by the fixing member, a user may release the folded state by applying a physical force to the portable electronic device. More specifically, as one part of the flexible display unit 151 is folded on another part thereof, other parts of the flexible display unit 151 may be folded on each other to generate a gap therebetween. A user may put his or her finger into the gap to lift the folded body toward one direction (e.g., at least one of a first bending area and a second bending area), thereby converting at least part of the folded body into a flat state. For instance, as shown in FIG. 18A, a user may put his or her thumb into a gap formed at a position where one end of the portable electronic device faces another end, and pushes the thumb toward a bending area. As a result, at least part of the folded body can be converted into a flat state or a bent state.

The controller 180 can sense the finger's movement using the touch sensor, and may sense conversion of the folded state into a flat state using the sensing unit 140. For instance, as shown in FIG. 18A, if the folded flexible display unit 151 is unfolded by a left finger when the portable electronic device is being held by a user's left hand, a touch consecutively-moving from one point is sensed on a left region based on the center of the flexible display unit 151.

In this instance, a user's input may be applied by the left hand grasping the portable electronic device. The controller 180 can execute a left hand mode so that a user's input using the left hand can be easily performed. The left hand mode means a mode where a graphic object configured to execute a specific function by a touch input is controlled so as to be displayed on a left region based on the center of the flexible display unit 151.

For instance, as shown in FIG. 18A, when a lock screen is displayed on the flexible display unit 151, a user may apply a preset type of touch to screen information for releasing a locked state. The preset type of touch may be a touch which forms a path from a first point to a second point. That is, the preset type of touch may be a touch which forms a pattern by the path.

If such touch is applied using the left thumb, the touch may be applied within a range where the left thumb is reachable (e.g., the left region of the flexible display unit). Once the left hand mode is executed, the controller 180 can display screen information for releasing a locked state, within a range where the left thumb is reachable. As a locked state is released, an execution screen for executing one or more functions may be displayed on the flexible display unit 151.

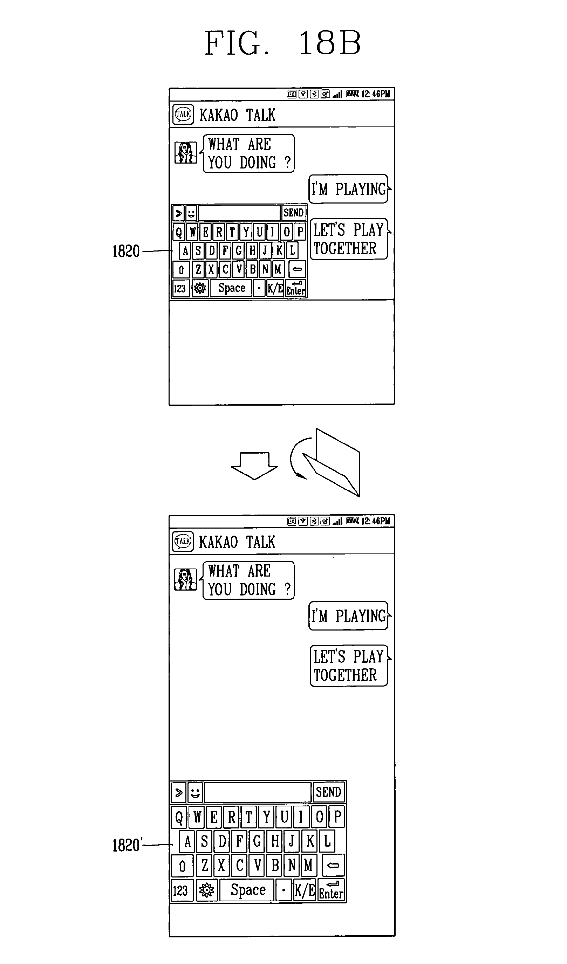

If an execution screen is displayed in a left hand mode, the controller 180 can display a graphic object for performing a specific function in response to a touch applied thereto, within a range where the left thumb is reachable. The graphic object includes not only an icon for executing an application, but also a virtual keypad for inputting characters, numbers or symbols. The virtual keypad includes a plurality of keys called 'soft keys'. If a touch is applied to one of the plurality of keys, a symbol corresponding to the touched key is displayed on the flexible display unit 151. When the virtual keypad is displayed in a left hand mode as shown in FIG. 18B, the controller 180 transforms the virtual keypad in correspondence to the left hand mode, and displays the transformed virtual keypad within a range 1820 where the left thumb is reachable.

The range 1820 where the left thumb is reachable may be differently set, according to a posture of the body sensed by the sensing unit 140, a folded region and an unfolded region among an entire region of the flexible display unit (or a region not to display an execution screen, and a region to display an execution screen). For instance, the range 1820 where the left thumb is reachable may be differently set, according to when the body is laid in a horizontal direction (landscape) based on a gravity direction, and when the body is laid in a vertical direction (portrait).

The posture of the body may be variable, in relation to a gravity direction, a rotation angle of the body, a rotation direction of the body, a rotation speed of the body, a rotation acceleration of the body, etc.

Referring to FIG .18B, if one folded part of the flexible display unit 151 is unfolded, an execution screen, which has been displayed on the flexible display unit 151 before the one part is unfolded, may be reconfigured to be displayed on an entire region of the flexible display unit 151. More specifically, texts and/or images included in an execution screen may be displayed in an enlarged manner, or at least part of information which has not been displayed due to a limited space of the flexible display unit 151 may be displayed in an added manner. In this instance, the range 1820 where the left thumb is reachable is reset, and a virtual keypad is displayed within the reset range 1820' where the left thumb is reachable.

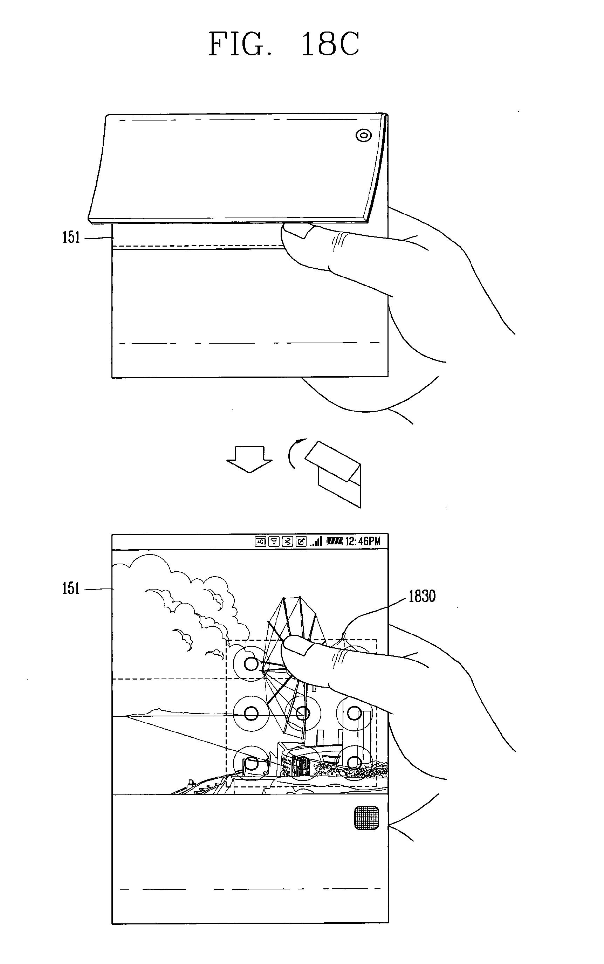

As shown in FIG. 18C, if the folded flexible display unit 151 is unfolded by a right finger when the portable electronic device is being held by a user's right hand, a consecutively-moving touch is sensed on a right region based on the center of the flexible display unit 151. In this instance, the controller 180 can execute a right hand mode. The right hand mode means a mode where a graphic object configured to execute a specific function by a touch input is controlled so as to be displayed on a right region based on the center of the flexible display unit 151. In the right hand mode, the graphic object is displayed within a range 1830 where the right thumb is touchable.

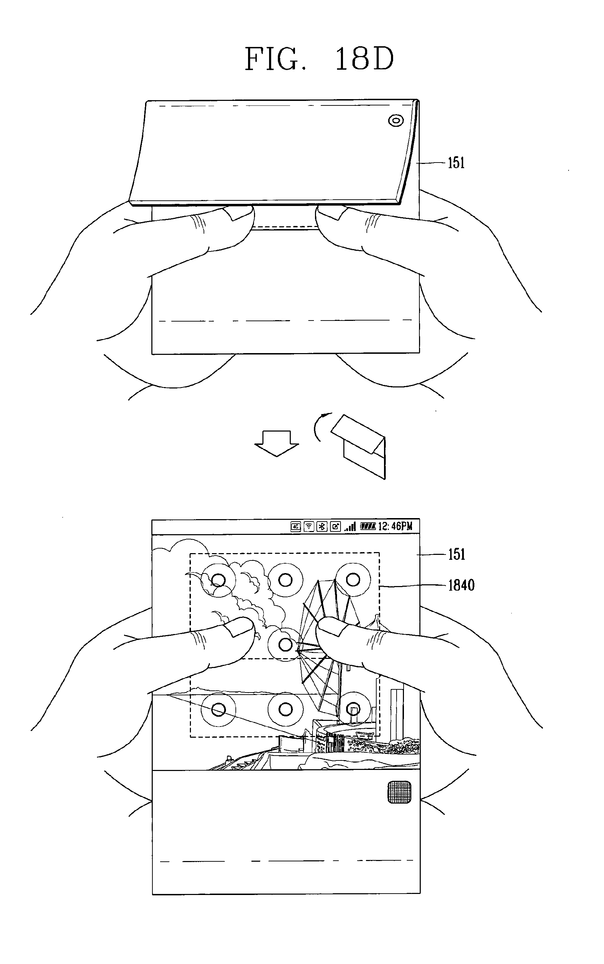

As shown in FIG. 18D, if a plurality of consecutively-moving touches are simultaneously sensed on right and left regions based on the center of the flexible display unit 151, the controller 180 operates in a basic mode. That is, the controller 180 does not execute a left hand mode or a right hand mode, but outputs screen information based on a state of the body (a landscape state or a portrait state).

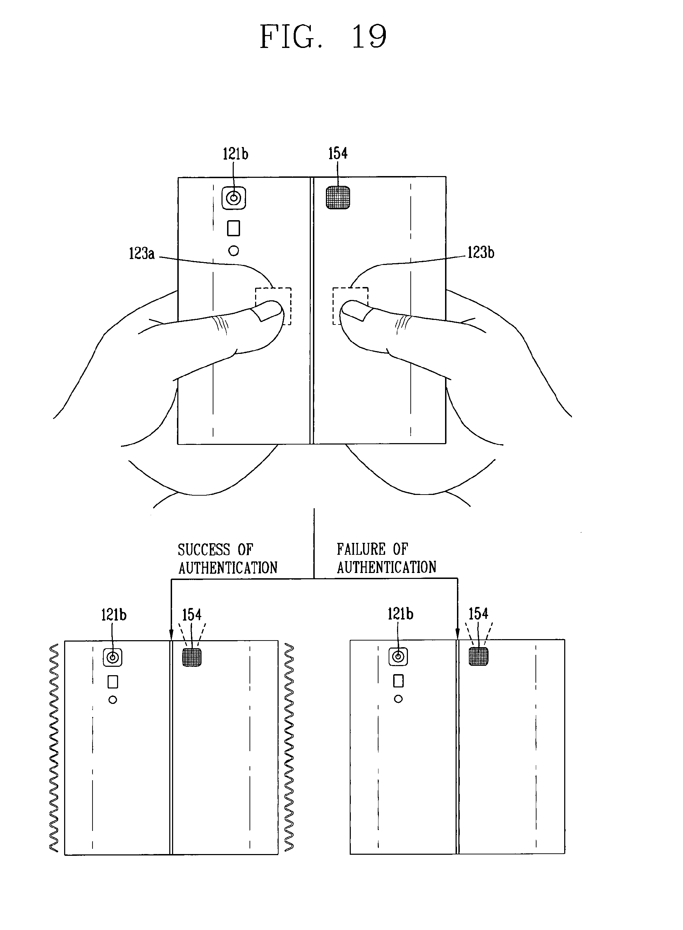

FIG. 19 is a conceptual view illustrating an example of a portable electronic device which receives, from a user, a release command for releasing a bent state. When a folded state of the portable electronic device has been fixed by a fixing member, the controller 180 can receive, from a user, a release command for releasing the folded state. More specifically, a user may input a release command for converting a covered state of the first part by at least one of the second and third parts, into a non-covered state of the first part.

In order to receive such release command, the portable electronic device of the present invention may be provided with at least one rear input unit 123. For instance, as shown in FIG. 19, rear input units 123a and 123b may be disposed at positions adjacent to a left end and a right end of the rear surface of the body. Thus, the rear input units 123a and 123b may be positioned on a rear surface of the body when the body is in a flat state, whereas the rear input units 123a and 123b may be positioned on a front surface of the body when the body is in folded state where the left end and the right end of the body face each other.

The rear input units may be implemented so that a touch input, a push input, and a combination thereof can be applied thereto. More specifically, the rear input units may include a button member exposed to the outside from a rear surface of the body, a first sensing unit disposed to overlap the button member and configured to sense a push input applied to the button member, and a sensing unit disposed to overlap the button member and configured to sense a touch input applied to the button member.

The second sensing unit may be activated by the push input. That is, whether to drive the second sensing unit or not may be determined by the push input. The second sensing unit can efficiently use power, because it is activated by the push input. Since a user can apply a push input to the rear input units, a front surface of the body is configured to sense a touch input. At least one of a touch key and a push key may not be disposed on the front surface of the body. Since the flexible display unit is disposed at space where a touch key and a push key should be arranged, the flexible display unit can have a larger screen.

The controller 180 can convert a covered state of the first part (A) by at least one of the second and third parts, into a non-covered state of the first part (A), based on a touch input applied to the rear input units. More specifically, the controller 180 can control a fixing member for maintaining a fixed state of the first part by at least one of the second and third parts, based on a touch input, thereby releasing the fixed state. In order to prevent release of the fixed state by a user's unintended touch input, a touch input for generating a release command is limited to a long touch input maintained for a reference time.

Referring to FIG. 19, the rear input unit may be formed in plurality in number. More specifically, the rear input unit may include a first rear input unit 123a corresponding to the second part, and a second rear input unit 123b corresponding to the third part. The controller 180 can select at least one fixed folded part to be released, based on a touch input applied to at least one of the first and second rear input units.

For instance, when a touch input is simultaneously applied to the first rear input unit 123a and the second rear input unit 123b in a closed state, the controller 180 can release a covered state of the first part by the second and third parts, the covered state fixed by the fixing member. As another example, when a touch input is applied to the first rear input unit 123a in a closed state, the controller 180 releases a covered state of the first part by the second part, but maintains a covered state of the first part by the third part. Thus, the body may be converted into a first open state from the closed state. As still another example, when a touch input is applied to the second rear input unit 123b in a closed state, the controller 180 maintains a covered state of the first part by the second part, but releases a covered state of the first part by the third part. Thus, the body may be converted into a second open state from the closed state.

The rear input units may further include a fingerprint scanner disposed to be overlapped with the touch sensor, and configured to recognize a fingerprint of a finger contacting to the rear input units. In this instance, when a fingerprint of a finger which has applied a touch input to the touch sensor is recognized as a user's pre-stored fingerprint by the fingerprint scanner, the controller 180 can control the fixing member so that a fixed state of at least one of the second and third parts can be released. That is, since a fixed state (fixed folded state) is released only when a recognized fingerprint corresponds to a user's pre-stored fingerprint, security of the portable electronic device can be enhanced.

When a recognized fingerprint matches a user's pre-stored fingerprint, the controller 180 can output notification information informing that a user authentication has succeeded, in at least one of visual, tactile and audible manners. That is, the controller 180 can output an alarm sound, generate a vibration, or turn on the optical output unit 154 (lamp) in various manners. The various manners mean that a lamp color, a flickering period, a brightness, etc. are implemented in various manners.

Further, when a recognized fingerprint does not match a user's pre-stored fingerprint, the controller 180 can output notification information informing that a user authentication has failed. For instance, the controller 180 can flicker a blue lamp at least once if a user authentication has succeeded, and may flicker a red lamp plural times if a user authentication has failed.

When a recognized fingerprint matches a user's pre-stored fingerprint, the controller 180 can release a locked state of the portable electronic device. That is, upon completion of a user authentication, the controller may release a fixed state so that a covered state of the first part by at least one of the second and third parts can be converted into a non-covered state, and may release a locked state. Thus, a user can release a fixed state by a single touch input, and can immediately use the portable electronic device without inputting a password for releasing a locked state.

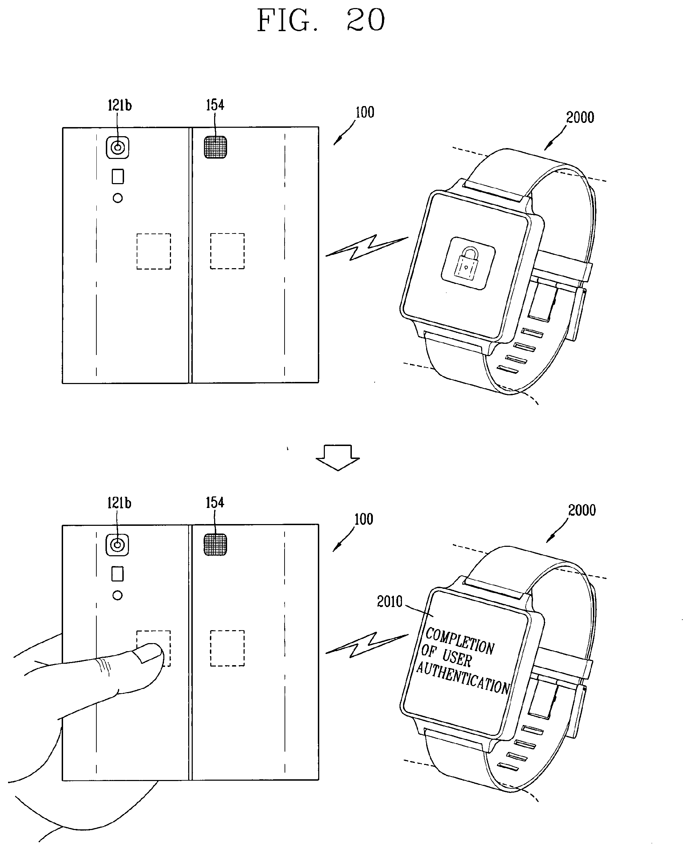

FIG. 20 is a conceptual view illustrating an example of a portable electronic device configured to control an external terminal when a user authentication has succeeded. As aforementioned, the rear input units may further include a fingerprint scanner. The controller 180 can perform a user authentication by recognizing a fingerprint of a finger which has touched the fingerprint scanner.

If there is another mobile terminal wirelessly connected to the portable electronic device within a predetermined distance, the controller 180 can transmit a locked state releasing command by a user authentication, to said another mobile terminal. That is, if a user performs his or her own authentication once using the portable electronic device, a user authentication with respect to said another mobile terminal positioned within a predetermined distance can be also performed.

For instance, as shown in FIG. 20, when the portable electronic device 100 is wirelessly connected to a watch-type mobile terminal 2000, a touch input may be applied to the rear input units of the portable electronic device 100. In this instance, the controller 180 recognizes a fingerprint of a finger which has applied the touch input. If the recognized fingerprint matches a user's pre-stored fingerprint, the controller 180 can transmit a locked state releasing command for releasing a locked state, to the watch-type mobile terminal 2000.

The watch-type mobile terminal 2000 may release a locked state in response to the locked state releasing command, and may output notification information informing that the locked state has been released, in at least one of visual, tactile and audible manners. The watch-type mobile terminal 2000 may display a home screen, or an execution screen of a recently-executed application on a display unit 2010, so that a user can immediately use the screen.

In the portable electronic device of the present invention, a touch sensor for sensing a touch input may be disposed not only on a front surface, but also on a rear surface. A method for releasing a locked state of the portable electronic device using a plurality of touch inputs applied to the rear surface will be explained in more detail with reference to the attached drawings.

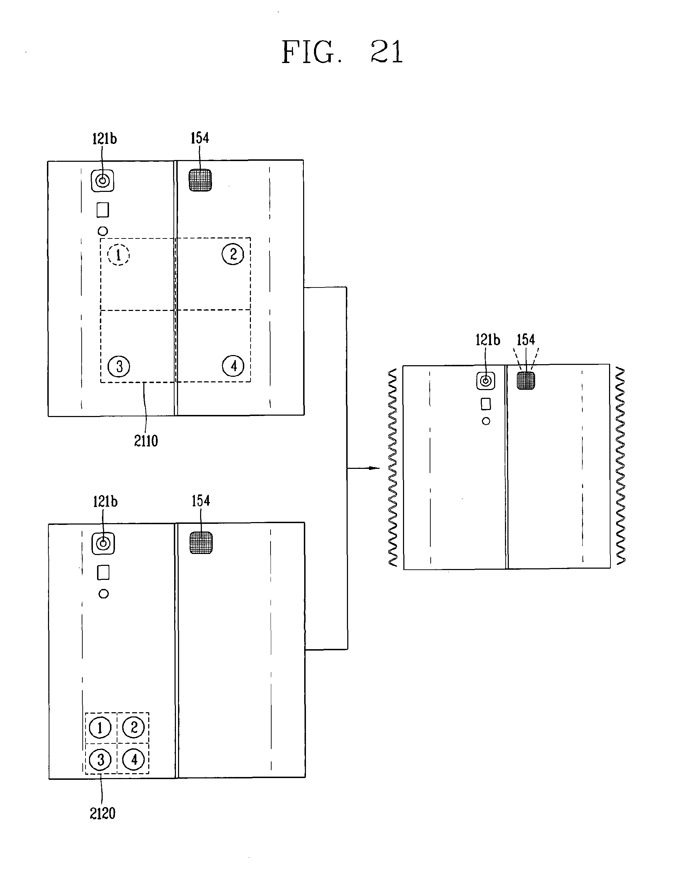

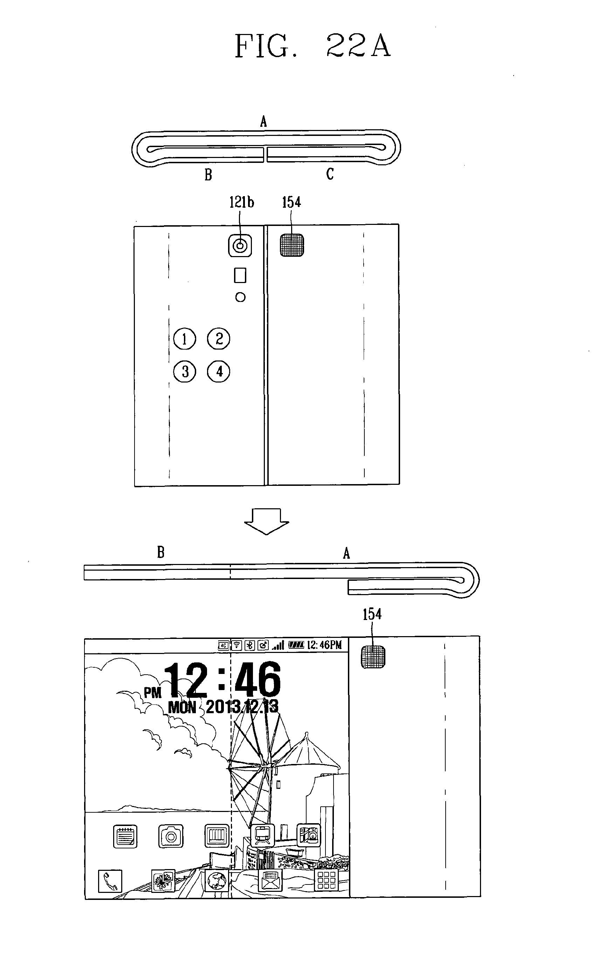

FIG. 21 is a conceptual view illustrating a method for releasing a locked state, in response to a plurality of touch inputs applied to the rear surface of the body in a preset pattern. FIGS. 22A to 22C are conceptual views illustrating a method for controlling output information according to a state conversion of the flexible display unit, when a locked state is released by a plurality of touch inputs.

Referring to FIG. 21, each of touch inputs are illustrated in a circular figure, for convenience. The number in the circular figure indicates order that a touch input has been applied, and a position of the circular figure corresponds to a position where a touch input has been applied. That is, FIG. 21 illustrates that touch inputs have been applied to positions where the circular figure have been displayed, in order of ①→②→③→④.

FIG. 21 illustrates a closed state of the portable electronic device, i.e., when the second and third parts are folded on the first part. As aforementioned, upon detection of a state conversion into a closed state, the controller 180 can execute a locked state, and may convert an activated state of the flexible display unit (an 'ON' state of a lamp), into a deactivated state (an 'OFF' state of the lamp).

The locked state means when reception of a control command input by a user is restricted, which can be released only when a password set by a specific person is input. If the flexible display unit 151 is activated under such locked state, a lock screen configured to input a password is displayed.

In the portable electronic device of the present invention, a touch sensor for sensing a touch input may be disposed not only on a front surface, but also on a rear surface. A locked state may be released by a plurality of touch inputs applied to the rear surface. More specifically, the controller 180 can sense a plurality of touch inputs knocking-on the portable electronic device, by the touch sensor disposed on the rear surface in a closed state. And the controller 180 can release a locked state, activate the flexible display unit 151, and display preset screen information, according to whether the sensed touch inputs match a preset pattern or not.

The preset pattern means a pattern set by a user as a password for releasing a locked state, which means a pattern defined by sequentially connecting touch points of a plurality of touch inputs to one another. For instance, a pattern, where touch inputs sequentially applied four times form vertexes of a capital letter "Z", may be set as a password for releasing a locked state.

The controller 180 can set a virtual space for receiving a plurality of touch inputs. More specifically, the controller 180 can set portions as a virtual space for receiving a plurality of touch inputs. The portions are positioned on the rear surface when the second and third parts do not cover the first part, but are positioned on the front surface when the second and third parts cover the first part. Alternatively, the controller 180 can set a portion as a virtual space for receiving a plurality of touch inputs. The portion indicates an entire or partial region of an area where the rear touch sensor has been disposed. The controller 180 can divide the virtual space into virtual regions, based on a plurality of touch inputs applied to the virtual space.

When a plurality of touch inputs are sequentially applied to at least one region among the virtual regions in preset order and in the preset pattern, the controller 180 can release a locked state, and convert a deactivated state of the flexible display unit 151 (i.e. an 'OFF' state of a lamp), into an activated state (an 'ON' state of the lamp).

At least one of a position and a size of the virtual regions may be variable according to points where a plurality of touch inputs are applied. For instance, as shown in FIG. 21, at least one of a position and a size of virtual regions 2110 and 2120 may be variable, based on a plurality of sensed touch inputs. The controller 180 can release a locked state regardless of a size and a position of the virtual regions, only if the plurality of touch inputs match a preset pattern.

In the portable electronic device of the present invention, the rear touch sensor disposed on the rear surface may be activated at different periods, according to a folded state of the body. For instance, in a third open state where the second and third parts do not cover the first part, the rear touch sensor may be deactivated. The reason is because a touch input can be sensed by a front touch sensor in the third open state. As another example, in a closed state where the second and third parts cover the first part, the rear touch sensor may be activated at preset periods. The reason is in order to sense touch inputs for releasing a locked state, using the rear touch sensor in the closed state. Thus, power consumption by the rear touch sensor can be reduced.

If a state conversion of the flexible display unit 151 is sensed within a predetermined time after a plurality of touch inputs matching a preset pattern have been sensed, the controller 180 can display preset screen information on a partial or entire region of the flexible display unit 151. The preset screen may be a home screen, or an execution screen of a recently-executed application. However, if a state conversion of the flexible display unit 151 is not sensed within a predetermined time, the controller 180 can re-execute a locked state.

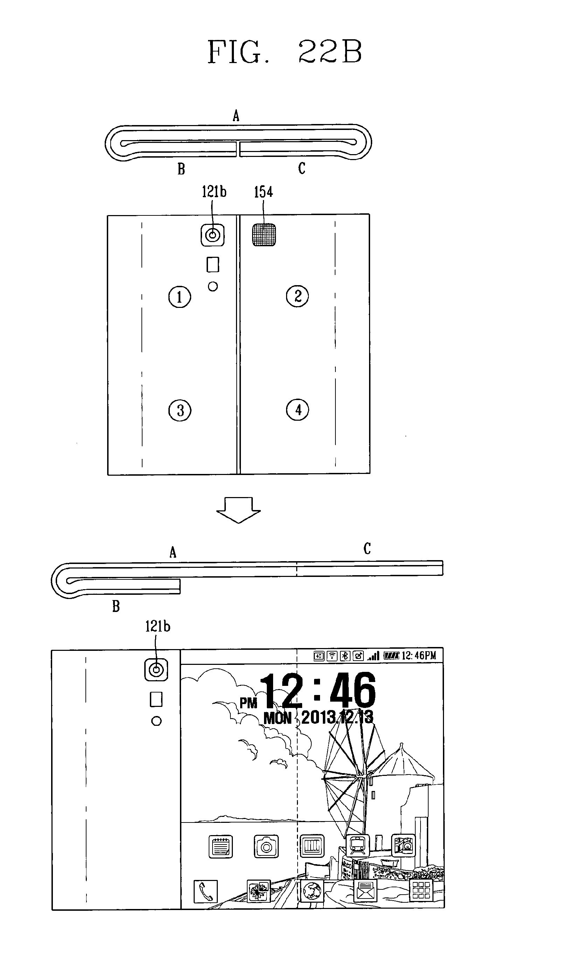

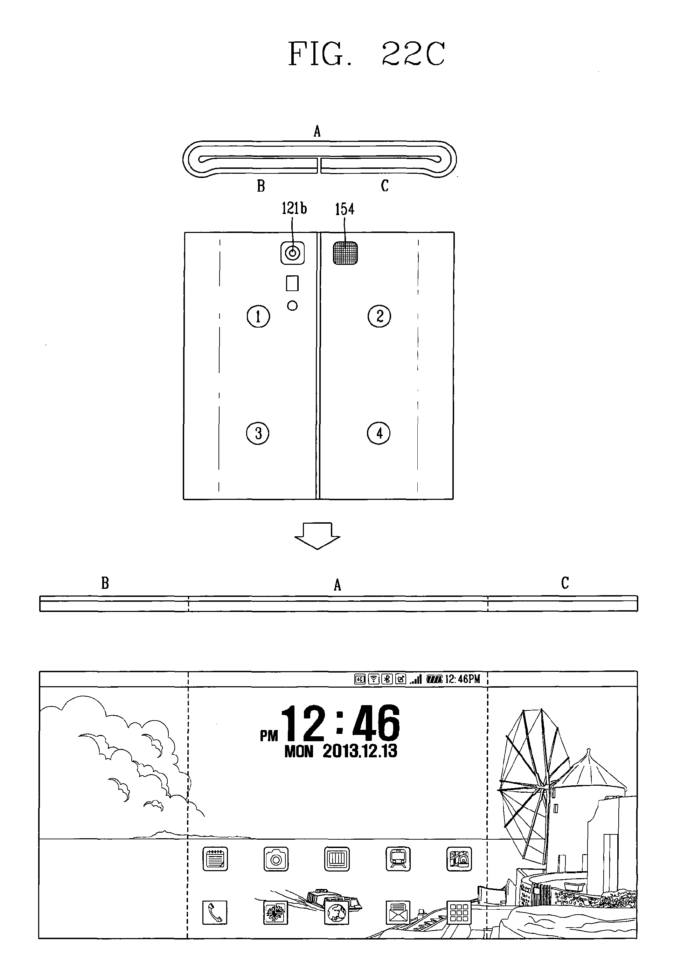

A partial or entire region of the flexible display unit 151, where preset screen information is to be displayed, is variable according to a sensed state conversion. For instance, as shown in FIG. 22A, if a closed state is converted into a first open state within a predetermined time, after a plurality of touch inputs matching a preset pattern have been sensed, the controller 180 can display preset screen information, on the second part (B) and a region of the first part (A) covered by the second part (B). As another example, as shown in FIG. 22B, if a closed state is converted into a second open state, the controller 180 can display preset screen information, on the third part (C) and a region of the first part (A) covered by the third part (C). As still another example, as shown in FIG. 22C, if a closed state is converted into a third open state, the controller 180 can display preset screen information, on an entire region of the flexible display unit 151.

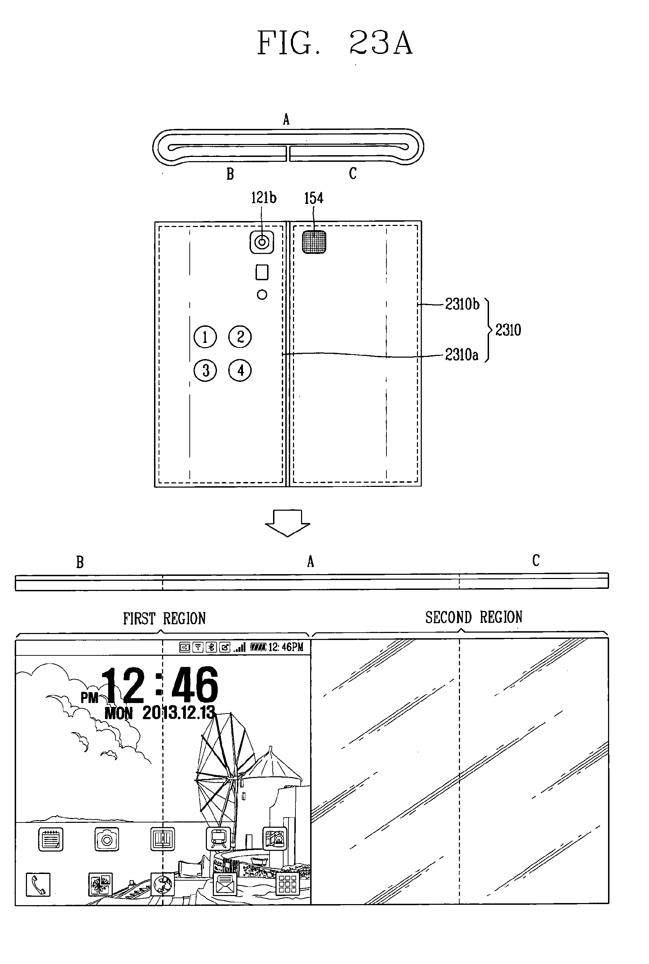

FIGS. 23A to 23C are conceptual views illustrating a method for controlling output information according to a sensed region of a plurality of touch inputs, when a locked state is released by the plurality of touch inputs. Referring to FIG. 23A, a plurality of touch inputs matching a preset pattern may be sensed by the rear touch sensor. The controller 180 can set virtual regions based on the plurality of touch inputs, and may set one or more regions of the flexible display unit 151 to be activated, based on the virtual regions.

In a closed state, the controller 180 can set another surface of the second part as a left region 2310a and may set another surface of the third part as a right region 2310b. In this instance, the virtual regions may be set to at least one of the left region 2310a and the right region 2310b. If the virtual regions are set to the left region 2310a, the controller 180 can activate a first region among an entire region of the flexible display unit 151. The first region includes the second part, and a portion of the first part covered by the second part. In addition, the controller 180 can control a region rather than the first region, to maintain a deactivated state. In this instance, a preset screen is displayed only on the first region.

If the virtual regions are set to the right region 2310b, the controller 180 can activate a second region among an entire region of the flexible display unit 151. The second region includes the third part, and a portion of the first part covered by the third part. In addition, the controller 180 can control a region rather than the second region, to maintain a deactivated state. In this instance, a preset screen is displayed only on the second region.

If the virtual regions are set to an entire region 2310 including the left region 2310a and the right region 2310b, the controller 180 can activate an entire region of the flexible display unit 151, and may display a preset screen on the entire region. For instance, as shown in FIG. 23A, if a plurality of touch inputs matching a preset pattern are sensed on the left region 2310a, virtual spaces by the plurality of touch inputs are generated only on the left region 2310a. Then, if a closed state is converted into a third open state within a predetermined time, based on a time point when the plurality of touch inputs have been sensed, the controller 180 activates the first region, and displays a preset screen on the first screen. The second region maintains a deactivated state.

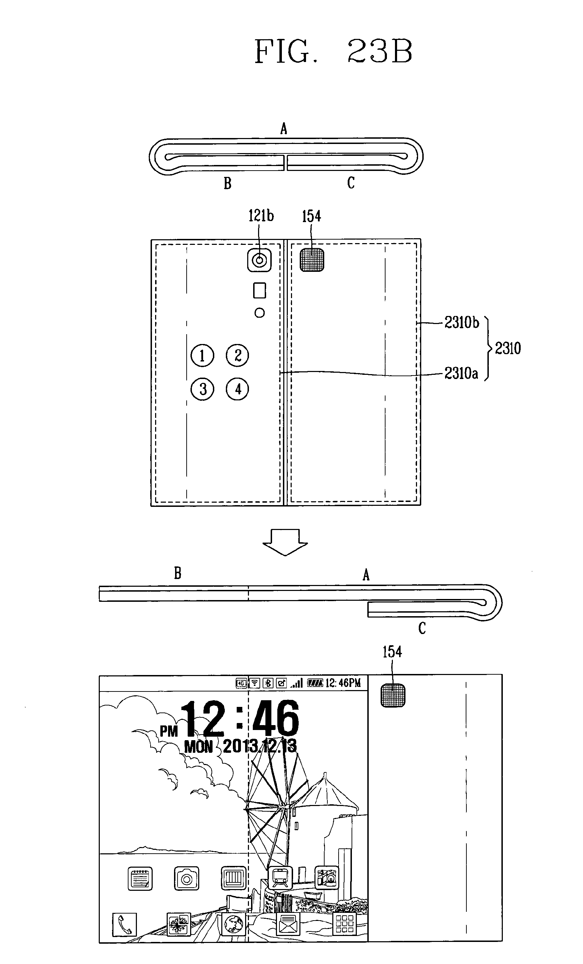

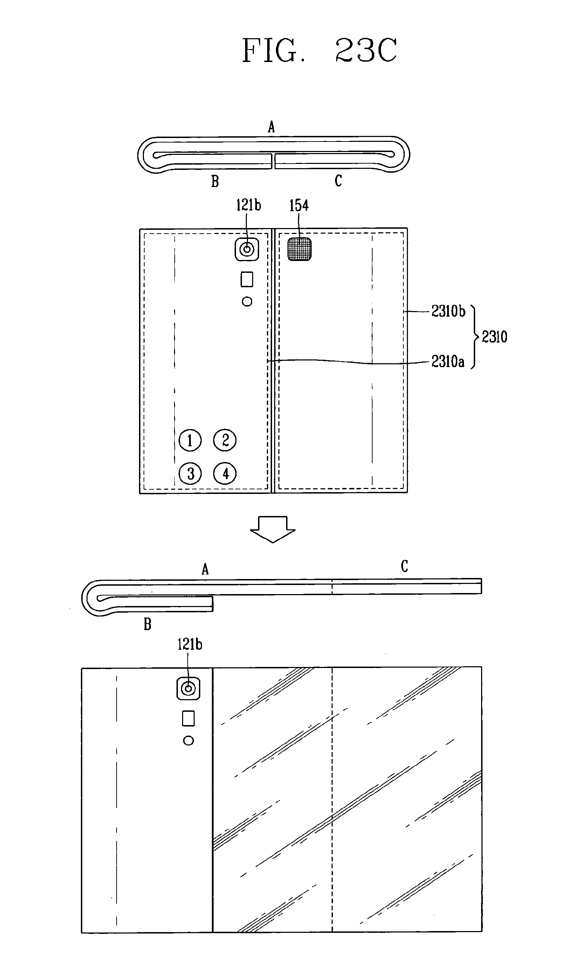

As another example, as shown in FIG. 23B, if a plurality of touch inputs matching a preset pattern are sensed on only the left region, and if a closed state is converted into a first open state within a predetermined time, the controller 180 activates the first region, and displays a preset screen on the first region. As still another example, as shown in FIG. 23C, if a plurality of touch inputs matching a preset pattern are sensed on only the left region, and if a closed state is converted into a second open state within a predetermined time, the controller 180 maintains an entire region of the flexible display unit 151 as a deactivated state.

If the flexible display unit 151 is partially activated, a user may activate a predetermined region of a deactivated part, by applying a gesture to consecutively knock on the predetermined region a plurality of times within a preset time. That is, if a plurality of touch inputs are consecutively applied from a predetermined region of a deactivated part, within a predetermined time, the controller 180 can activate the deactivated part, and may output screen information which was being output in a reconfigured manner.

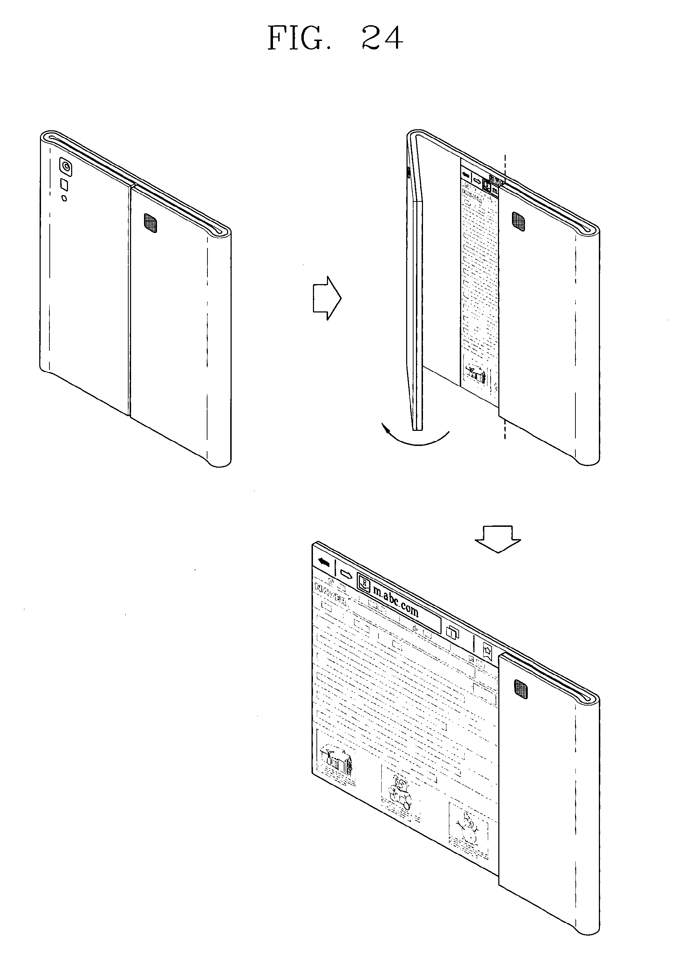

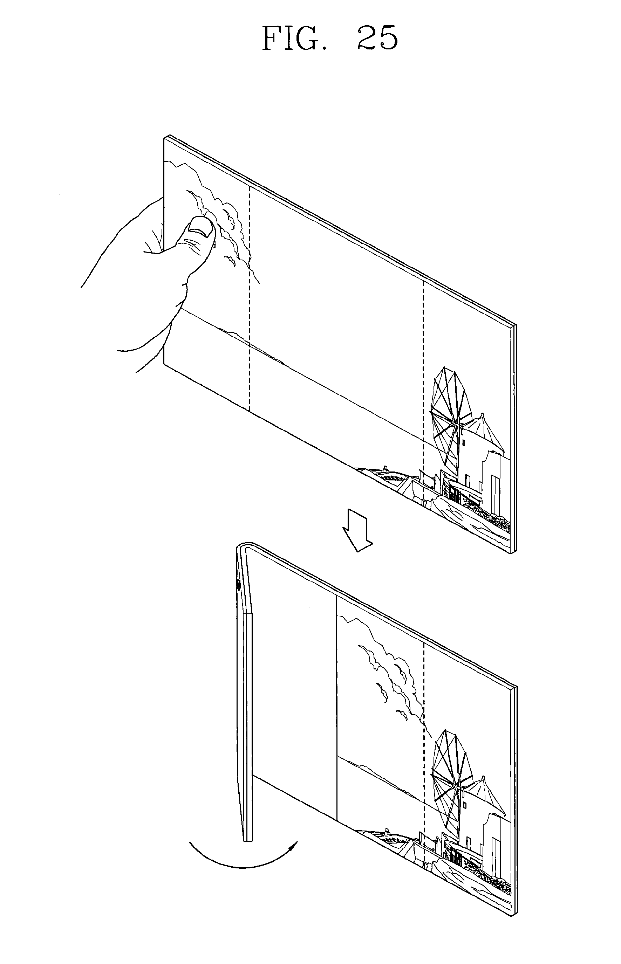

FIGS. 24 and 25 are conceptual views illustrating an embodiment where a region to display screen information is changed according to a state conversion of the flexible display unit. The controller 180 can real time sense a folded state of the body, using the sensing unit 140. The controller 180 can update a region of the flexible display unit 151 where screen information is output, according to the sensed folded state of the body. More specifically, the controller 180 calculates a user's viewing angle based on a folded state of the body, and outputs screen information to a region where a user can view the screen information, based on the calculated viewing angle.

For instance, as shown in FIG. 24, if the body has a state conversion from a closed state into a first open state, a region where screen information is output may be widened toward a left region, from a line on the first part where a left end of the body is folded.

As another example, as shown in FIG. 25, if the body has a state conversion from a third open state to a second open state, a region where screen information is output may be narrowed toward a right region, from the left end of the body. Since a region to which screen information is not output is deactivated, the consumption amount of the battery can be reduced according to a state of the flexible display unit 151.

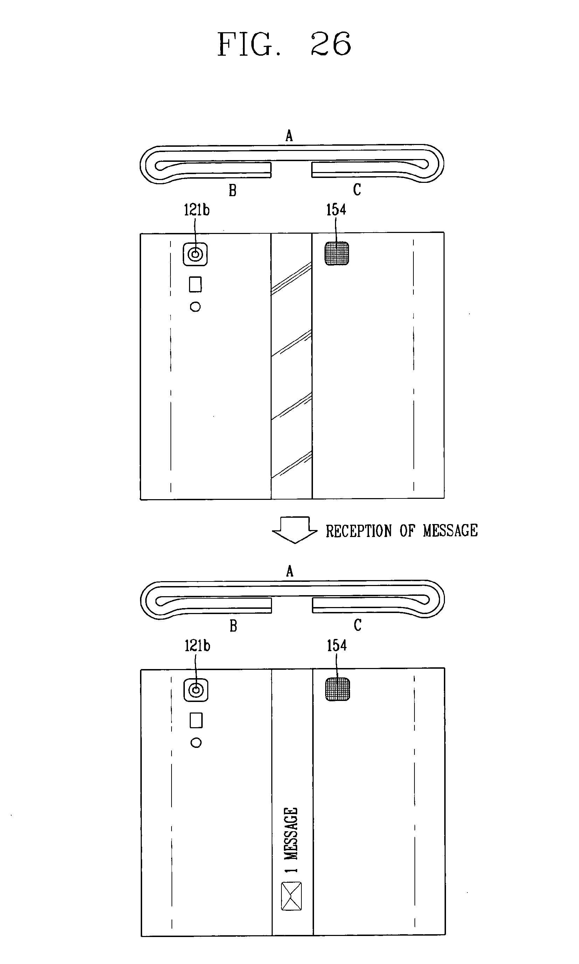

FIG. 26 is a conceptual view illustrating a method for informing occurrence of an event using a notification display portion in a closed state. In the portable electronic device according to an embodiment of the present invention, the flexible display unit 151 may be divided into first to third parts, when bending occurs based on first and second bending areas. The first part may be provided with a portion covered by the second part, a portion covered by the third part, and a notification display portion (A3) not covered by the second and third parts.

The notification display portion (A3) is formed to be exposed to the outside, and is configured to output screen information even in a closed state. More specifically, if an event occurs from at least one application, the controller 180 activates the notification display portion (A3), and displays screen information indicating the event on the notification display portion (A3).

The application includes a widget, a home launcher, etc., and means all types of programs which can be driven in the portable electronic device. Thus, the application may be a program for performing web browsing, play of moving images, transception (transmission/reception) of messages, schedule management, and update of an application. Occurrence of an event may correspond to a missed call, an application to be updated, an arrived message, charging, a power 'ON' or 'OFF' state of the portable electronic device, an LCD awake key, an alarm, an incoming call, a missed notification, etc.

As another example, when specific information is received through the wireless communication unit of the portable electronic device, it may be determined that an event has occurred from an application related to the specific information. The controller 180 senses the occurrence of the event. As still another example, when a user's input item is included in a schedule management, it may be determined that an event has occurred from a schedule management application when the current date corresponds to the input item.

If an event occurs in a closed state, the controller 180 outputs, to the notification display portion (A3), screen information indicating the occurrence of the event. The screen information may be variable according to a type of an event-occurred application. The controller 180 senses a touch input applied to the screen information, and outputs information related to the event to the notification display portion (A3), in response to the touch input. For instance, the event may be reception of a message, and the information may be contents of the message. As another example, the event may be notification of a schedule set by a schedule management, and the information may be detailed information on a set schedule, etc. As still another example, the event may be occurrence of an application to be updated, and the information may be detailed information on an application to be updated, etc.

The notification display portion (A3) may be provided with a touch sensor for sensing a touch input with respect to the screen information. The notification display portion (A3) outputs visual information such as GUI which is implemented in the form of images, texts, icons, etc. The notification display portion (A3) may be converted into a deactivated state, if a predetermined time lapses or if a specific control command is input.

In this instance, a different control may be performed according to a type of a touch input. For instance, if a short-touch is applied to screen information, notification contents may be updated. Further, if a long-touch is applied to the screen information, the notification display portion (A3) may be deactivated. In this embodiment, if a drag input is applied to the screen information, the controller 180 waits for a state conversion of the flexible display unit 151 so as to display information related to an event.

More specifically, if a drag input is applied to the screen information, the controller 180 waits for a state conversion from a closed state to one of first to third open states. If such state conversion is sensed within a predetermined time, the controller 180 displays information related to an event, on a partial or entire region of the flexible display unit 151. For instance, if conversion of a closed state into a first open state is sensed within a predetermined time, the controller 180 can display information related to an event, on at least one of the second part, a portion of the first part covered by the second part, and the notification display portion. Further, if a state conversion from a closed state to one of first to third open states is not sensed within a predetermined time, the controller 180 deactivates the notification display portion (A3).

As the controller controls an operation to inform an event, to output detailed information, etc., using the notification display portion even in a closed state, a user can be provided with information regardless of a disposed status of the portable electronic device. Since at least part of the flexible display unit serves as the notification display portion according to a status of the portable electronic device, a new type of user's convenience can be provided.

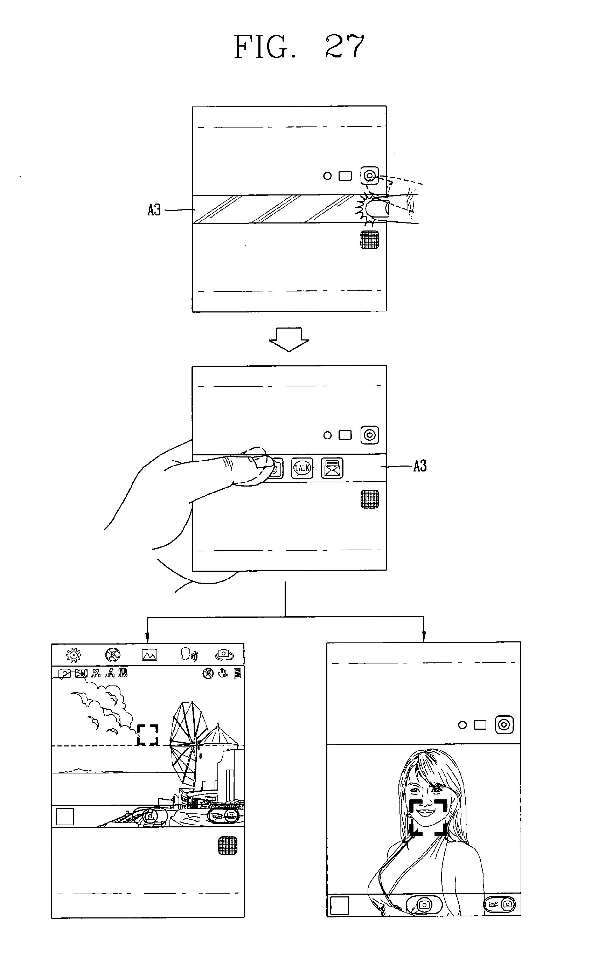

FIG. 27 is a conceptual view illustrating a method for executing a specific function, based on a user input applied to a notification display portion. Referring to FIG. 27, an entire region of the flexible display unit 151, which includes the notification display portion (A3) in a closed state, may maintain a deactivated state. The notification display portion (A3) may be configured to sense a touch input applied in a closed state.

For efficient usage of power, the controller 180 can control a touch sensor so that a touch input can be sensed only by the notification display portion (A3) in a closed state. Further, the controller 180 can control the touch sensor so as to sense a touch applied to the notification display portion (A3), by being activated at preset intervals in a closed state.

Upon detection of a first touch input and a second touch input consecutively knocking on a predetermined region of the deactivated notification display portion (A3) in a closed state, the controller 180 can activate the notification display portion (A3), and may display icons corresponding to preset applications. In this instance, the controller 180 can control the flexible display unit 151 so that the rest region rather than the notification display portion (A3) can maintain a deactivated state. The preset applications may be applications selected by a user, or recently-executed applications.

Upon detection of a touch input applied to at least one of icons displayed on the notification display portion (A3), the controller 180 can execute an application corresponding to the at least one icon, in response to the touch input. When an application is executed in a closed state, information on the executed application may be displayed on the notification display portion (A3).

After an application is executed in a closed state, a state conversion of the flexible display unit 151 may be sensed. In response to the state conversion, the controller 180 can display an execution screen of the application, on a partial or entire region of the flexible display unit 151 including the notification display portion.

The controller 180 can perform other operation related to an application executed according to a state conversion. For instance, as shown in FIG. 27, if a closed state is converted into a first open state when a camera-related application has been performed, a landscape capturing mode is executed. Further, if a closed state is converted into a second open state, a self capturing mode is executed. In addition, if a closed state is converted into a first open state when a mail-related application has been performed, a screen including received mails may be displayed. If a closed state is converted into a second open state when a mail-related application has been performed, a screen for writing a mail may be displayed.

Under such configuration, a user can execute a specific application in a closed state, and can control the portable electronic device so that a different operation can be performed in a different state through a state conversion. Thus, a user's convenience can be enhanced.

The portable electronic device and the control method according to an embodiment of the present invention can have the following effects. Firstly, according to at least one of preferred embodiments of the present invention, since information output to the flexible display unit is controlled based on a state conversion of the flexible display unit of the portable electronic device, a new type of user's convenience can be provided.

Secondly, according to at least one of preferred embodiments of the present invention, since a rear camera formed to be toward a rear surface is configured to be toward a rear surface or a front surface by bending of the body, a capturing direction can be changed in a simple manner. Under such configuration, a capturing mode of the camera can be automatically changed according to a state conversion of the flexible display unit, and thus a user can be provided with a better capturing environment.

Thirdly, according to at least one of preferred embodiments of the present invention, since a bent state of at least part of the flexible display unit is maintained by the fixing member, a user can use the portable electronic device by increasing or decreasing an area of the flexible display unit exposed to the outside, according to a situation. That is, a user can maintain a flat state of the flexible display unit when viewing a film, etc., such that an area of the flexible display unit exposed to the outside is maximized. Further, a user can maintain a bent state of the flexible display unit when carrying the portable electronic device, such that an area of the flexible display unit exposed to the outside is minimized.

Fourthly, according to at least one of preferred embodiments of the present invention, a rear input unit disposed on a rear surface is configured to be toward a rear surface or a front surface by bending of the body, and a fixed bent (or folded) state can be released by the rear input unit. Thus, a bent state can be restored to the original state in a simple manner.

Fifthly, according to at least one of preferred embodiments of the present invention, since the rear input unit is disposed on a rear surface, a front display can have a larger screen. Further, under a structure that a push-type of sensing unit is disposed in front of a touch-type of sensing unit, the rear input unit can receive at least one of a touch-type of input and a push-type of input.

Sixthly, according to at least one of preferred embodiments of the present invention, since a user can change a type of screen information to be displayed based on a state conversion, a user-customized interface can be provided.

As aforementioned, in the portable electronic device according to an embodiment of the present invention, the flexible display unit can perform a state conversion in various manners, by a plurality of bending areas. Based on the state conversion of the flexible display unit, the portable electronic device can perform a different function or display a different execution screen.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A portable electronic device (100), comprising:
a wireless communication unit (110) configured to provide wireless communication;
a flexible display unit (151) including a first part; a second part rotatable based on a first boundary portion of the first part and configured to cover and not cover the first part, and a third part rotatable based on a second boundary portion of the first part and configured to cover and not cover the first part; and
a controller (180) configured to:
display information on the flexible display unit (151) based the second and third parts covering or not covering the first part.

2. The portable electronic device (100) of claim 1, wherein when a closed state where the second and third parts cover the first part is converted into a first open state where the second part does not cover the first part, the controller (180) is further configured to display a first execution screen on the flexible display unit (151), and
wherein when the closed state is converted into a second open state where the third part does not cover the first part, the controller (180) is further configured to display a second execution screen different from the first execution screen on the flexible display unit (151).

3. The portable electronic device (100) of claim 2, wherein the controller (180) is further configured to display the first execution screen on the second part with a portion of the first part covered by the second part, and
wherein the controller (180) is further configured to display the second execution screen on the third part with a portion of the first part covered by the third part.

4. The portable electronic device (100) of any one of claims 2 and 3, wherein the first execution screen includes one or more graphic objects formed to be executable in a locked state, and
wherein the second execution screen is a lock screen configured to receive a password for releasing the locked state.

5. The portable electronic device (100) of claim 2, wherein when the closed state is converted into a third open state where the second and third parts do not cover the first part, the controller (180) is further configured to display a lock screen or a home screen on the flexible display unit (151), the lock screen configured to receive a password for releasing a locked state.

6. The portable electronic device (100) of claim 5, wherein when the first open state or the second open state is converted into the third open state, the controller (180) is further configured to display the first and second execution screens on different regions of the flexible display unit (151).

7. The portable electronic device (100) of claim 1, wherein when one of the second and third parts covers the first part and another thereof does not cover the first part, the controller (180) is further configured to display first screen information on the flexible display unit (151), and
wherein when the state where the first screen information has been displayed is converted into when said one part does not cover the first part, the controller (180) is further configured to display second screen information including information related to the first screen information on the flexible display unit (151).

8. The portable electronic device (100) of claim 7, wherein when the first screen information is changed based on a user's touch input applied to a region where the first screen information has been displayed, the controller (180) is further configured to change the second screen information such that information corresponding to the changed first screen information is displayed.

9. The portable electronic device (100) of claim 7, wherein when a drag input is applied to the flexible display unit (151) from said one part to said another part, the controller (180) is further configured to terminate the display of the first and second screen information, and display screen information which has been displayed on said one part on an entire region of the flexible display unit (151).

10. The portable electronic device (100) of claim 7, wherein the different regions, on which the first and second screen information are displayed, are variable according to an amount of information related to the first screen information.

11. The portable electronic device (100) of claim 7, wherein the controller (180) is further configured to display first screen information on said another part with a portion of the first part covered by said another part, and
wherein the controller (180) is further configured to display second screen information on said one part with a portion of the first part covered by said one part.

12. The portable electronic device (100) of any one of claims 1 to 11, further comprising:
a body having one surface and another surface where the flexible display unit is disposed;
a fixing member disposed at the body, and configured to fix the second and third parts such that a closed state where the second and third parts cover the first part is maintained; and
a touch sensor disposed on at least one of one side and another side of said another surface, and configured to sense a touch input applied thereto,
wherein when the touch input applied to the touch sensor is maintained for a predetermined time, the controller (180) is further configured to control the fixing member based on the touch input such that at least one of the second and third parts is not fixed.

13. The portable electronic device (100) of claim 12, further comprising:
a fingerprint scanner disposed to be overlapped with the touch sensor, and configured to recognize a fingerprint of a finger contacting thereto,
wherein when a fingerprint of a finger which has applied a touch input to the touch sensor is recognized as a user's pre-stored fingerprint by the fingerprint scanner, the controller (180) is further configured to control the fixing member such that at least one of the second and third parts is not fixed.

14. The portable electronic device (100) of claim 12, wherein the controller (180) is further configured to sense a plurality of touch inputs applied to the touch sensor in a closed state, and
wherein when the sensed touch inputs match a preset pattern, the controller (180) is further configured to control the fixing member such that at least one of the second and third parts is not fixed.

15. The portable electronic device (100) of any one of claims 1 to 14, wherein the first part, the second part and the third part are configured to form a single planar surface.
